Europäisches Patentamt

European Patent Office

Office européen des brevets

(19)

(11) **EP 0 630 161 B1**

(12) **EUROPEAN PATENT SPECIFICATION**

(45) Date of publication and mention
of the grant of the patent:
**16.12.1998 Bulletin 1998/51**

(51) Int Cl.6: **H04N 9/83**, H04N 9/79

(21) Application number: **94109302.3**

(22) Date of filing: **16.06.1994**

(54) **Method and apparatus for recording/reproducing high-definition and normal picture signals**

Verfahren und Vorrichtung zur Aufzeichnung und Wiedergabe von Bildsignalen hoher und normaler Auflösung

Méthode et appareil d'enregistrement et de reproduction de signaux d'image du type haute définition et du type normal

(84) Designated Contracting States:
**DE FR GB**

(30) Priority: **17.06.1993 JP 171257/93**

(43) Date of publication of application:
**21.12.1994 Bulletin 1994/51**

(73) Proprietor: **VICTOR COMPANY OF JAPAN,
LIMITED
Kanagawa-ku Yokohama (JP)**

(72) Inventors:
• **Ichinoi, Yutaka
  Yokohama (JP)**
• **Turuta, Masahiko
  Yokohama (JP)**
• **Isobe, Yutaka
  Yokohama (JP)**
• **Yoshida, Mitsuhiro
  Kanagawa-ku, Yokohama (JP)**
• **Asai, Hiroshi
  Sagamihara-shi, Kanagawa-ken (JP)**

(74) Representative: **Manitz, Finsterwald & Partner
Robert-Koch-Strasse 1
80538 München (DE)**

(56) References cited:
EP-A- 0 287 316          EP-A- 0 404 383
EP-A- 0 540 348          US-A- 5 038 219
US-A- 5 050 010

• PATENT ABSTRACTS OF JAPAN vol. 16, no. 551
  (P-1453) 20 November 1992 & JP-A-04 205 856
  (HITACHI) 28 July 1992
• PATENT ABSTRACTS OF JAPAN vol. 16, no. 280
  (E-1221) 23 June 1992 & JP-A-04 068 980
  (TOSHIBA) 4 March 1992

**Description**

BACKGROUND OF THE INVENTION

1. FIELD OF THE INVENTION:

The present invention relates to picture signal recording method and apparatus for recording not only a high-definition picture signal but also a normal picture signal. Also, the present invention relates to a picture signal recording apparatus for recording a picture signal such as a normal picture signal or a high-definition picture signal by determining a recording mode in dependence on a type of the picture signal and a high-definition picture signal reproducing apparatus for reproducing the picture signal recorded with the high-definition picture signal recording apparatus by distinguishing the recording mode.

2-1. A first related art:

A so-called UNIHI (a registered trademark) type of high-vision video tape recorder (VTR) has been well-known as a magnetic recording/reproducing apparatus for recording/reproducing a high-definition picture signal which has a wider frequency band than that of a normal picture signal conventionally utilized and has a larger number of scanning lines than that of the normal picture. In the high-vision VTR, a pair of color difference signals belonging to a high-definition picture signal are respectively converted in order of scanning lines to produce a plurality color difference line signals, and the color difference line signals are respectively time-compressed to produce a plurality of compressed color difference line signals. In this case, because the number of scanning lines in the high-definition picture signal is too high to record the color difference line signals, the color difference line signals are thinned out on every other scanning line to reduce the number of color difference line signals time-compressed. Also, a luminance signal belonging to a high-definition picture signal is time-compressed to produce a compressed luminance signal. Thereafter, the compressed color difference line signals and the compressed luminance signal are unified according to a time-division multiplexing to produce a time compressed integration (TCI) signal, and the TCI signal is recorded and reproduced to/from an information recording medium such as a magnetic tape.

The reason that the color difference line signals are thinned out on every other scanning line is that a quality of picture image displayed in a displaying unit according to the high-definition signal reproduced is not degraded so much.

2-2. Problems of the first related art to be solved by the present invention:

However, In cases where not only a high-definition picture signal but also a normal picture signal conventionally utilized are recorded and reproduced to/from an information recording medium in the high-vision VTR, the normal picture signal is also thinned out on every other scanning line. As a result, there is a drawback that a quality of picture image displayed in a displaying unit according to the normal picture signal reproduced is considerably degraded because the number of scanning lines in the normal picture signal is low.

2-3. A second related art:

In a conventional picture signal magnetic recording and reproducing apparatus, there are two types of recording mode in cases where a picture signal is recorded and reproduced according to a S-VHS (a registered trademark) method. One of the recording modes is a normal recording mode in which a picture signal is recorded to a normal recording medium within a normal frequency band. Also, the other recording mode is a high-performance recording mode in which a picture signal is recorded to a high-performance recording medium within a wider frequency band than the normal frequency band. Therefore, a VHS cassette in which the normal recording medium is held and a S-VHS cassette in which the high-performance recording medium is held are utilized.

The recording mode is determined in dependence on a type of recording medium loaded into the conventional picture signal magnetic recording and reproducing apparatus.

Therefore, the applicant has proposed a picture signal magnetic recording and reproducing apparatus in which not only a normal picture signal such as a national television system committee (NTSC) type of signal or a phase alternation by line (PAL) type of signal but also a high-definition picture signal such as a high-vision signal (hereinafter, called an HD picture signal) or an extended definition television signal (hereinafter, called an EDTV signal) are recorded and reproduced. In the picture signal magnetic recording and reproducing apparatus proposed by the applicant, there are various recording modes such as a normal recording/reproducing mode conventionally utilized, a first recording mode in which a high-definition picture signal is recorded to a super high-performance recording medium such as a metal tape at a standard speed, a second recording mode in which a normal picture signal is recorded to the super high-performance recording medium at a low speed equal to 1/3 of the standard speed and a third recording mode in which two normal picture signals are simultaneously recorded to the super high-performance recording medium at the standard speed.

2-4. Problems of the second related art to be solved by the present invention:

However, in the conventional picture signal magnetic recording and reproducing apparatus, the normal picture signal is limitedly processed, and the recording mode is determined according to a type of recording medium. Therefore, in cases where not only the normal picture signal but also a high-definition picture signal having a wide frequency band are processed in the conventional picture signal magnetic recording and reproducing apparatus, there is a drawback that the recording mode cannot be properly determined in the conventional picture signal magnetic recording and reproducing apparatus.

## SUMMARY OF THE INVENTION

A first object of the present invention is to provide picture signal recording method and apparatus in which not only a high-definition picture signal but also a normal picture signal are recorded without degrading a quality of picture image displayed according to the high-definition picture signal or the normal picture signal reproduced.

A second object of the present invention is to provide a picture signal recording apparatus in which a picture signal such as a normal picture signal or a high-definition picture signal is recorded according to a recording mode which is determined in dependence on a type of the picture signal to match the picture signal to a performance of a recording medium. Also, the fourth object is to provide a high-definition picture signal reproducing apparatus in which a picture signal is reproduced by distinguishing the recording mode determined in the high-definition picture signal recording apparatus.

The first object is achieved by the provision of a picture signal recording method for recording a normal picture signal and a high-definition picture signal in which the number of scanning lines is higher than that in the normal picture signal, comprising the steps of:

time-compressing a plurality of luminance line signals of a luminance signal pertaining to a normal picture signal on every scanning line, each of the luminance line signals corresponding to a scanning line;

time-compressing a plurality of first color difference line signals of a first color difference signal pertaining to the normal picture signal on every scanning line, each of the first color difference line signals corresponding to a scanning line;

time-compressing a plurality of second color difference line signals of a second color difference signal pertaining to the normal picture signal, each of the second color difference line signals corresponding to a scanning line;

multiplexing in time division the luminance line signals time-compressed, the first color difference line signals time-compressed and the second color difference line signals time-compressed on every scanning line to produce a TCI signal pertaining to the normal picture signal;

recording the TCI signal pertaining to the normal picture on a recording medium;

deleting either a first color difference line signal of a first color difference signal pertaining to a high-definition picture signal or a second color difference line signal of a second color difference signal pertaining to the high-definition picture signal on every scanning line to produce a plurality of thinned first color difference line signals corresponding to even-numbered scanning lines and a plurality of thinned second color difference line signals corresponding to odd-numbered scanning lines from the first color difference signal pertaining to the high-definition picture signal and the second color difference signal pertaining to the high-definition picture signal, the first color difference signal being composed of a plurality of first color difference line signals which each correspond to a scanning line, and the second color difference signal being composed of a plurality of second color difference line signals which each correspond to a scanning line;

time-compressing the thinned first color difference line signals and the thinned second color difference line signals;

time-compressing a plurality of luminance line signals of a luminance signal pertaining to the high-definition picture signal, each of the luminance line signals corresponding to a scanning line, and the luminance line signals being classified into a first group of luminance line signals corresponding to the even-numbered scanning lines and a second group of luminance line signals corresponding to the odd-numbered scanning lines;

multiplexing in time division the first group of luminance line signals time-compressed and the thinned first color difference line signals time-compressed to produce a first TCI signal pertaining to the high-definition picture signal corresponding to the even-numbered scanning lines;

multiplexing in time division the second group of luminance line signals time-compressed and the thinned second color difference line signals time-compressed to produce a second TCI signal pertaining to the high-definition picture signal corresponding to the odd-numbered scanning lines; and
recording the first TCI signal and the second TCI signal on the recording medium.

In the above steps, the number of scanning lines in the high-definition picture signal is higher than that in the normal picture signal. Therefore, even though line signals (or line components) of the high-definition picture signal are intermittently deleted, a quality of picture image obtained by reproducing the high-definition picture signal intermittently deleted is not degraded so much.

In the present invention, in cases where a normal picture signal is recorded, a luminance signal and a pair of first and second color difference signals pertaining to the normal picture signal are time-compressed without intermittently deleting line signals of the luminance and color difference signals. Thereafter, the luminance and color difference signals time-compressed are multiplexed in time division and are recorded on a recording medium.

Accordingly, a quality of picture image displayed according to the normal picture signal reproduced is not degraded.

In contrast, in cases where a high-definition picture signal is recorded, either a first color difference line signal of a first color difference signal pertaining to the high-definition picture signal or a second color difference line signal of a second color difference signal pertaining to the high-definition picture signal is deleted on every scanning line. In normal, first color difference line signals corresponding to even-numbered scanning lines are deleted, and second color difference line signals corresponding to odd-numbered scanning lines are deleted. Therefore, the first and second color difference signals pertaining to the high-definition picture signal are respectively thinned out. Thereafter, a plurality of luminance line signals of a luminance signal pertaining to the high-definition picture signal are time-compressed, and the first and second color difference line signals of the first and second color difference signals thinned out are time-compressed. Thereafter, the luminance and color difference line signals time-compressed are multiplexed in time division and are recorded on the same recording medium.

Accordingly, even though the high-definition picture signal ranging in a wider frequency band than that in the normal picture signal is input to a picture signal recording apparatus, the high-definition picture signal can be recorded in the same manner as the normal picture signal because the first and second color difference signals pertaining to the high-definition picture signal are thinned out. Also, a quality of picture image obtained by reproducing the high-definition picture signal thinned out is not degraded so much.

It is preferred that a first ratio in time compression degree of the first or second color difference line signals to the luminance line signals pertaining to the normal picture signal be larger than a second ratio in time compression degree of the thinned first or second color difference line signals to the luminance line signals pertaining to the high-definition picture signal.

In the above configuration, a frequency band ratio of the first or second color difference signal to the luminance signal is set to an appropriate ratio for domestic use in comparison that the first ratio is the same as the second ratio. Accordingly, a high quality of picture signal can be recorded on the recording medium regardless of whether the high-definition picture signal or the normal picture signal is input to a picture signal recording apparatus.

The first object is also achieved by the provision of a picture signal recording apparatus for recording a normal picture signal and a high-definition picture signal in which the number of scanning lines is higher than that in the normal picture signal, comprising:

selecting means for selecting either the high-definition picture signal or the normal picture signal, the high-definition picture signal and the normal picture signal being respectively composed of a luminance signal, a first color difference signal and a second color difference signal;

recording processing means for time-compressing a plurality of luminance line signals of the luminance signal pertaining to the normal picture signal on every scanning line in cases where the normal picture signal is selected in the selecting means, time-compressing a plurality of first color difference line signals of the first color difference signal pertaining to the normal picture signal on every scanning line in cases where the normal picture signal is selected in the selecting means. time-compressing a plurality of second color difference line signals of the second color difference signal pertaining to the normal picture signal in cases where the normal picture signal is selected in the selecting means, multiplexing in time division the luminance line signals time-compressed, the first color difference line signals time-compressed and the second color difference line signals time-compressed on every scanning line to produce a TCI signal pertaining to the normal picture signal, deleting either a first color difference line signal of the first color difference signal pertaining to the high-definition picture signal or a second color difference line signal of the second color difference signal pertaining to the high-definition picture signal on every scanning line to produce a plurality of thinned first color difference line signals corresponding to even-numbered scanning lines and a plurality of thinned second color difference line signals corresponding to odd-numbered scanning lines from a plurality of first color difference line signals of the first color difference signal pertaining to the high-definition picture signal and a plurality of second color difference line signals of the second color difference signal pertaining to the high-definition picture signal in cases where the high-definition picture signal is selected in the selecting means, time-compressing the thinned first color difference line signals and the thinned second color difference line signals to produce a plurality of time-compressed first color difference line signals corresponding to the even-numbered scanning lines and a plurality of time-compressed second color difference line signals corresponding to the odd-numbered scanning lines, time-compressing a plurality of luminance line signals of the luminance signal pertaining to the high-definition picture signal to produce a plurality of time-compressed luminance line signals in cases where the high-definition picture signal is selected in the selecting means, multiplexing in time division a first group of the time-compressed luminance line signals corresponding to the even-numbered scanning lines and the time-compressed first color difference line signals to produce a first TCI signal pertaining to the high-definition picture signal corresponding to the even-numbered scanning lines, and multiplexing in time division a second group of the time-compressed luminance line signals corresponding to the odd-numbered scanning lines and the time-compressed second color difference line signals to produce a second TCI signal pertaining to the high-definition picture signal corresponding to the odd-numbered scanning lines; and

magnetic head means for recording the TCI signal pertaining to the normal picture signal on a recording medium in cases where the normal picture signal is selected by the selecting means, and recording the first and second TCI signals pertaining to the high-definition picture signal on the recording medium in cases where the high-definition picture signal is selected by the selecting means.

In the above configuration, either a high-definition picture signal or a normal picture signal is selected in the selecting means. In cases where the normal picture signal is selected, the normal picture signal is processed in the recording processing means. In detail, a plurality of luminance line signals of a luminance signal and a plurality of first and second color difference line signals of first and second color difference signals pertaining to the normal picture signal are respectively time-compressed on every scanning line, and the luminance line signals time-compressed and the first and second color difference line signals time-compressed are multiplexed in time division. Therefore, a TCI signal pertaining to the normal picture signal is produced. Thereafter, the TCI signal is recorded on a recording medium in the magnetic head apparatus.

Also, in cases where the high-definition picture signal is selected in the selecting means, the high-definition picture signal is processed in the recording processing means. In detail, either a first color difference line signal of a first color difference signal pertaining to the high-definition picture signal or a second color difference line signal of a second color difference signal pertaining to the high-definition picture signal is deleted on every scanning line to produce a plurality of thinned first color difference line signals corresponding to even-numbered scanning lines and a plurality of thinned second color difference line signals corresponding to odd-numbered scanning lines. Thereafter, a plurality of luminance line signals of the luminance signal and the thinned first and second color difference line signals are time-compressed on every scanning line to produce a plurality of time-compressed first color difference line signals, a plurality of time-compressed second color difference line signals and a plurality of time-compressed luminance line signals.

Thereafter, a first group of the time-compressed luminance line signals corresponding to the even-numbered scanning lines and the time-compressed first color difference line signals are multiplexed in time division on every scanning line to produce a first TCI signal pertaining to the high-definition picture signal, and a second group of the luminance line signals corresponding to the odd-numbered scanning lines and the time-compressed second color difference line signals are multiplexed in time division on every scanning line to produce a second TCI signal pertaining to the high-definition picture signal. Thereafter, the first and second TCI signal are recorded on the recording medium in the magnetic head apparatus.

Accordingly, even though the high-definition picture signal ranging in a wider frequency band than that in the normal picture signal is input to the picture signal recording apparatus, the high-definition picture signal can be recorded in the same manner as the normal picture signal because the first and second color difference signals pertaining to the high-definition picture signal are thinned out. Also, a quality of picture image obtained by reproducing the high-definition picture signal thinned out is not degraded so much.

To achieve the first and second objects, it is preferred that a recording mode determining unit determines a recording mode in dependence on whether the high-definition picture signal is input to the selecting means, the high-definition picture signal being selected in preference to the normal picture signal in cases where the high-definition picture signal is input to the selecting means.

In the above configuration, the input of the high-definition picture signal to the picture signal recording apparatus is detected in the recording mode determining section, and a recording mode appropriate to record the high-definition picture signal on the recording medium is determined. Thereafter, the high-definition picture signal is necessarily recorded on the recording medium regardless of whether the normal picture signal is input to the picture signal recording apparatus. Therefore, the high-definition picture signal utilized to record a program at a high quality can be recorded in preference to the normal picture signal utilized to record a program at a normal quality even though the high-definition picture signal and the normal picture signal are simultaneously input to the picture signal recording apparatus. Accordingly, in cases where a program pertaining to the high-definition picture signal is the same as that pertaining to the normal picture signal, the high-definition picture signal can be selected in preference to the normal picture signal to record the program at a high quality.

In addition, it is preferred that the recording mode determining unit comprise:

picture signal detecting means for detecting the high-definition picture signal input to the selecting means; and recording mode determining means for determining a recording mode to select the high-definition picture signal according to the recording mode in the selecting means in cases where the high-definition picture signal is detected in the picture signal detecting means and select the normal picture signal according to the recording mode in the selecting means in cases where the high-definition picture signal is not detected in the picture signal detecting means.

In the above configuration, whether or not the high-definition picture signal is input to the selecting means can be judged in the picture signal detecting means. In cases where the high-definition picture signal is detected, the high-definition picture signal is selected in the selecting means in preference to the normal picture signal, and the high-definition picture signal is recorded on the recording medium. In contrast, in cases where the high-definition picture signal is not detected, the normal picture signal is selected in the selecting means and is recorded on the recording medium.

Also, it is preferred that the recording mode determining unit comprise:

picture signal detecting means for detecting the high-definition picture signal input to the selecting means;
recording speed selecting means for selecting either a standard recording speed or a low recording speed which is lower than the standard recording speed, the recording medium being run at the standard recording speed or the low recording speed selected in the recording speed selecting means; and
recording mode determining means for determining a recording mode to select the high-definition picture signal according to the recording mode in the selecting means for the purpose of the recording of the high-definition picture signal on the recording medium at the standard recording speed in cases where the high-definition picture signal is detected in the picture signal detecting means and select the normal picture signal according to the recording mode in the selecting means for the purpose of the recording of the normal picture signal on the recording medium at the standard or low recording speed in cases where the high-definition picture signal is not detected in the picture signal detecting means, the normal picture signal selected in the selecting means being recorded on the recording medium at the standard recording speed in cases where the standard recording speed is selected in the recording speed selecting means, and the normal picture signal selected in the selecting means being recorded on the recording medium at the low recording speed in cases where the low recording speed is selected in the recording speed selecting means.

In the above configuration, a recording mode is determined in the recording mode determining unit in dependence on whether the high-definition picture signal input to the selecting means is detected in the picture signal detecting means. In cases where the high-definition p-icture signal is detected, the high-definition picture signal is selected in the selecting means in preference to the normal picture signal and is recorded on the recording medium at the standard recording speed. In contrast, in cases where the high-definition picture signal is not detected on condition that the standard recording speed is selected in the recording speed selecting means, the normal picture signal is selected in the selecting means and is recorded on the recording medium at the standard recording speed. Also, in cases where the high-definition picture signal is not detected on condition that the low recording speed is selected in the recording speed selecting means, the normal picture signal is selected in the selecting means and is recorded on the recording medium at the low recording speed.

Accordingly, the normal picture signal can be recorded at an appropriate recording speed corresponding to a frequency band of the normal picture signal. In particular, in cases where the normal picture signal is to be recorded at the low recording speed, there is no probability that the normal picture signal is erroneously recorded at the standard recording speed higher than the low recording speed. Therefore, a utilization efficiency of the recording medium can be enhanced.

Also, it is preferred that the recording mode determining unit additionally include:

second magnetic head means for recording the recording mode determined in the recording mode determining means on the recording medium.

In the above configuration, because the recording mode determined in the recording mode determining means is recorded on the recording medium, the recording mode can be detected in a reproducing operation.

Also, it is preferred that the recording mode determining unit additionally include:

servo means for controlling a running speed of the recording medium according to the selection of the recording speed selecting means and generating a control signal to control a running speed of the recording medium in a reproducing operation;

control modulating means for modulating the control signal generated in the servo means to multiplex the recording mode determined in the recording mode determining means with the running speed indicated by the control signal; and

second magnetic head means for recording the control signal modulated in the control modulating means on the recording medium to reproduce either the high-definition picture signal or the normal picture signal recorded on the recording medium with the magnetic head means in the reproducing operation according to the recording mode determined in the recording mode determining means and the recording speed of the recording medium selected in the recording speed selecting means.

In the above configuration, the recording mode determined in the recording mode determining means is recorded on the recording medium with the control signal indicating the running speed of the recording medium. Accordingly, any additional mode recording area is not required to record the recording mode. Therefore, a utilization efficiency of the recording medium can be enhanced.

Also, it is preferred that the recording mode determining unit comprises:

automatic/manual selecting means for selecting either an automatic determination of the recording mode or a manual determination of the recording mode;

input signal selecting means for selecting either the high-definition picture signal input to the selecting means or the normal picture signal input to the selecting means on condition that the manual determination is selected in the automatic/manual selecting means;

recording speed selecting means for selecting either a standard recording speed or a low recording speed which is lower than the standard recording speed, the recording medium being run at the standard recording speed or the low recording speed selected in the recording speed selecting means;

picture signal detecting means for detecting the high-definition picture signal input to the selecting means on condition that the automatic determination is selected in the automatic/manual selecting means;

recording mode determining means for determining a recording mode to select the high-definition picture signal in the selecting means according to the recording mode for the purpose of the recording of the high-definition picture signal on the recording medium at the standard recording speed in cases where the high-definition picture signal is detected in the picture signal detecting means, select the normal picture signal in the selecting means according to the recording mode for the purpose of the recording of the normal picture signal on the recording medium at the low recording speed selected in the recording speed selecting means in cases where the high-definition picture signal is not detected in the picture signal detecting means, select the high-definition picture signal in the selecting means according to the recording mode for the purpose of the recording of the high-definition picture signal on the recording medium at the standard recording speed in cases where the high-definition picture signal is selected in the input signal selecting means, and select the normal picture signal in the selecting means according to the recording mode for the purpose of the recording of the normal picture signal on the recording medium at the low recording speed in cases where the normal picture signal is selected in the input signal selecting means.

In the above configuration, the input signal selecting means is provided in the recording mode determining unit to manually select either the high-definition picture signal or the normal picture signal input to the selecting means on condition that the manual determination is selected in the automatic/manual selecting means. Therefore, in cases where the normal picture signal is selected in the input signal selecting means, the normal picture signal can be selectively recorded on the recording medium even though the normal picture signal and the high-definition picture signal are simultaneously input to the selecting means. Accordingly, even though a recording capacity of the recording medium is small, the normal picture signal can be selectively recorded for a long time because the normal picture signal is recorded at the low recording speed.

Also, the picture signal detecting means is provided in the recording mode determining unit to automatically select the high-definition picture signal input to the selecting means on condition that the automatic determination is selected in the automatic/manual selecting means. Accordingly, the high-definition picture signal utilized to record a program at a high quality can be recorded in preference to the normal picture signal utilized to record a program at a normal quality even though the high-definition picture signal and the normal picture signal are simultaneously input to the selecting means.

Also, the third and fourth object is achieved by the provision of a picture signal recording apparatus for recording a first normal picture signal, a second normal picture signal and a high-definition picture signal in which the number of scanning lines is higher than that in the first or second normal picture signal, comprising:

picture signal detecting means for detecting the high-definition picture signal;

recording speed selecting means for selecting either a standard recording speed or a low recording speed which is lower than the standard recording speed, a recording medium being run at the standard recording speed or the low recording speed selected in the recording speed selecting means;

recording mode determining means for determining, by adopting, a first recording mode in cases where the high-definition picture signal is detected in the picture signal detecting means, adopting a second recording mode in cases where the high-definition picture signal is not detected in the picture signal detecting means on condition that the low recording speed is selected in the recording speed selecting means, and adopting a third recording mode in cases where the high-definition picture signal is not detected in the picture signal detecting means on condition that the standard recording speed is selected in the recording speed selecting means;

selecting means for selecting the high-definition picture signal input to the selecting means in cases where the first recording mode is adopted in the recording mode determining means, selecting the first normal picture signal input to the selecting means in cases where the second recording mode is adopted in the recording mode determining means, and selecting the first and second normal picture signals input to the selecting means in cases where the third recording mode is adopted in the recording mode determining means;

recording processing means for deleting either a first color difference signal or a second color difference signal pertaining to the high-definition picture signal on every scanning line to produce a thinned first color difference signal corresponding to even-numbered scanning lines and a thinned second color difference signal corresponding to odd-numbered scanning lines in cases where the high-definition picture signal is selected by the selecting means, time-compressing the thinned first and second color difference signals to produce a time-compressed first color difference signal corresponding to the even-numbered scanning lines and a time-compressed second color difference signal corresponding to the odd-numbered scanning lines, time-compressing a luminance signal pertaining to the high-definition picture signal on every scanning line to produce a time-compressed luminance signal in cases where the high-definition picture signal is selected in the selecting means, multiplexing in time division a first group of the time-compressed luminance signal corresponding to the even-numbered scanning lines and the time-compressed first color difference signal to produce a first TCI signal pertaining to the high-definition picture signal, multiplexing in time division a second group of the time-compressed luminance signal corresponding to the odd-numbered scanning lines and the time-compressed second color difference signal to produce a second TCI signal pertaining to the high-definition picture signal, time-compressing a luminance signal and first and second color difference signals pertaining to the first normal picture signal on every scanning line in cases where the first normal picture signal is selected in the selecting means, multiplexing in time division the luminance signal time-compressed and the first and second color difference signals time-compressed on every scanning line to produce a first TCI signal pertaining to the first normal picture signal, time-compressing a first group of a luminance signal and first and second color difference signals pertaining to the first normal picture signal and a second group of a luminance signal and first and second color difference signals pertaining to the second normal picture signal on every scanning line in cases where the first and second normal picture signals are selected in the selecting means, and multiplexing in time division the first group of the luminance signal time-compressed and the first and second color difference signals time-compressed and the second group of the luminance signal time-compressed and the first and second color difference signals time-compressed on every scanning line to produce a first TCI signal pertaining to the first normal picture signal and a second TCI signal pertaining to the second normal picture signal; and

magnetic head means for recording the first and second TCI signals pertaining to the high-definition picture signal on the recording medium at the standard recording speed selected in the recording speed selecting means, recording the first TCI signal pertaining to the first normal picture signal on the recording medium at the low recording speed selected in the recording speed selecting means, and recording the first and second TCI signals pertaining to the first and second normal picture signals on the recording medium at the standard recording speed selected in the recording speed selecting means.

In the above configuration, a high-definition picture signal input to the selecting means is detected in the picture signal detecting means, and either a standard recording speed or a low recording speed is selected in the recording speed selecting means. Thereafter, a recording mode is determined in the recording mode determining means according to the detection of the high-definition picture signal and the selection of a recording speed. In cases where the high-definition picture signal is detected, a first recording mode is adopted as the recording mode. In cases where the high-definition picture signal is not detected on condition that the low recording speed is selected, a second recording mode is adopted as the recording mode. In cases where the high-definition picture signal is not detected on condition that the standard recording speed is selected, a third recording mode is adopted as the recording mode. Thereafter, the high-definition picture signal, a first normal picture signal or a second normal picture signal is recorded on a recording medium according to the recording mode determined in the recording mode determining means.

In detail, in cases where the first recording mode is adopted, the high-definition picture signal is selected in the selecting means and is processed in the recording processing means. That is, either a first color difference signal or a second color difference signal pertaining to the high-definition picture signal is deleted on every scanning line to produce a thinned first color difference signal corresponding to even-numbered scanning lines and a thinned second color difference signal corresponding to odd-numbered scanning lines. Thereafter, a luminance signal pertaining to the high-definition picture signal is time-compressed to produce a time-compressed luminance signal, and the thinned first and second color difference signals are time-compressed to produce a time-compressed first color difference signal and a time-compressed second color difference signal. Thereafter, a first group of the time-compressed luminance signal corresponding to the even-numbered scanning lines and the time-compressed first color difference signal are multiplexed in time division to produce a first TCI signal, and a second group of the time-compressed luminance signal corresponding to the odd-numbered scanning lines and the time-compressed second color difference signal are multiplexed in time division to produce a second TCI signal. Thereafter, the first and second TCI signals are recorded on the recording medium through the magnetic head means at the standard recording speed.

In cases where the second recording mode is adopted, the first normal picture signal is selected in the selecting means and is processed in the recording processing means. That is, a luminance signal and first and second color difference signals pertaining to the first normal picture signal are time-compressed and multiplexed to produce a first TCI signal. Thereafter, the first TCI signal is recorded on the recording medium through the magnetic head means at the low recording speed.

In cases where the third recording mode is adopted, the first and second normal picture signals are selected in the selecting means and are processed in the recording processing means. That is, a luminance signal and first and second color difference signals pertaining to the first normal picture signal are time-compressed and multiplexed to produce a first TCI signal. Also, a luminance signal and first and second color difference signals pertaining to the second normal picture signal are time-compressed and multiplexed to produce a second TCI signal. Thereafter, the first and second TCI signals are recorded on the recording medium through the magnetic head means at the low recording speed.

Accordingly, two types of normal picture signals pertaining to two different programs can be simultaneously recorded on the recording medium at the standard recording speed,

Also, the first and second objects are achieved by the provision of a picture signal reproducing apparatus for reproducing a normal picture signal and a high-definition picture signal in which the number of scanning lines is higher than that in the normal picture signal, comprising:

recording medium means for recording a TCI signal pertaining to the normal picture signal, first and second TCI signals pertaining to the high-definition picture signal, a first control signal in which a recording speed of the high-definition picture signal and a recording mode of the high-definition picture signal are multiplexed, and a second control signal in which a recording speed of the normal picture signal and a recording mode of the normal picture signal are multiplexed, the TCI signal pertaining to the normal picture signal being composed of a luminance signal, first and second color difference signals multiplexed with each other on every scanning line and a recording mode signal indicating the recording mode of the normal picture signal, the first TCI signal pertaining to the high-definition picture signal being composed of a first luminance signal corresponding to even-numbered scanning lines, a thinned first color difference signal corresponding to the even-numbered scanning lines and a recording mode signal indicating the recording mode of the high-definition picture signal multiplexed with each other, and the second TCI signal pertaining to the high-definition picture signal being composed of a second luminance signal corresponding to odd-numbered scanning lines and a thinned second color difference signal corresponding to the odd-numbered scanning lines multiplexed with each other;

magnetic head means for reading either the TCI signal pertaining to the normal picture signal recorded on the recording medium means or the first and second TCI signals pertaining to the high-definition picture signal recorded on the recording medium means and reading either the first control signal or the second control signal recorded on the recording medium means;

normal or search reproducing mode selecting means for selecting either a normal reproducing mode or a search reproducing mode in which the TCI signal pertaining to the normal picture signal or the first and second TCI signals pertaining to the high-definition picture signal are intermittently read out from the recording medium means through the magnetic head means;

reproducing mode determining means for determining a reproducing mode corresponding to the recording mode signal included in either the TCI signal pertaining to the normal picture signal or the first TCI signal pertaining to the high-definition picture signal in cases where the normal reproducing mode is selected in the normal or search reproducing mode selecting means and determining a reproducing mode corresponding to the recording mode signal multiplexed in the first or second control signal recorded on the recording medium means in cases where the search reproducing mode is selected in the normal or search reproducing mode selecting means;

reproducing processing means for reproducing the luminance signal and the first and second color difference signals of the normal picture signal from the TCI signal pertaining to the normal picture signal read in the magnetic head means according to the reproducing mode determined in the reproducing mode determining means in cases where the TCI signal pertaining to the normal picture signal is read in the magnetic head means and reproducing the first and second luminance signals and the first and second color difference signals of the high-definition picture signal from the first and second TCI signals pertaining to the high-definition picture signal read in the magnetic head means according to the reproducing mode determined in the reproducing mode determining means in cases where the first and second TCI signals pertaining to the high-definition picture signal are read in the magnetic head means; and

selecting means for selecting either the luminance signal and the first and second color difference signals of the normal picture signal or the first and second luminance signals and the first and second color difference signals of the high-definition picture signal according to the reproducing mode determined in the reproducing mode determining means.

In the above configuration, the determination of a reproducing mode corresponding to a recording mode which regulates the recording of a normal picture signal or a high-definition picture signal is required to reproduce the normal picture signal or the high-definition picture signal. In the present invention, the recording mode of the high-definition picture signal is included not only in the first TCI signal but also in the first control signal recorded on the recording medium means, and the recording mode of the normal picture signal is included not only in the TCI signal but also in the second control signal recorded on the recording medium means. In cases where the normal reproducing mode is selected in the normal or search reproducing mode selecting means, the recording mode included in the TCI signal or the first TCI signal is distinguished in the reproducing mode determining means to determine a reproducing mode. In contrast, in cases where the search reproducing mode is selected in the normal or search reproducing mode selecting means, the recording mode included in the first or second control signal is distinguished in the reproducing mode determining means because the TCI signal or the first TCI signal is intermittently read from the recording medium means. Accordingly, because the recording mode recorded on the recording medium means is distinguished in the reproducing mode determining means, a reproducing mode corresponding to the recording mode can be rapidly determined in the reproducing mode determining means.

Also, because the recording mode included in the first TCI signal (or the TCI signal) is distinguished in case of the selection of the normal reproducing mode, the recording mode can be detected each time the first TCI signal equivalent to a frame of picture signal is reproduced even though the recording mode is indicated by a plurality of bits. In addition, because the recording mode included in the first or second control signal is distinguished in case of the selection of the search reproducing mode, the recording mode can be rapidly distinguished in the reproducing mode determining means to determine the reproducing mode.

BRIEF DESCRIPTION OF THE DRAWINGS

The objects, features and advantages of the present invention will be apparent from the following description taken in conjunction with the accompanying drawings, in which:

Fig. 1 is a block diagram of a picture signal recording apparatus according to a first embodiment;

Figs. 2(A) to 2(I) are respectively a timing chart showing a time division multiplexing of a luminance signal Yi (i=1,2,--) and first and second color difference signals PRi, PBi performed in a recording processing means shown in Fig. 1;

Fig. 3A shows a series of first pixels selected as sampling points S1 in each of horizontal scanning lines on every other scanning line to form a first color difference line signal PRi and another series of second pixels selected as sampling points S2 in each of other horizontal scanning lines on every other scanning line to form a second color difference line signal PBi, the scanning line pertaining to the sampling points S1 and the scanning line pertaining to the sampling points S2 being alternately arranged in a field of picture image;

Fig. 3B shows a series of first pixels selected as sampling points S1 on every other pixel in each of horizontal scanning lines and another series of second pixels selected as sampling points S2 on every other pixel in each of horizontal scanning lines;

Fig. 3C conceptually shows horizontal scanning lines in a high-definition television (HDTV) signal, horizontal scanning lines in a reduced HD signal equivalent to a MUSE signal, even-numbered horizontal scanning lines in the line reduced signal and odd-numbered horizontal scanning lines in the line reduced signal;

Fig. 4 is a block diagram of a recording processing means shown in Fig. 1;

Fig. 5A shows a wave form of a first recorded TCI signal Sr1;

Fig. 5B shows a wave form of a second recorded TCI signal Sr2;

Fig. 6 is an upper front view of a rotational drum to show an arrangement of pairs of magnetic heads on the rotational drum;

Fig. 7 shows a pattern of the first and second recorded TCI signals Sr1, Sr2 recorded on a magnetic tape MT in case of a first recording mode;

Fig. 8 shows another pattern of the first and second recorded TCI signals Sr1, Sr2 recorded on a magnetic tape MT in case of a first recording mode according to a modification of the first embodiment;

Fig. 9 is a block diagram of a recording mode determining section shown in Fig. 1;

Fig. 10 is a flow chart showing an operation performed in the recording mode determining section to determine a recording mode selected from among first to third recording modes;

Fig. 11A shows a wave form of a recording control signal Src in which a high level period is set to X% to designate a code "0";

Fig. 12B shows a wave form of the recording control signal Src in which a high level period is set to Y% to designate a code "1";

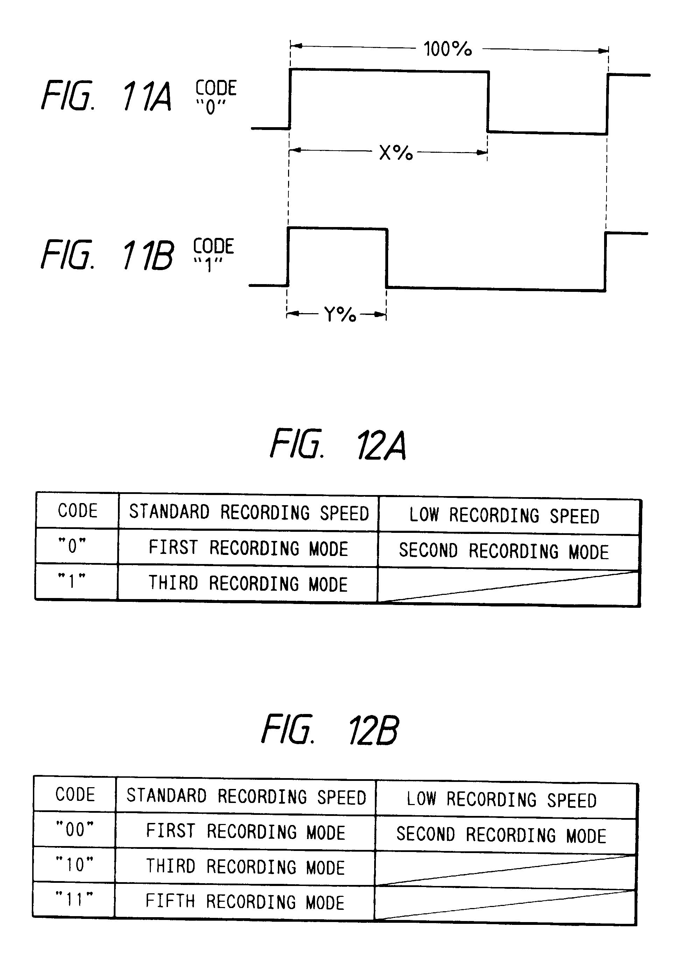

Fig. 12A shows a relationship between a recording mode determined in a recording mode determining means shown in Fig. 30 and a code indicated by the recording control signal Src;

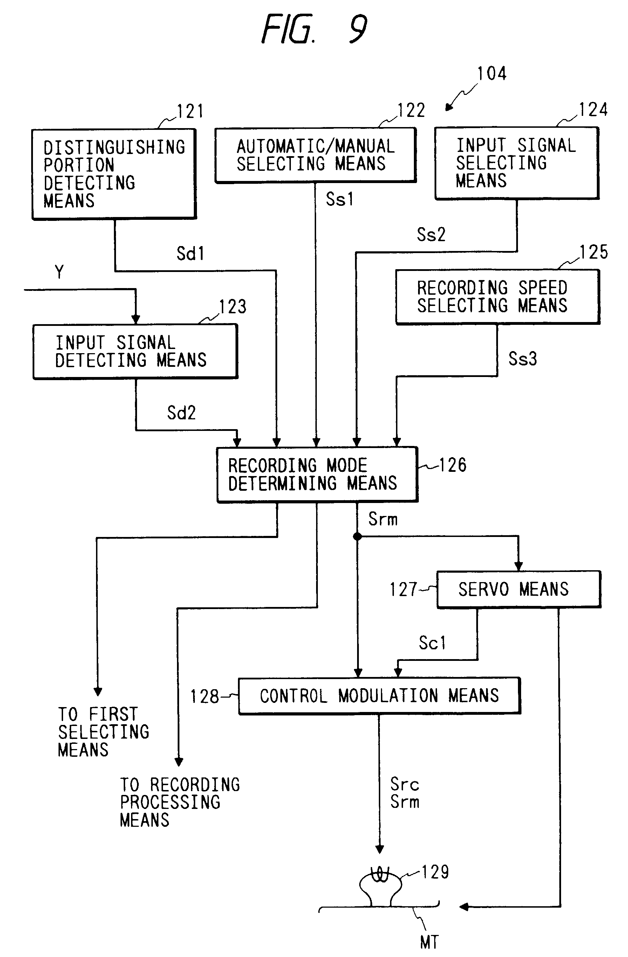

Fig. 12B shows another relationship between a recording mode determined in the recording mode determining means shown in Fig. 9 and a code indicated by the recording control signal Src;

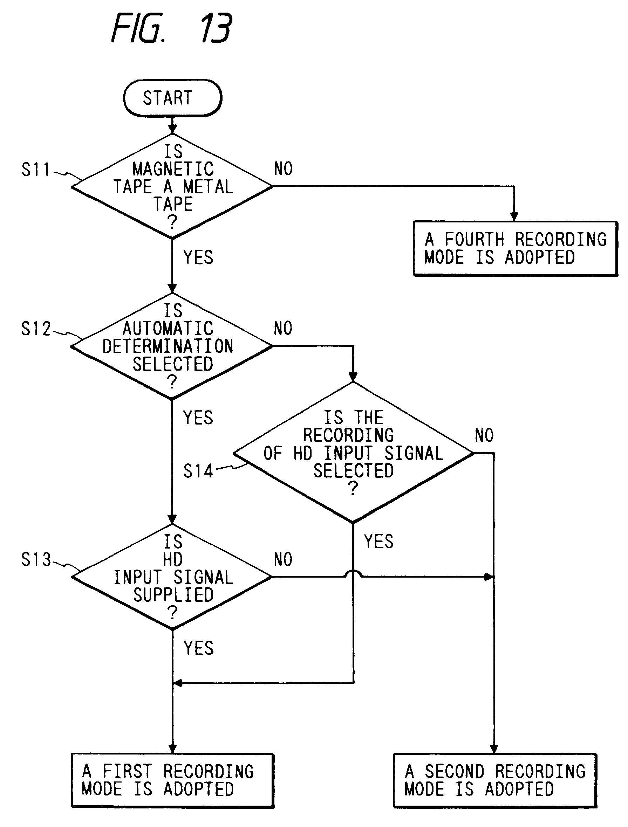

Fig. 13 is a flow chart showing an operation performed in the recording mode determining section shown in Fig. 30 to adopt either the first or second recording mode;

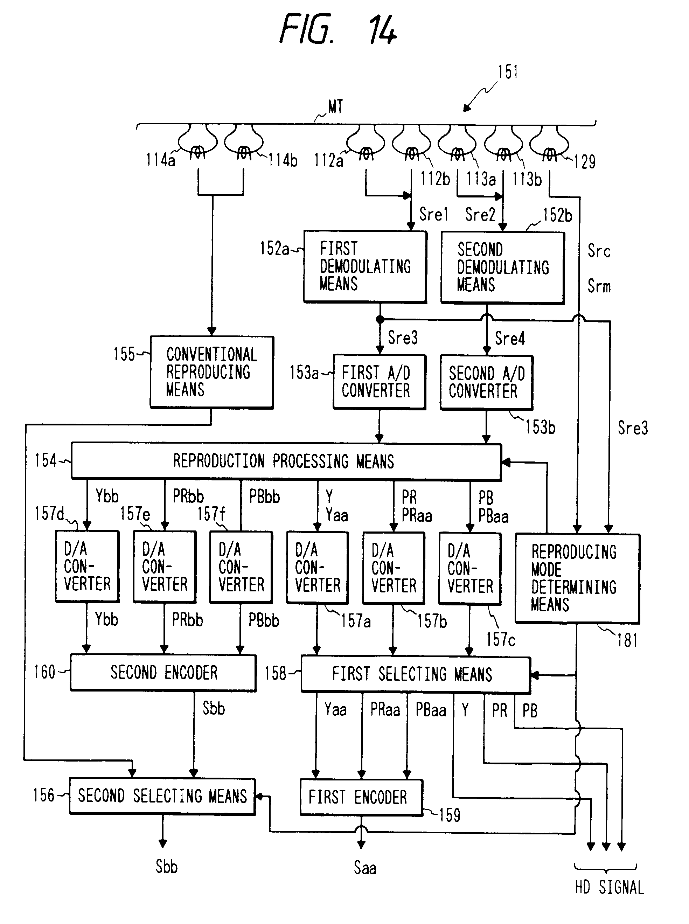

Fig. 14 is a block diagram of a picture signal reproducing apparatus according to the first embodiment of the present invention;

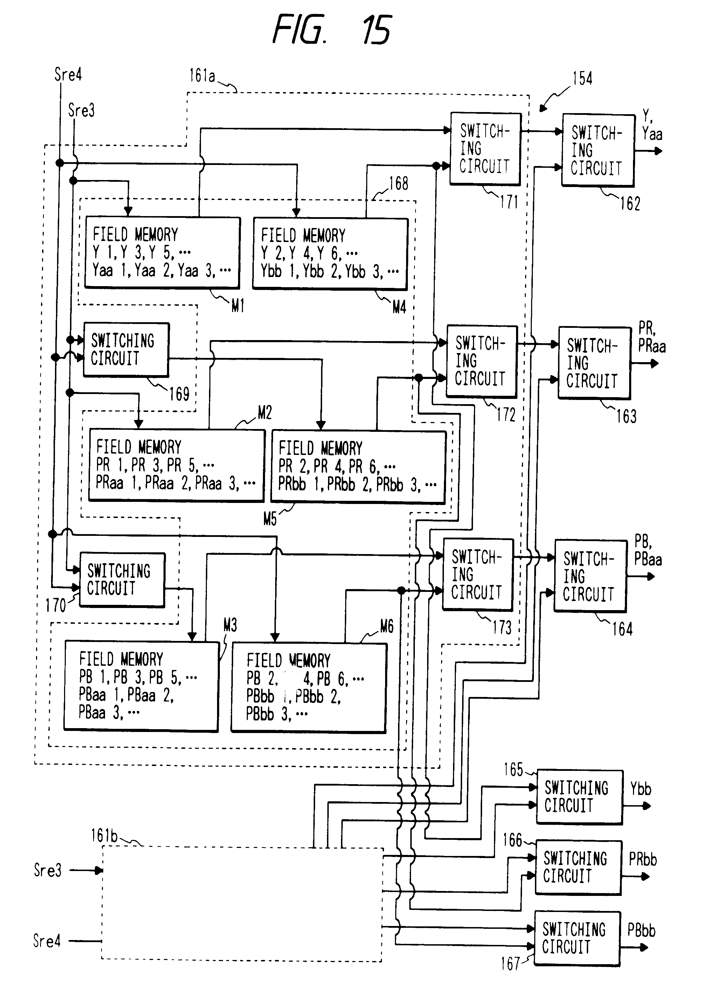

Fig. 15 is a block diagram of a reproduction processing means shown in Fig. 14;

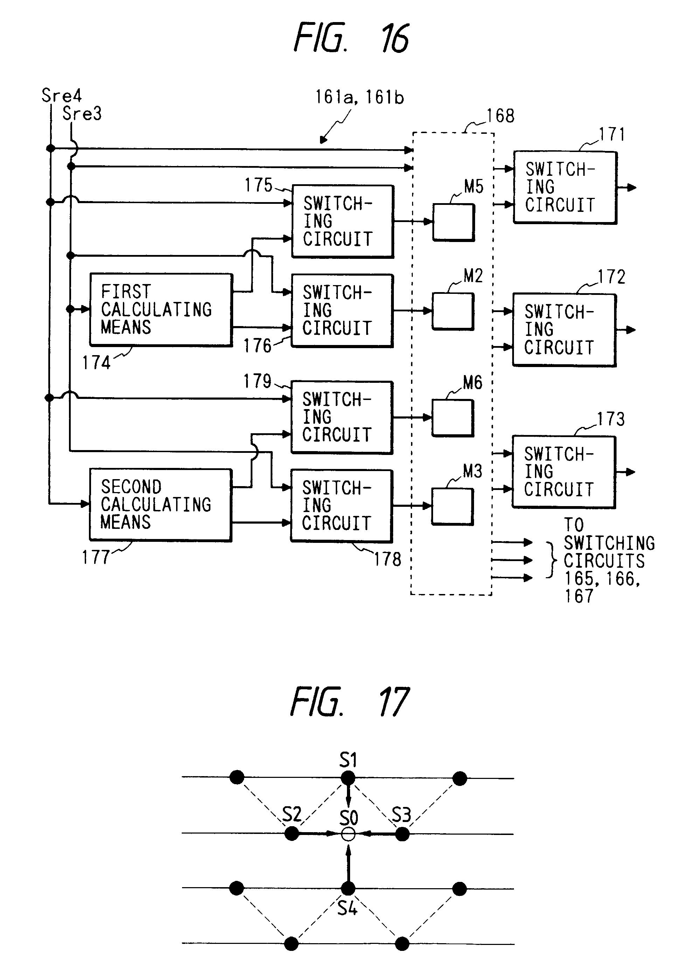

Fig. 16 is another block diagram of a reproduction processing means shown in Fig. 14 according to a modification of the first embodiment;

Fig. 17 is a conceptual view showing an action of calculating means shown in Fig. 16 in cases where the color difference signals PR, PB are produced according to a modified method shown in Fig. 13B; and

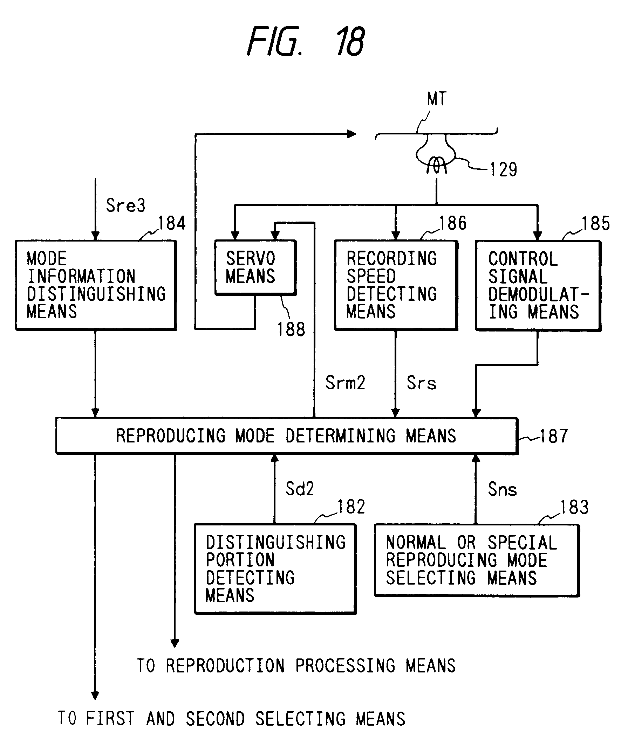

Fig. 18 is a block diagram of a reproducing mode determining section shown in Fig. 14.

## DETAIL DESCRIPTION OF THE PREFERRED EMBODIMENTS

Preferred embodiments of picture signal recording/reproducing apparatus and method according to the present invention are described with reference to drawings.

A first embodiment according to the present invention is described to solve the first object.

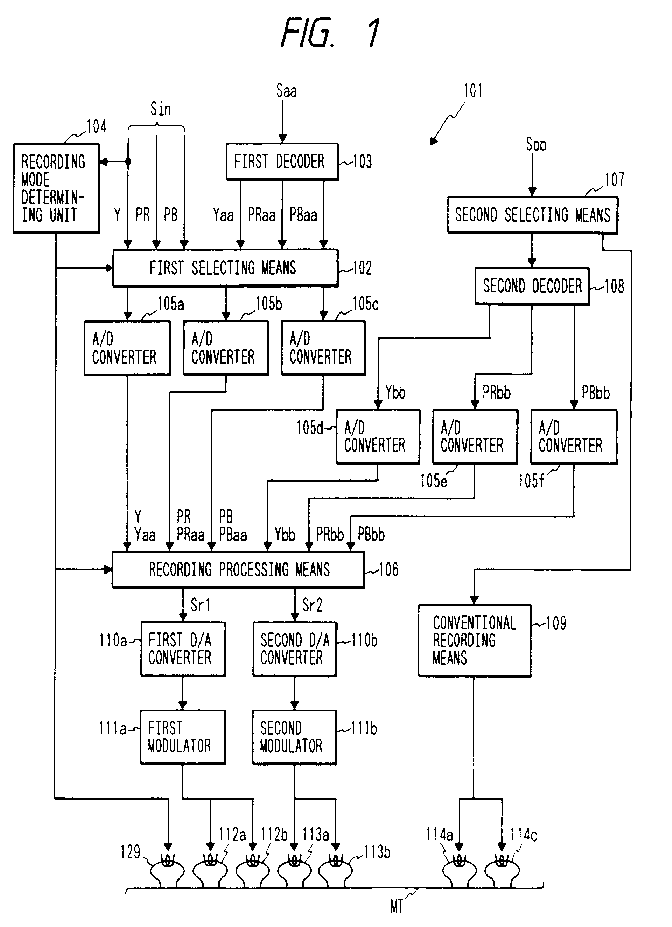

Fig. 1 is a block diagram of a picture signal recording apparatus according to a second embodiment.

In a picture signal recording apparatus 101 shown in Fig. 1, a high-definitin picturesignal (Hereinafter, called an HD signal) and an NTSC type of picture signal classified as a normal picture signal conventionally utilized are recorded according to one of various recording modes. The HD signal Sin is a signal selected from among a luminance signal Y, a first color difference signal PB and a second color difference signal PR in conformity to Japanese high-vision standards. That is, the signals Y, PB and PR are formed by transforming three primary color signals such as a red signal R, a green signal G and a blue signal B according to equations (1), (2) and (3).

$$Y1 = 0.7154*G + 0.0721*B + 0.2125*R \tag{1}$$

$$PB1 = 0.5389*(-0.7154*G + 0.9279*B - 0.2125*R) \tag{2}$$

$$PR1 = 0.6349*(-0.7154*G - 0.0721*B + 0.7875*R) \tag{3}$$

Here, the symbols Y1, PB1 and PR1 denote an input amplitude level of the luminance signal Y, an input amplitude level of the first color difference signal PB and an input amplitude level of the second color difference signal PR.

A first recording mode is initially described in detail. A pair of color difference signals PR, PB belonging to the HD signal are respectively composed of a series of color difference line signals PRi (i=1, 2,--) or PBi. The color difference line signals PRi pertaining to even-numbered scanning lines are deleted to produce a series of color difference line signals PR1, PR3,--. Also, the color difference line signals PBi pertaining to odd-numbered scanning lines are deleted to produce a series of color difference line signals PB2, PB4,--. Thereafter, the color difference line signals are respectively time-compressed to respectively produce a series of compressed color difference line signals. Also, a luminance signal Y belonging to the HD picture signal is composed of a series of luminance line signals Yi. The luminance line signals Yi are respectively time-compressed to produce a series of compressed luminance line signals. Thereafter, the compressed color difference line signals and the compressed luminance line signals are unified according to a time-division multiplexing to produce a time compressed integration (TCI) signal, and the TCI signal is splitted in a first recorded TCI signal pertaining to odd-numbered scanning lines and a second recorded TCI signal pertaining to even-numbered scanning lines. Thereafter, the first and second recorded TCI signals and an audio signal are simultaneously recorded on three corresponding tracks of a high-performance information recording medium such as a metal tape or a deposited tape at a standard recording speed according to the first recording mode.

Next, a second recording mode is described. A pair of color difference signals belonging to the normal picture signal are respectively time-compressed at every scanning line to produce a compressed color difference signal. Also, a luminance signal belonging to the normal picture signal is time-compressed at every scanning line to produce a compressed luminance signal. Thereafter, the compressed color difference signals and the compressed luminance signal are unified according to a time-division multiplexing to produce a time compressed integration (TCI) signal, and the TCI signal is recorded on a track of the high-performance information recording medium at a low recording speed equal to 1/3 of the standard recording speed according to the second recording mode.

Next, a third recording mode is described. A pair of color difference signals belonging to the normal picture signal are respectively time-compressed at every scanning line to produce a compressed color difference signal. Also, a luminance signal belonging to the normal picture signal is time-compressed at every scanning line to produce a compressed luminance signal. Thereafter, the compressed color difference signals and the compressed luminance signal are unified according to a time-division multiplexing to produce a time compressed integration (TCI) signal, and the TCI signal is recorded on two tracks of the high-performance information recording medium at the standard recording speed according to the third recording mode. Next, a fourth recording mode is described. A normal picture signal is modulated according to a frequency modulation (FM), and the picture signal modulated is recorded on a track of a normal information recording medium such as an iron oxide tape according to the fourth recording mode.

As shown in Fig. 1, a luminance signal Y, a first color difference signal PB and a second color difference signal PR of a HD input signal Sin are supplied from a transmission path (not shown) to a first selecting means 102. The signals Y, PB, PR of the HD input picture signal Sin are in conformity to Japanese high-vision standards. That is, the signals Y, PB and PR are defined according to equations (1), (2) and (3).

Also, a first normal picture signal Saa pertaining to a first program is supplied from a transmission path (not shown) to a first decoder 103 to demodulate the signal Saa. Thereafter, a luminance signal Yaa, a first color difference signal PBaa and a second color difference signal PRaa of the signal Saa are produced in the first decoder 103 and are supplied to the first selecting means 102. In cases where the first recording mode is performed according to the determination of a recording mode determining section 104 in the picture signal recording apparatus 101, the luminance signal Y and the first and second color difference signals PB, PR are selected and output from the first selecting means 102. In contrast, in cases where the second or third recording mode is performed according to the determination of the recording mode determining section 104, the luminance signal Yaa and the first and second color difference signals PBaa, PRaa are selected and output from the first selecting means 102. The signals selected in the first selecting means 102 are converted to digital signals in analogue-to-digital (A/D) converters 105a, 105b, 105c, and the digital signals are supplied to a recording processing means 106.

Also, a second normal picture signal Sbb pertaining to a second program is supplied from a transmission path (not shown) to a second selecting means 107. In the second selecting means 107, the second normal picture signal Sbb is supplied to a second decoder 108 in cases where the third recording mode is performed according to the determination of the recording mode determining section 104. In contrast, the second normal picture signal Sbb is supplied to a conventional recording means 109 in cases where the fourth recording mode is performed according to the determination of the recording mode determining section 104. In the second decoder 108, the second normal picture signal Sbb is demodulated in the same manner as in the first decoder 103 to produce a luminance signal Ybb, a first color difference signal PBbb and a second color difference signal PRbb. Thereafter, the signals Ybb, PBbb, PRbb are converted to digital signals in analogue-to-digital (A/D) converters 105d, 105e and 105f, and the digital signals are supplied to the recording processing means 106.

Therefore, the luminance signal Y and the first and second color difference signals PB, PR of the HD input signal Sin are supplied to the recording processing means 106 in case of the first recording mode, the luminance signal Yaa and the first and second color difference signals PBaa, PRaa of the first normal picture signal Saa are supplied to the recording processing means 106 in case of the second recording mode, and the luminance signal Yaa and the first and second color difference signals PBaa, PRaa of the first normal picture signal Saa and the luminance signal Ybb and the first and second color difference signals PBbb, PRbb of the second normal picture signal Sbb are supplied to the recording processing means 106 in case of the third recording mode.

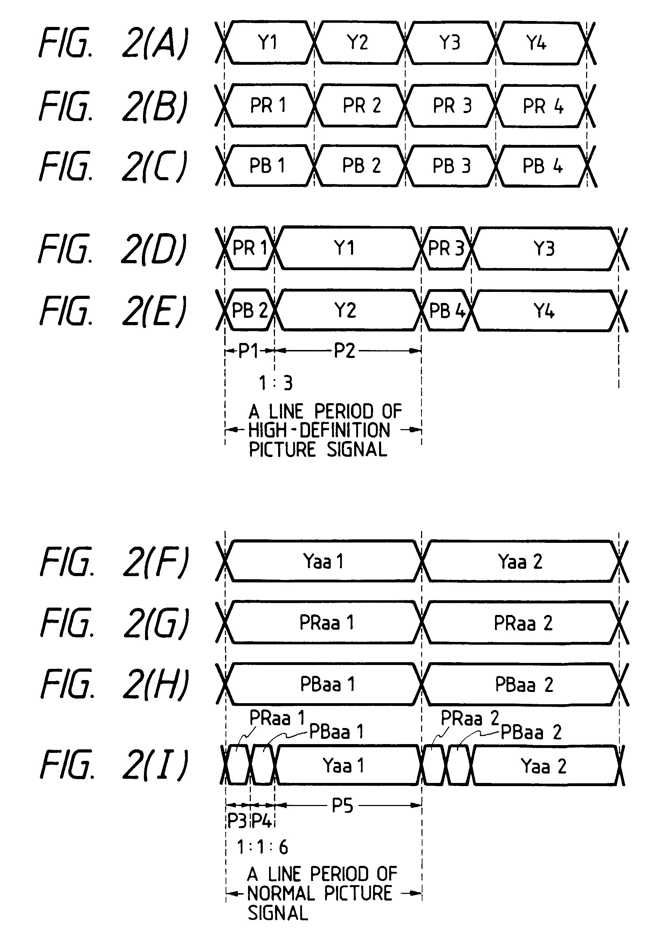

Next, an action of the recording processing means 106 is described with reference to Figs. 2(A) to 2(I).

Figs. 2(A) to 2(I) are respectively a timing chart showing a time division multiplexing of the luminance signal and the first and second color difference signals performed in the recording processing means 106. Numerals in Figs. 2 (A) to 2(I) denote the numbers of the horizontal scanning lines.

In case of the first recording mode, first color difference line signals PRi pertaining to even-numbered scanning lines in the first color difference signal PB shown in Fig. 2(B) are respectively deleted to produce a series of first color difference line signals PRi pertaining to odd-numbered scanning lines, and the first color difference line signals PRi pertaining to odd-numbered scanning lines are respectively time-compressed to produce a series of compressed first color difference line signals. In the same manner, second color difference line signals PBi pertaining to odd-numbered scanning lines in the second color difference signal PB shown in Fig. 2(B) are respectively deleted to produce a series of second color difference line signals PBi pertaining to even-numbered scanning lines, and the second color difference line signals PBi pertaining to even-numbered scanning lines are respectively time-compressed to produce a series of compressed second color difference line signals. Also, luminance line signals Yi of the luminance signal Y shown in Fig. 2(A) are respectively time-compressed to produce a series of compressed luminance line signals. Thereafter, the compressed color difference line signals of the color difference signals PB, PR and the compressed luminance line signals are unified according to a time-division multiplexing to produce a time compressed integration (TCI) signal, and the TCI signal is splitted into a first recorded TCI signal Sr1 pertaining to odd-numbered scanning lines shown in Fig. 2(D) and a second recorded TCI signal Sr2 pertaining to even-numbered scanning lines shown in Fig. 2(E). In detail, as shown in Fig. 2(D), the compressed first color difference line signals PRi pertaining to odd-numbered scanning lines and the luminance line signals Yi pertaining to odd-numbered scanning lines are alternately arranged in order of odd-numbered scanning line to form the first recorded TCI signal Sr1. Also, as shown in Fig. 2(E), the compressed second color difference line signals PBi pertaining to even-numbered scanning lines and the luminance line signals Yi pertaining to even-numbered scanning lines are alternately arranged in order of even-numbered scanning line to form the second recorded TCI signal Sr2. A ratio of a period P1 of the time compressed color difference line signal PBi or PRi to another period P2 of the time compressed luminance line signal Yi is set to 1:3. In other words, a ratio in time compression degree of the time compressed color difference line signal PBi or PRi to the time compressed luminance line signal Yi is set to 3:1.

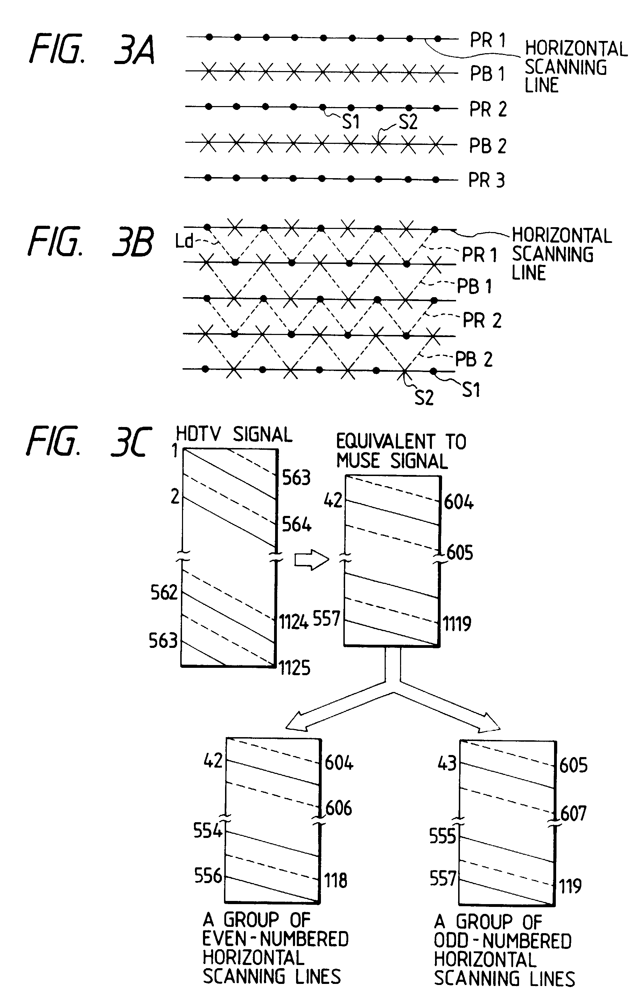

The generation of the color difference line signal PBi or PRi is described with reference to Fig. 3A.

Fig. 3A shows a series of first pixels selected as sampling points S1 in a horizontal scanning line to form a first color difference line signal PRi and another series of second pixels selected as sampling points S2 in another horizontal scanning line to form a second color difference line signal PBi, the scanning line pertaining to the sampling points S1 and the scanning line pertaining to the sampling points S2 being alternately arranged in a field of picture image.

As shown in Fig. 3A, the horizontal scanning lines arranged in a field alternately correspond to a first color difference line signal PRi and a second color difference line signal PBi at every scanning line. That is, a first color difference line signal PRi is produced by pieces of information designated by pixels placed in a horizontal scanning line corresponding to the first color difference line signal PRi, and a second color difference line signal PBi is produced by pieces of information designated by pixels placed in a horizontal scanning line corresponding to the second color difference line signal PBi.

In this embodiment, the horizontal scanning lines corresponding to the color difference line signals PRi, PBi are arranged in a field of picture image. However, it is applicable that a first color difference line signal PRi and a second color difference line signal PBi be alternately selected on every other line in a frame of picture image. Also, there is another method as a modification of the second embodiment to generate the color difference line signals PRi, PBi. As shown in Fig. 3B, pixels placed in a horizontal scanning line are alternately selected as a sampling point S1 of a first color difference line signal PRi and another sampling point S2 of a second color difference line signal PBi, and a series of sampling points S1 connected by a dotted line Ld over two horizontal scanning lines is regarded as first pixels pertaining to a first color difference line signal PRi. The first color difference line signal PRi is produced by pieces of information designated by the first pixels. Also, a series of sampling points S2 connected by a line (not shown) over two horizontal scanning lines is regarded as second pixels pertaining to a second color difference line signal PBi. The second color difference line signal PBi is produced by pieces of information designated by the second pixels.

In the picture signal recording apparatus 101, a servo system arranged in the recording mode determining section 104 is utilized for the normal picture signals Saa, Sbb and the HD input signal Sin, and video tracks on which the recorded TCI signals Sr1, Sr2 are recorded are arranged side by side. Therefore, a drum diameter and a tape running speed in the picture signal recording apparatus 101 are the same as those in a conventional picture signal recording apparatus operated according to a VHS method or an 8 mm film method. As a result, the number of horizontal scanning lines of a picture signal possible to be recorded on a track of a recording tape in the picture signal recording apparatus 101 is limited to 262.5 lines which is the same as that in the conventional picture signal recording apparatus. In contrast, the number of horizontal scanning lines of the HD input signal Sin is equal to 562. 5 per a field. Therefore, even though the horizontal scanning lines of the HD input signal Sin is splitted in two, there is a drawback that the number of horizontal scanning lines splitted is over 262. 5. To avoid the drawback, upper and lower horizontal scanning lines including a vertical synchronizing signal of the HD input signal Sin arranged in upper and lower sides of an image plane are deleted, and another vertical synchronizing signal newly added and remaining effective horizontal scanning lines of the HD input signal Sin are converted in the recording processing means 106. In detail, as shown in Fig. 3C, upper and lower horizontal scanning lines including a vertical synchronizing signal of the HD input signal Sin (or HDTV signal) arranged in upper and lower sides of an image plane are deleted to form a reduced HD signal equivalent to a MUSE signal in which the number of effective horizontal scanning lines is equal to 1032. Thereafter, the effective scanning lines of the reduced HD signal are splitted into a group of odd-numbered horizontal scanning lines of the first recorded TCI signal Sr1 and a group of even-numbered horizontal scanning lines of the second recorded TCI signal Sr2.

Next, in case of the second recording mode, the luminance signal Yaa shown in Fig. 2(F) and the first and second color difference signals PBaa, PRaa shown in Figs. 2(G), 2(H) are supplied to the recording processing means 106. Thereafter, the first and second color difference signals PBaa, PRaa are respectively time-compressed, and the luminance signal Yaa is time-compressed. Thereafter, the first and second color difference signals PBaa, PRaa time-compressed and the luminance signal Yaa time-compressed are multiplexed according to the time division multiplexing to form the first recording TCI signal Sr1 shown in Fig. 2(I). In this case, a relationship among a period P3 of the first color difference signal PRaa compressed, a period P4 of the second color difference signal PBaa compressed, and a period P5 of the luminance signal Yaa compressed is set to P3:P4:P5 = 1:1:6. In other words, a ratio in time compression degree of the first color difference signal PRaa compressed to the luminance signal Yaa compressed is set to 6:1, and a ratio in time compression degree of the second color difference signal PBaa compressed to the luminance signal Yaa compressed is set to 6:1. Therefore, the time compression ratio (6:1) in the first normal picture signal Saa is larger than the time compression ratio (3:1) in the HD input signal Sin.

In case of the third recording mode, the first recorded TCI signal Sr1 is formed of the first normal picture signal Saa pertaining to the first program in the same manner as in the second recording mode. Also, the luminance signal Ybb and the first and second color difference signals PBbb, PRbb of the second normal picture signal are supplied to the recording processing means 106. Thereafter, the first and second color difference signals PBbb, PRbb are respectively time-compressed, and the luminance signal Ybb is time-compressed. Thereafter, the first and second color difference signals PBbb, PRbb time-compressed and the luminance signal Ybb time-compressed are multiplexed according to the time division multiplexing to form the second recorded TCI signal Sr2. In this case, a relationship among a period of the first color difference signal PRbb compressed, a period of the second color difference signal PBbb compressed, and a period of the luminance signal Ybb compressed is set to 1:1:6 in the same manner as in the first recorded TCI signal Sr1.

Next, a frequency band in each of the first, second and third recording modes is described on condition that a frequency band Br of each of the recorded TCI signals Sr1, Sr2 transferred in a head tape system described later is almost 8 MHz. In case of the first recording mode, the luminance signal Y pertaining to the recorded TCI signals Sr1, Sr2 is interposed in a period equal to 3/4 of a line period of the normal picture signal Saa or Sbb, as shown in Figs. 2 (D), 2(E). Also, a line period of the HD input signal Sin is almost 1/2 of the line period of the normal picture signal Saa or Sbb. Therefore, a frequency band By of the luminance signal Y in case of the conversion of the recording TCI signal Sr1 or Sr2 to the HD input signal Sin is calculated to 12 MHz according to a following equation (5).

$$By = Br \times 3/4 \times 2 \tag{5}$$

Also, frequency bands Bc of the color difference signals PB, PR pertaining to the recorded TCI signals Sr1, Sr2 are respectively calculated to 4 MHz according to a following equation (6) in case of the conversion of the recorded TCI signal Sr1 or Sr2 to the HD input signal Sin.

$$By = Br \times 1/4 \times 2 \tag{6}$$

Therefore, a ratio By:Bc of the frequency band By of the luminance signal Y to the frequency band Bc of the color difference signal PB or PR is equal to 3:1. Though the ratio By:Bc differs from a ratio 4:1 of the number (373) of samples of a luminance signal pertaining to a MUSE signal to the number (93) of samples of a color signal pertaining to the MUSE signal, the first recording mode is appropriate to recording of the MUSE signal of which a frequency is converted to a base band because of a frequency band (about 12 MHz) of a luminance signal and frequency bands (about 3 MHz) of color difference signals in a dynamic image formed of MUSE signals.

Next, in case of the second or third recording mode, because the luminance signal Yaa pertaining to the first recorded TCI signal Sr1 is interposed in a period equal to 6/8 of the line period of the first normal picture signal Saa as shown in Fig. 2(I), a frequency band Bya of the luminance signal Yaa is calculated to 6 MHz according to a following equation (7) in case of the conversion of the first recording TCI signal Sr1 to the first normal picture signal Saa.

$$Bya = Br \times 6/8 \tag{7}$$

Also, frequency bands Bca of the color difference signals PBaa, PRaa pertaining to the first recorded TCI signal Sr1 are respectively calculated to 1 MHz according to a following equation (8) in case of the conversion of the first recording TCI signal Sr1 to the first normal picture signal Saa.

$$Bca = Br \times 1/8 \tag{8}$$

The frequency band Bya = 6 MHz of the luminance signal Yaa is equivalent to a resolution represented by 480 horizontal scanning lines. Therefore, the resolution is superior to that represented by 420 to 430 horizontal scanning lines which is achieved by performing a conventional high-quality recording method such as a S-VHS method or a high eight method. Also, the frequency band Bca = 1 MHz of the color difference signal PBaa or PRaa is sufficiently wide for home use because a processing frequency band of a color signal in a household television receiver is almost 500 KHz.

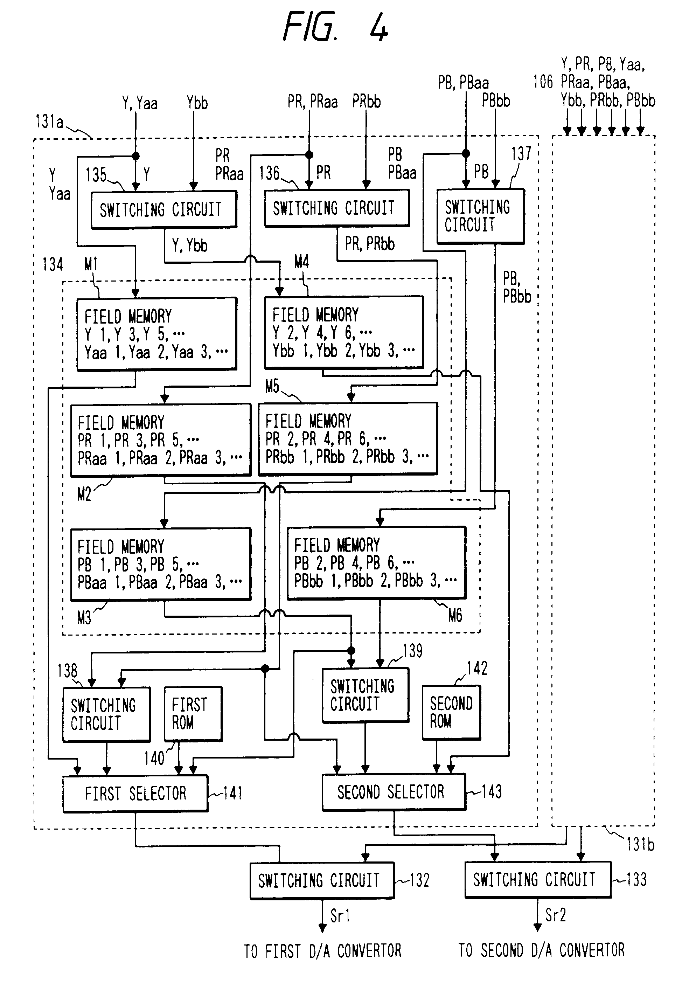

Fig. 4 is a block diagram of the recording processing means 106.

As shown in Fig. 4, the recording processing means 106 comprises a pair of recording processing units 131a, 131b for alternately writing and reading the HD input signal Sin, the first normal picture signal Saa, or the second normal picture signal Sbb to alternately produce a pair of first and second recorded TCI signals Sr1, Sr2, a switching circuit 132 for alternately receiving the first recorded TCI signal Sr1 from the recording processing units 131a, 131b to successively produce the first recorded TCI signal Sr1, and a switching circuit 133 for alternately receiving the second recorded TCI signal Sr2 from the recording processing units 131a, 131b to successively produce the second recorded TCI signal Sr2.

Each of the processing units 131a, 131b comprises a memory region 134 having six field memories M1 to M6 for storing the luminance signal Y of the HD input signal Sin pertaining to odd-numbered scanning lines or the luminance signal Yaa of the first normal picture signal Saa in the field memory M1, storing the first color difference signal PR of the HD input signal Sin pertaining to odd-numbered scanning lines or the first color difference signal PRaa of the first normal picture signal Saa in the field memory M2, storing the second color difference signal PB of the HD input signal Sin pertaining to odd-numbered scanning lines or the second color difference signal PBaa of the first normal picture signal Saa in the field memory M3, storing the luminance signal Y of the HD input signal Sin pertaining to even-numbered scanning lines or the luminance signal Ybb of the second normal picture signal Sbb in the field memory M4, storing the first color difference signal PR of the HD input signal Sin pertaining to even-numbered scanning lines or the first color difference signal PRbb of the second normal picture signal Sbb in the field memory M5, and storing the second color difference signal PB of the HD input signal Sin pertaining to even-numbered scanning lines or the second color difference signal PBbb of the second normal picture signal Sbb in the field memory M6, a switching circuit 135 for selecting either the luminance signal Y or Ybb to write the selected luminance signal to the field memory M4, a switching circuit 136 for selecting either the first color difference signal PR or PRbb to write the selected signal to the field memory M5, a switching circuit 137 for selecting either the second color difference signal PB or PBbb to write the selected signal to the field memory M6, a switching circuit 138 for selecting either the first color difference signal PR, PRaa stored in the field memory M2 or the first color difference signal PRbb stored in the field memory M5, a switching circuit 139 for selecting either the second color difference signal PB, PBaa stored in the field memory M3 or the second color difference signal PBbb stored in the field memory M6, a first read only memory (ROM) 140, a first selector 141 for combining an output signal read from the first ROM 140, the luminance signal Y or Yaa read from in the field memory M1, and a signal selected in the switching circuit 138 and the second color difference signal PB or PBaa read from the field memory M3, a second ROM 142, and a second selector 143 for combining an output signal read from the second ROM 142, the luminance signal Y or Ybb read from the field memory M4, the first color difference signal read from the field memory M5 and a signal selected in the switching circuit 139.

Writing and reading operations in the processing unit 161a are performed independent of those in the processing unit 161b. That is, though a period of two scanning lines in the HD input signal Sin is shorter than that of a scanning line in the normal picture signal Saa or Sbb, an additional memory capacity is provided to each of the field memories M1 to M6 to avoid an adverse influence resulting from the difference between the periods.

In the above configuration of the recording processing means 106, operations performed in the means 106 are initially described in case of the first recording mode. Luminance line signals Y1, Y3,-- pertaining to odd-numbered scanning lines in the luminance signal Y are selected in the switching circuit 135 and are written in the field memory M1, and luminance line signals Y2, Y4,-- pertaining to even-numbered scanning lines in the luminance signal Y are selected in the switching circuit 135 and are written in the field memory M4. Also, first color difference line signals PR1, PR3,-- pertaining to odd-numbered scanning lines in the first color difference signal PR are selected in the switching circuit 136 and are written in the field memory M2, and first color difference line signals PR2, PR4,-- pertaining to even-numbered scanning lines in the first color difference signal PR are selected in the switching circuit 136 and are written in the field memory M5. Also, second color difference line signals PB1, PB3,-- pertaining to odd-numbered scanning lines in the second color difference signal PB are selected in the switching circuit 137 and are written in the field memory M3, and second color difference line signals PB2, PB4,-- pertaining to even-numbered scanning lines in the second color difference signal PB are selected in the switching circuit 137 and are written in the field memory M6. The writing operations of the signals Y, PR, PB are respectively performed in synchronization with a writing clock. Thereafter, the luminance line signals Y1, Y3, -- written in the field memory M1 are read to the first selector 141, the first color difference line signals PR1, PR3,-- written in the field memory M2 are read to the switching circuit 138, the second color difference line signals PB1, PB3,-- written in the field memory M3 are read to the switching circuit 139 or the first selector 141, the luminance line signals Y2, Y4,-- written in the field memory M4 are read to the second selector 143, the first color difference line signals PR2, PR4,-- written in the field memory M5 are read to the switching circuit 138 or the second selector 143, and the second color difference line signals PB2, PB4,-- written in the field memory M6 are read to the switching circuit 139. The reading operations of the signals Y, PR, PB are respectively performed in synchronization with a reading clock of which a reading frequency is higher than a writing frequency of the reading clock.

In cases where the signals Y, PR, PB are converted in order of scanning line according to the selecting method shown in Fig. 3A, the first color difference line signals PR1, PR3,-- written in the field memory M2 are always selected in the switching circuit 138, and the second color difference line signals PB2, PB4,-- written in the field memory M6 are always selected in the switching circuit 139. In contrast, in cases where the signals Y, PR, PB are converted in order of scanning line according to the selecting method shown in Fig. 3B, a first color difference line signal written in the field memory M2 and a first color difference line signal written in the field memory M5 are alternately selected in the switching circuit 138 each time a line signal is selected, and a second color difference line signal written in the field memory M3 and a second color difference line signal written in the field memory M6 are alternately selected in the switching circuit 139 each time a line signal is selected. In addition, a first color difference line signal written in the field memory M2 is selected in the switching circuit 138 when a second color difference line signal written in the field memory M6 is selected in the switching circuit 139, and a first color difference line signal written in the field memory M5 is selected in the switching circuit 138 when a second color difference line signal written in the field memory M3 is selected in the switching circuit 139.

Thereafter, a line signal selected in the switching circuit 138, a luminance line signal written in the field memory M1 and an output signal stored in the first ROM 140 are transferred to the first selector 141 to combine the signals, and a first combined signal pertaining to the first recording TCI signal Sr1 shown in Fig. 2(D) is transferred to the switching circuit 132. In this case, any line signal written in the field memory M3 is not selected in the first selector 141. Also, a line signal selected in the switching circuit 139, a luminance line signal written in the field memory M4 and an output signal stored in the first ROM 142 are transferred to the second selector 141 to combine the signals, and a second combined signal pertaining to the second recorded TCI signal Sr2 shown in Fig. 2(E) is transferred to the switching circuit 133. In this case, any line signal written in the field memory M5 is not selected in the second selector 143. In the same manner, a third combined signal pertaining to the first recorded TCI signal Sr1 shown in Fig. 2(D) is transferred from the processing unit 131b to the switching circuit 132, and a fourth combined signal pertaining to the second recorded TCI signal Sr2 shown in Fig. 2(E) is transferred from the processing unit 131b to the switching circuit 133. In the switching circuit 132, the first and third combined signals are combined to produce the first recorded TCI signal Sr1. In the switching circuit 133, the second and fourth combined signals are combined to produce the second recorded TCI signal Sr2.

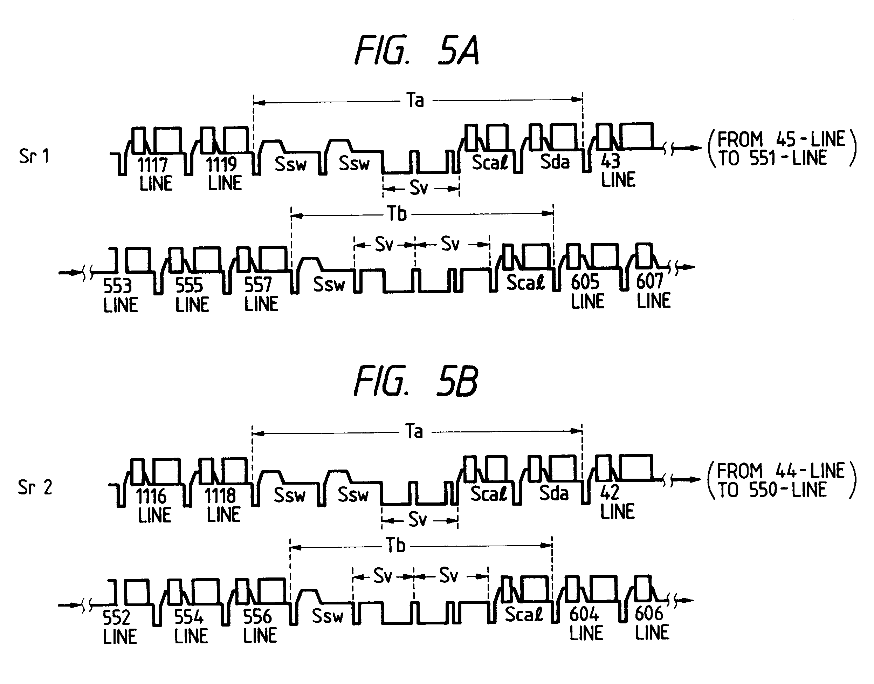

Fig. 5A shows a wave form of the first recorded TCI signal Sr1, and Fig. 5B shows a wave form of the second recorded TCI signal Sr2. Numerals written in Figs. 5A, 5B denote the numbers of horizontal scanning lines.

As shown in Figs. 5A, 5B, the output signals transferred from the first and second ROM 140, 142 are respectively interposed in periods Ta, Tb. That is, each of the output signals comprises a plurality of switching signals Ssw, a plurality of vertical synchronizing signals Sv, a plurality of calibrating signals Scal and an information signal Sda. The switching signals Ssw are utilized to make a margin for the change of magnetic heads. Therefore, a magnetic head is changed to another magnetic head during a period of the switching signal Ssw. The calibrating signal Scal is utilized for the calibration of transmission characteristics between an odd-numbered line system represented by the first recorded TCI signal Sr1 and an even-numbered system represented by the second recorded TCI signal Sr2. The information signal Sda specifies a time code or an amplification level. Also, the information signal Sda includes a piece of recording mode information indicating a recording mode determined in the recording mode determining section 104.

Next, operations performed in the recording processing means 106 are described in case of the second recording mode.

Luminance line signals Yaa1, Yaa2,-- of the luminance signal Yaa are directly written in the field memory M1 without passing through the switching circuit 135, first color difference line signals PRaa1, PRaa2,-- of the first color difference signal PRaa are directly written in the field memory M2 without passing through the switching circuit 136, and second color difference line signals PBaa1, PBaa2,-- of the second color difference signal PBaa are directly written in the field memory M3 without passing through the switching circuit 137. Thereafter, the luminance line signals written in the field memories M1 to M3 are respectively read out to the first selector 141 in synchronization with the reading clock, the first color difference line signals written in the field memory M2 are respectively read out to the first selector 141 through the switching circuit 138 in synchronization with the reading clock, and the second color difference line signals written in the field memory M3 are respectively read out to the first selector 141 in synchronization with the reading clock. In the first selector 141, the line signals are combined, and a first combined signal pertaining to the first recorded TCI signal Sr1 shown in Fig. 2(I) is transferred to the switching circuit 132. In the same manner, a second combined signal pertaining to the first recorded TCI signal Sr1 is transferred from the processing unit 131b to the switching circuit 132. In the switching circuit 132, the first and second combined signals are combined to produce the first recorded TCI signal Sr1. In this case, the second selector 143 does not function.

Next, operations performed in the recording processing means 106 are described in case of the third recording mode.

Luminance line signals Yaa1, Yaa2,-- of the luminance signal Yaa, first color difference line signals PRaa1, PRaa2,-- of the first color difference signal PRaa and second color difference line signals PBaa1, PBaa2,-- of the second color difference signal PBaa are written in the field memories M1 to M3 and are read out to produce the first recorded TCI signal Sr1 in the same manner as in the second recording mode. Also, luminance line signals Ybb1, Ybb2,-- of the luminance signal Ybb are written in the field memory M4 after the signals are selected in the switching circuit 135, first color difference line signals PRbb1, PRbb2,-- of the first color difference signal PRbb are written in the field memory M5 after the signals are selected in the switching circuit 136, and second color difference line signals PBbb1, PBbb2,-- of the second color difference signal PBbb are written in the field memory M6 after the signals are selected in the switching circuit 137. Thereafter, an output signal stored in the second ROM 142, the luminance line signals written in the field memory M4 and the first color difference line signals written in the field memory M5 are transferred to the second selector 143 in synchronization with the reading clock. Also, the second color difference line signals written in the field memory M6 are transferred to the second selector 143 through the switching circuit 139 in synchronization with the reading clock. In the second selector 143, the line signals and the output signal are combined to produce a first combined signal pertaining to the second recorded TCI signal Sr2, and the first combined signal is transferred to the switching circuit 133. In the same manner, a second combined signal pertaining to the second recorded TCI signal Sr2 is transferred from the processing unit 131b to the switching circuit 133. In the switching circuit 133, the first and second combined signals are combined to produce the second recorded TCI signal Sr2.

Thereafter, as shown in Fig. 1, the first recorded TCI signal Sr1 produced in the recording processing means 106 according to the first, second or third recording mode is converted into an analog signal in a first digital-to-analog (D/A) 110a and is modulated according to a frequency modulation (FM) in a first modulator 111a. Thereafter, the first recorded TCI signal Sr1 modulated is recorded on a magnetic tape MT through a pair of first magnetic heads 112a, 112b. Also, the second recorded TCI signal Sr2 produced in the recording processing means 106 according to the first, second or third recording mode is converted into an analog signal in a second digital-to-analog (D/A) 110b and is modulated according to the frequency modulation (FM) in a second modulator 111b. Thereafter, the second recorded TCI signal Sr2 modulated is recorded on the magnetic tape MT through a pair of second magnetic heads 113a, 113b.

In case of the fourth recording mode, the second normal picture signal Sbb is transferred to the conventional recording means 109 through the second selecting means 107. The conventional recording means 109 functions according to a VHS mode or an 8 mm mode. That is, a luminance signal Ybb of the second normal picture signal Sbb is emphasized and modulated according to a frequency modulation (FM). Also, a pair of color signals PRbb, PBbb are converted at a low frequency band. Thereafter, the luminance signal Ybb modulated and the color signals PRbb, PBbb are regulated in frequency and multiplexed to produce a recording signal Sr3. The recording signal Sr3 is recorded on the magnetic tape MT through a pair of third magnetic heads 114a, 114b.

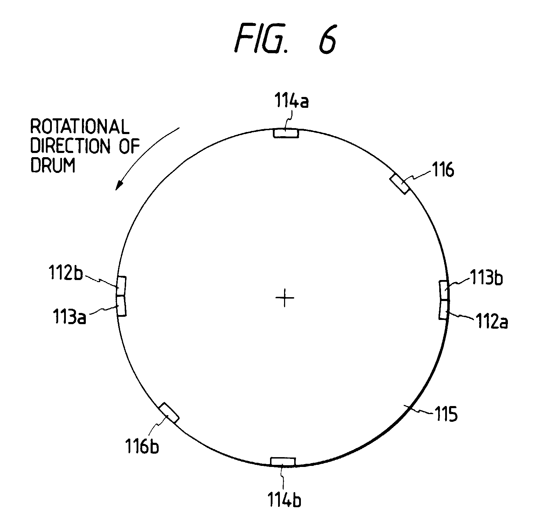

An arrangement of the magnetic heads on a rotational drum is described with reference to Fig. 6.

As shown in Fig. 6, the first magnetic heads 112a, 112b, the second magnetic heads 113a, 113b and the third magnetic heads 114a, 114b are arranged at the periphery of a rotational drum 115 at the same height. In addition, a pair of fourth magnetic heads 116a, 116b utilized according to the first, second , third or fourth recording mode to record an audio signal modulated according to a frequency modulation or a pulse code modulation (PCM) are arranged at the periphery of the rotational drum 115 at the same height. The first magnetic heads 112a, 112b are arranged at opposite sides each other, the second magnetic heads 113a, 113b are arranged at opposite sides each other, the third magnetic heads 114a, 114b are arranged at opposite sides each other, and the fourth magnetic heads 116a, 116b are arranged at opposite sides each other. The magnetic heads 112a, 113a, 114a have the same azimuth direction D1, and the magnetic heads 112b 113b, 114b have the same other azimuth direction D2 differing from the azimuth direction D1.

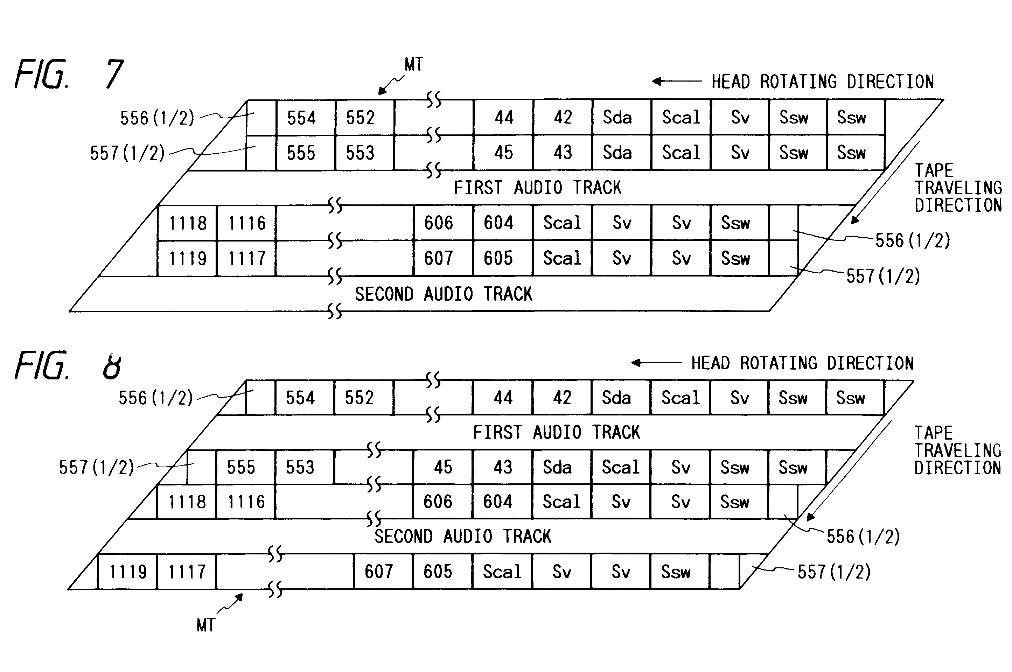

A pattern of the first and second recorded TCI signals Sr1, Sr2 recorded on the magnetic tape MT in case of the first recording mode is described with reference to Fig. 7. Numerals shown in Fig. 7 denote the numbers of the horizontal scanning lines.

As shown in Fig. 7, an audio signal is recorded in a first audio track with the fourth magnetic head 116b preceding the magnetic heads 113a, 112b and is recorded in a first audio track with the fourth magnetic head 116a preceding the magnetic heads 113b, 112a. Thereafter, the second recording TCI signal Scr2 pertaining to even-numbered lines is recorded in a first even-numbered track of the magnetic tape MT with the second magnetic head 113a and is recorded in a second even-numbered track of the magnetic tape MT with the second magnetic head 113b. That is, the switching signals Ssw, the vertical synchronizing signal Sv, the calibrating signal Scal, the information signal Sda, and line signals ranging from a 42-line signal to a half of a 556-line signal are recorded in the first even-numbered track, and the switching signal Ssw, the vertical synchronizing signals Sv, the calibrating signal Scal, and line signals ranging from the other half of the 556-line signal to a 1118-line signal are recorded in the second even-numbered track. In contrast, the first recorded TCI signal Scr2 pertaining to odd-numbered lines is recorded in a first odd-numbered track of the magnetic tape MT with the first magnetic head 112b and is recorded in a second odd-numbered track of the magnetic tape MT with the first magnetic head 112a. That is, the switching signals Ssw, the vertical synchronizing signal Sv, the calibrating signal Scal, the information signal Sda, and line signals ranging from a 43-line signal to a half of a 557-line signal are recorded in the first odd-numbered track, and the switching signal Ssw, the vertical synchronizing signals Sv, the calibrating signal Scal, and line signals ranging from the other half of the 557-line signal to a 1119-line signal are recorded in the second odd-numbered track. The recordings with the magnetic heads 113a, 112b arranged adjacent to each other are simultaneously performed, and the recordings with the magnetic heads 113b, 112a arranged adjacent to each other are simultaneously performed.

Accordingly, the audio signal and the first and second recorded TCI signals Sr1, Sr2 equivalent to a frame of picture signal can be recorded in the magnetic tape MT.

The pattern of the first and second recorded TCI signals Sr1, Sr2 recorded on the magnetic tape MT is not limited to that shown in Fig. 7. That is, in cases where the positional relationship in the heights of the magnetic heads attached to the rotational drum 115 is suitably adjusted, as shown in Fig. 8, a pattern of the first and second recorded TCI signals Sr1, Sr2 recorded on the magnetic tape MT can be obtained.

In case of the second recording mode, a running speed of the magnetic tape MT is set to a low speed equal to 1/3 of a standard speed at which the magnetic tape MT is run in case of the first recording mode, and the first recorded TCI signal Sr1 is recorded on the magnetic tape MT with the first magnetic heads 112a, 112b. Also, an audio signal is recorded on a deeper layer of the magnetic tape MT with the fourth magnetic heads 116a, 116b preceding the first magnetic heads 112a, 112b.

In the second recording mode, the first magnetic heads 112a, 112b are utilized. However, it is applicable that the second magnetic heads 113a, 113b be utilized in place of the first magnetic heads 112a, 112b.

In case of the third recording mode, the first and second normal picture signals Saa, Sbb pertaining to the first and second programs are recorded. In detail, the first recorded TCI signal Sr1 pertaining to the first program is recorded on the first and second odd-numbered tracks of the magnetic tape MT with the first magnetic heads 112a, 112b at the standard running speed of the magnetic tape MT which is the same as in the first recording mode, and the second recorded TCI signal Sr2 pertaining to the second program is recorded on the first and second even-numbered tracks of the magnetic tape MT with the second magnetic heads 113a, 113b at the standard running speed of the magnetic tape MT. Also, an audio signal is recorded on a deeper layer of the magnetic tape MT with the fourth magnetic heads 116a, 116b preceding the first and second magnetic heads 112a, 112b, 113a, 113b. Therefore, the first and second programs can be recorded on the magnetic tape MT at a high quality.

In case of the fourth recording mode, the recording signal Sr3 produced in the conventional recording means 109 is recorded on the magnetic tape MT with the third magnetic heads 114a, 114b of which head widths are respectively 3 times that of the first or second magnetic head.

Accordingly, in cases where the HD input signal Sin is recorded on the magnetic tape MT, the first and second color difference line signals PRaai, PBaai are deleted on every other scanning line to limit a frequency band occupied by the first and second color difference line signals PRaai, PBaai within a prescribed frequency band. In contrast, in cases where the first normal picture signal Saa and/or the second normal picture signal Sbb are recorded on the magnetic tape MT, any of the color difference line signals PRaai, PBaai, PRbbi, PBbbi is not deleted because the number of horizontal scanning lines in the first normal picture signal Saa and/or the second normal picture signal Sbb is almost half of that in the HD input signal Sin. Therefore, even though any of the HD input signal Sin, the first normal picture signal Saa and the second normal picture signal Sbb is processed in the picture signal recording apparatus 101, the signal Sin, Saa or Sbb can be recorded on the magnetic tape MT without optically degrading a vertical resolution of the first and second color difference signals PR and PB, PRaa and PBaa, or PRbb and PBbb within the prescribed frequency band limited.

Also, because a first time-compressed ratio (6/1) of the color difference signal PRaa, PBaa, PRbb or PBbb to the luminance signal Yaa or Ybb in the recording TCI signal Sr1 or Sr2 shown in Fig. 2(I) is larger than a second time-compressed ratio (3/1) of the color difference signal PR or PB to the luminance signal Y in the recording TCI signal Sr1 or Sr2 shown in Fig. 2(D) or 2(E), a frequency band ratio of the color difference signal to the luminance signal can be set to an appropriate ratio for domestic use in comparison that the first time-compressed ratio is the same as the second time-compressed ratio. Therefore, a high quality of picture signal can be recorded on the magnetic tape MT regardless of whether the HD input signal or the first or second normal picture signal is input to the picture signal recording apparatus 101.

Next, an operation performed in the recording mode determining section 104 is described with reference to Figs. 9-13.

The picture signal recording apparatus 101 is operated according to a recording mode selected from among the first recording mode in which the HD input signal Sin is recorded on a metal tape at a standard recording speed, the second recording mode in which an NTSC signal represented by the first normal picture signal Saa is recorded on a metal tape at a low recording speed equal to 1/3 of the standard recording speed to store a program, and the third recording mode in which NTSC signals represented by the first and second normal picture signals Saa, Sbb are recorded on a metal tape at the standard recording speed to store two programs. In the recording mode determining section 104, the recording mode is determined by detecting the luminance signal Y of the HD input signal Sin. In cases where the luminance signal Y is detected, the first recording mode is adopted to select the HD input signal Sin in preference to the first normal picture signal Saa in the first selecting means 102. Also, in cases where the luminance signal Y is not detected, the second or third recording mode is adopted to select the first normal picture signal Saa in the first selecting means 102 and select the second normal picture signal Sbb in the second selecting means 107.

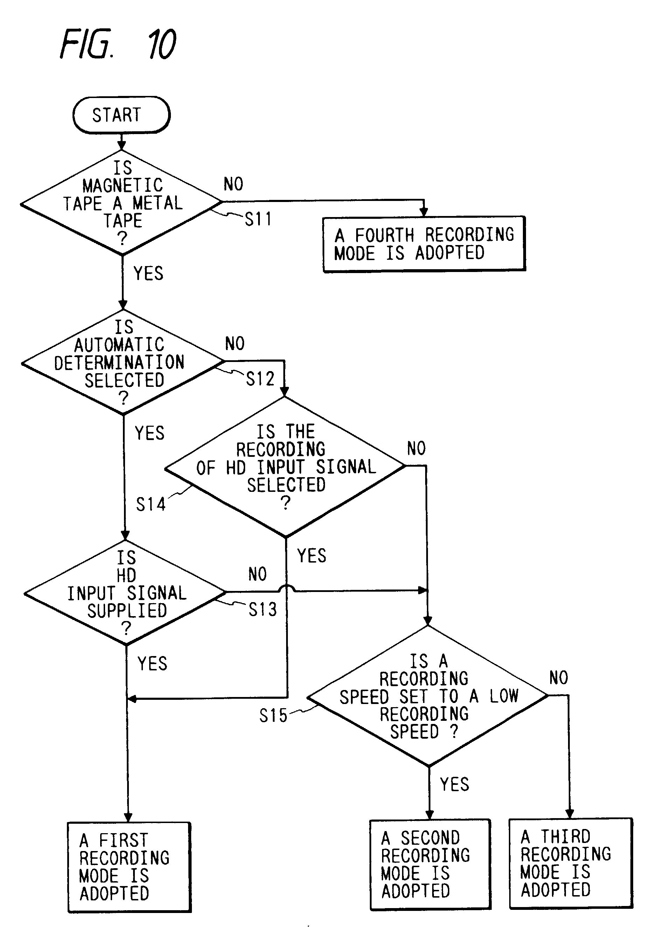

Fig. 9 is a block diagram of the recording mode determining section 104 shown in Fig. 1. Fig. 10 is a flow chart showing an operation performed in the recording mode determining section 104 to determine a recording mode selected from among the first to third recording modes.

As shown in Fig. 9, the recording mode determining section 104 comprises a distinguishing portion detecting means 121 for detecting a distinguishing portion attached to a tape cassette of the magnetic tape MT to distinguish a type of the magnetic tape MT, an automatic/manual selecting means 122 for selecting either an automatic selection of a recording mode or a manual selection of a recording mode, an input signal detecting means 123 for detecting the luminance signal Y of the HD input signal Sin transferred through a luminance signal line Ls in cases where the automatic selection is selected in the automatic/manual selecting means 122, an input signal selecting means 124 for selecting either the recording of the HD input signal Sin or the recording of the NTSC signal represented by the first or second picture signal Saa or Sbb according to an instruction of an operator in cases where the manual selection is selected in the automatic/manual selecting means 122, a recording speed selecting means 125 for selecting either the normal speed or the low recording speed as a running speed of the magnetic tape MT, a recording mode determining means 126 for determining a type of the magnetic tape MT according to a detecting result of the distinguishing portion detecting means 121, distinguishing the selection performed in the automatic/manual selecting means 122, judging whether or not the HD input signal Sin is supplied to the picture signal recording apparatus 101 according to a detecting result of the input signal detecting means 123, judging whether the recording of the HD input signal Sin or the recording of the NTSC signal is selected in the input signal selecting means 124, and distinguishing either the standard or low recording speed selected in the recording speed selecting means 125, to determine a recording mode from among the first to third recording modes, a servo means 127 for controlling a running speed of the magnetic tape MT in a recording operation according to the selection performed in the recording speed selecting means 125 and generating a frame period of control signal to control a running speed of the magnetic tape MT in a reproducing operation, a control modulation means 128 for modulating the control signal generated in the servo means 127 to produce a recording control signal which is obtained by changing a duty ratio of the control signal to multiplex the recording mode determined in the recording mode determining means 126 with the running speed indicated by the control signal, and a fifth magnetic head 129 through which the recording control signal obtained in the control modulation means 128 is recorded on a control track of the magnetic tape MT to record the running speed of the magnetic tape MT and the recording mode multiplexed.

In the above configuration of the recording mode determining section 104, as shown in Fig. 10, when an operator instructs the recording mode determining section 104 to determine a recording mode selected from among the first to third recording modes, a type of the magnetic tape MT is distinguished in the recording mode determining means 126 in a step S11. In detail, a distinguishing portion attached to a tape cassette of the magnetic tape MT informs of the type of the magnetic tape MT. For example, the distinguishing portion denotes the position of a detecting hole arranged at a bottom surface of the tape cassette, and the position of the detecting hole is determined in dependence on a type of the magnetic tape MT. Therefore, the distinguishing portion is detected in the distinguishing portion detecting means 121, and a distinguishing portion detecting signal Sd1 is transferred to the recording mode determining means 126 to inform the type of the magnetic tape MT. Thereafter, the type of the magnetic tape MT is distinguished according to the distinguishing portion detecting signal Sd1. In cases where the type of the magnetic tape MT is judged in the recording mode determining means 126 to be a metal tape belonging to a super high performance recording medium, the procedure proceeds to a step S12. In contrast, in cases where the type of the magnetic tape MT is judged to be a S-VHS type of tape belonging to a high performance recording medium or a VHS type of tape belonging to a normal recording medium, the fourth recording mode is adopted in a conventional recording mode determining means (not shown), and the picture signal recording apparatus 101 is operated according to the fourth recording mode.

In the step S12, it is judged in the recording mode determining means 126 whether an automatic determination of a recording mode or a manual determination of a recording mode is selected in the automatic/manual selecting means 122. In detail, when an operator selects either an automatic determination of a recording mode or a manual determination of a recording mode in the automatic/manual selecting means 122, a first selecting signal Ss1 is transferred to the recording mode determining means 126 and the input signal selecting means 124. Thereafter, the selection performed in the automatic/manual selecting means 122 is judged according to the first selecting signal Ss1. In cases where the automatic determination is selected in the automatic/manual selecting means 122, the procedure proceeds to a step S13. In contrast, in cases where the manual determination is selected in the automatic/manual selecting means 122, the procedure proceeds to a step S14.

In the step S13, it is judged in the recording mode determining means 126 whether the HD input signal Sin or the NTSC signal is supplied to the picture signal recording apparatus 101. In detail, it is detected in the input signal detecting means 123 whether or not the luminance signal Y of the HD input signal Sin is transferred to the first selecting means 102 through the luminance signal line Ls. For example, in cases where an integrated value of amplitudes of signals transferred through the luminance signal line Ls is larger than a prescribed threshold or in cases where a synchronizing signal transferred through the luminance signal line Ls is detected, a detecting signal Sd2 is transferred from the input signal detecting means 123 to the recording mode determining means 126 to inform the detection of the HD input signal Sin. Thereafter, it is judged in the recording mode determining means 126 that the HD input signal Sin is detected in the input signal detecting means 123. In cases where it is judged that the HD input signal Sin is detected, the first recording mode is adopted in the recording mode determining means 126, and a recording mode signal Srm indicating the first recording mode adopted in the determining means 126 is transferred from the determining means 126 to the servo means 127 and the control modulation means 128 to operate the picture signal recording apparatus 101 according to the first recording mode. In contrast, in cases where it is judged that the HD input signal Sin is not detected, the procedure proceeds to a step S15.

In the input signal detecting means 123, the luminance signal Y is detected. However, it is applicable that the first or second color difference signal PR or PB be detected in place of the luminance signal Y. Also, it is applicable that the detection of the HD input signal Sin be judged in cases where the luminance signal Y and the first and second color difference signals PR, PB are detected together. Also, a broadcast utilizing the HD signal is performed by transmitting a MUSE signal through a broadcasting satellite in a MUSE signal mode, and a receiving detection signal indicating whether or not the MUSE signal is received in a broadcasting satellite (BS) tuner of the picture signal recording apparatus 101 is output. Therefore, it is applicable that the receiving detection signal be transferred to the input signal detecting means 123 to detect the HD input signal Sin. In this case, even though the HD input signal Sin is not supplied to the picture signal recording apparatus 101, the detecting signal Sd2 indicating the detection of the HD input signal Sin is transferred to the recording mode determining means 126 in cases where the receiving detection signal indicating the detection of the HD input signal Sin is transferred to the input signal detecting means 123.

In the step S14, it is judged whether or not the recording of the HD input signal Sin on the magnetic tape MT is selected. In detail, when an operator selects either the recording of the HD input signal Sin or the recording of the NTSC signal in the input signal selecting means 124, a second selecting signal Ss2 is transferred from the selecting means 124 to the recording mode determining means 126 to inform of a type of signal recorded on the magnetic tape MT. Thereafter, the operator's selection is judged in the recording mode determining means 126 according to the second selecting signal Ss2. In cases where the second selecting signal Ss2 indicates the recording of the HD input signal Sin, it is judged in the determining means 126 that the recording of the HD input signal Sin is selected by the operator, and the picture signal recording apparatus 101 is operated according to the first recording mode which is substantially selected by the operator. In contrast, in cases where the second selecting signal Ss2 indicates the recording of the NTSC signal, it is judged in the determining means 126 that the recording of the NTSC signal is selected by the operator, and the procedure proceeds to the step S15.

In the input signal selecting means 124, either the recording of the HD input signal Sin or the recording of the NTSC signal is selected. However, it is applicable that a signal be selected from among the HD input signal Sin, the NTSC signal and an extended definition television (EDTV) signal to record the selected signal on the magnetic tape MT.

In the step S15, it is judged whether a recording speed is set to the normal recording speed or the low recording speed. In detail, either the normal recording speed or the low recording speed is selected in the recording speed selecting means 125, and a third selecting signal Ss3 is transferred from the selecting means 125 to the recording mode determining means 126 to inform of the recording speed selected. In the determining means 126, the recording speed selected in the recording speed selecting means 125 is distinguished. In cases where the low recording mode is selected, the second recording mode is adopted in the determining means 126, and a recording mode signal Srm indicating the second recording mode adopted in the distinguishing means 126 is transferred from the determining means 126 to the servo means 127 and the control modulation means 128 to operate the picture signal recording apparatus 101 according to the second recording mode. In contrast, in cases where the standard recording mode is selected, the third recording mode is adopted in the determining means 126, and a recording mode signal Srm indicating the third recording mode adopted in the determining means 126 is transferred from the determining means 126 to the servo means 127 and the control modulation means 128 to operate the picture signal recording apparatus 101 according to the third recording mode.

Accordingly, a recording mode selected from among the first to third recording modes can be reliably determined in the recording mode determining means 126.

Thereafter, in the servo means 127, a running speed of the magnetic tape MT is controlled according to the recording mode signal Srm in which a piece of recording speed information is included. Also, a control signal Sc1 indicating a frame period of an input signal Sin, Saa or Sbb recorded on the magnetic tape MT is generated according to the recording mode signal Srm and is transferred to the control modulation means 128.

In the control modulation means 128, a duty ratio of the control signal Sc1 is modulated according to the recording mode signal Srm to produce a recording control signal Src of which a duty ratio differs from that of the control signal Sc1. The recording control signal Src and the recording mode signal Srm are recorded on a control track (not shown) of the magnetic tape MT through the fifth magnetic head 129. The control track is formed in a longitudinal direction of the magnetic tape MT.

An object in the modulation of the control signal Sc1 is described with reference to Figs. 11, 12.

The control signal Sc1 is utilized as a reference signal for a capstan servo in a reproduction period to control the running speed of the magnetic tape MT. In this case, the recording speed information included in the control signal Sc1 is indicated by a leading edge of the control signal Sc1, and a trailing edge of the control signal Sc1 has no relation with the recording speed information. In other words, even though the duty ratio of the control signal Sc1 is changed according to a modulation, the recording speed information is not changed. Therefore, the duty ratio of the control signal Sc1 is changed to record a piece of prescribed information on the magnetic tape MT as a conventional art.

Fig. 11A shows a wave form of the recording control signal Src in which a high level period is set to X% to designate a code "0". Fig. 11B shows a wave form of the recording control signal Src in which a high level period is set to Y% to designate a code "1". Fig. 12A shows a relationship between a recording mode determined in the recording mode determining means 126 and a code indicated by the recording control signal Src. Fig. 12B shows another relationship between a recording mode determined in the recording mode determining means 126 and a code indicated by the recording control signal Src.

As shown in Figs. 11A, 12A, in cases where the control signal Sc1 is modulated according to the recording mode signal Srm indicating the first or second recording mode, the recording control signal Src in which a high level period is set to X% is produced to designate a code "0". Therefore, the recording control signal Src recorded on the magnetic tape MT in case of the first recording mode is the same as that in case of the second recording mode. A distinguishing method of a recording mode between the first and second recording modes in a reproducing operation is as follows. Because the recording speed of the recording control signal Src in case of the first recording mode differs from that in case of the second recording mode, a density of the recording control signal Src reproduced from the magnetic tape MT in case of the first recording mode differs from that in case of the second recording mode. Therefore, in cases where a density of the recording control signal Src is detected in a reproducing operation, the first and second recording modes can be distinguished.

Also, as shown in Figs. 11B, 12A, in cases where the control signal Sc1 is modulated according to the recording mode signal Srm indicating the third recording mode, the recording control signal Src in which a high level period is set to Y% is produced to designate a code "1". In this case, the value X is larger than the value Y. As an example, a relationship of X=60 and Y=27.5 is utilized. Therefore, in cases where the recording control signal Src indicating a code "1" is recorded in the control track of the magnetic tape MT, the first and second normal picture signals Saa, Sbb can be recorded according to the third recording mode under control of the recording control signal Src recorded.

Accordingly, three types of recording modes can be distinguished by a single bit of the recording control signal Src, and the number of bits required in the apparatus 101 can be reduced.

Also, in cases where an EDTV signal is supplied to the apparatus 101 in addition to the HD input signal Sin to record the EDTV signal according to a fifth recording mode, as shown in Fig. 12B, a code utilized to distinguish a recording mode from among the first, second, third and fifth recording modes is indicated by two bits. Also, in cases where one or more other recording modes are added, it is applicable that a code be indicated by three or more bits.

Next, a determining operation performed in the recording mode determining section 104 on condition that the third recording mode is not utilized.

Fig. 13 is a flow chart showing an operation performed in the recording mode determining section 104 to adopt the first or second recording mode.

As shown in Fig. 13, the procedure proceeds to the steps S11, S12, S13 and S14 in the same manner as the procedure shown in Fig. 10, and the first recording mode is adopted in the steps S13, S14 in the same manner. Also, in cases where it is judged in the step S13 that the HD input signal Sin is not detected, the second recording mode is adopted in the determining means 126, and the picture signal recording apparatus 101 is operated according to the second recording mode. Also, in cases where it is judged in the step S14 that the recording of the NTSC signal is selected, the second recording mode is adopted in the determining means 126, and the picture signal recording apparatus 101 is operated according to the second recording mode. Thereafter, a recording mode signal Srm indicating the second recording mode adopted in the determining means 126 is transferred to the servo means 127 and the control modulation means 128, and a recording control signal Src and the recording mode signal Srm is recorded in the same manner.

Accordingly, because the input of the HD input signal Sin to the picture signal recording apparatus 101 is detected in the input signal detecting means 123, the HD input signal Sin is necessarily recorded on the magnetic tape MT regardless of whether the first or second normal picture signal Saa or Sbb is input to the recording apparatus 101. In other words, the HD input signal Sin utilized to record a program at a high quality can be recorded prior to the first or second normal picture signal Saa or Sbb utilized to record a program at a normal quality when the HD input signal Sin and the first or second normal picture signal Saa or Sbb are simultaneously input to the recording apparatus 101. Therefore, in cases where a program pertaining to the HD input signal Sin is the same as that pertaining to the first or second normal picture signal Saa or Sbb, the HD input signal Sin can be selected prior to the first or second normal picture signal Saa or Sbb to record the program at a high quality.

Also, because a recording mode adopted in the picture signal recording apparatus 101 is determined in the recording mode determining section 104, a picture signal selected can be recorded at an appropriate recording speed corresponding to a frequency band of the picture signal. In particular, in cases where the first normal picture signal Saa is to be recorded at the low recording speed according to the second recording mode, there is no probability that the first normal picture signal Saa is erroneously recorded at the standard recording speed 3 times higher than the low recording speed. Therefore, a utilization efficiency of the magnetic tape MT can be enhanced.

Also, because the recording mode signal Srm indicating a recording mode and a recording speed is recorded on the control track of the magnetic tape MT through the fifth magnetic head 129, the recording mode and the recording speed selected in the recording apparatus 101 can be detected in a reproducing operation.

Also, because a recording mode selected in the recording apparatus 101 is recorded on the control track of the magnetic tape MT with the recording control signal Src which is mainly utilized to control a running speed of the magnetic tape MT, an additional mode recording area for the recording of the recording mode selected is not required. Therefore, a utilization efficiency of the magnetic tape MT can be enhanced.

Also, because the input signal selecting means 124 is provided in the determining section 104 to manually select either the recording of the HD input signal Sin or the recording of the first or second picture signal Saa or Sbb, the first or second picture signal Saa or Sbb can be recorded on the magnetic tape MT according to an instruction of an operator when the HD input signal Sin and the first or second picture signal Saa or Sbb are input to the recording apparatus 101. Therefore, even though a recording capacity of the magnetic tape MT is small, the first or second picture signal Saa or Sbb can be selectively recorded for a long time because the first or second picture signal Saa or Sbb is recorded at the low recording speed.

Also, because the recording apparatus 101 can be operated according to the third recording mode, two types of normal picture signals pertaining to two different programs can be simultaneously recorded on the magnetic tape MT at the standard recording speed.

In the above embodiment, the relationship among the period P3 of the first color difference signal PRaa compressed, the period P4 of the second color difference signal PBaa compressed, and the period P5 of the luminance signal Yaa compressed is set to P3:P4:P5 = 1:1:6. However, the relationship is not limited to P3:P4:P5 = 1:1:6 in the present invention. For example, in cases where a picture signal pertaining to computer graphics is recorded on the magnetic tape MT, it is preferred that the relationship be set to P3:P4:P5 = 1.6:1.6:4.8 because the color difference signals PR, PB of the picture signal ranges in a wide frequency band. In this case, it is preferred that frequency bands of the first color difference signal PR, the second color difference signal PB and the luminance signal Y be set to 1.6 MHz, 1.6 MHz and 4.8 MHz to balance the frequency bands of the luminance signal Y and the color difference signals PR, PB.

Next, a picture signal reproducing apparatus for reproducing the HD input signal Sin, the first normal picture signal Saa or the second normal picture signal Sbb recorded on the magnetic tape MT is described.

Fig. 14 is a block diagram of a picture signal reproducing apparatus.

As shown in Fig. 14, in cases where the HD input signal Sin, the first normal picture signal Saa or the second normal picture signal Sbb recorded on the magnetic tape MT according to the first, second or third recording mode is reproduced in a picture signal reproducing apparatus 151, the HD input signal Sin, the first normal picture signal Saa or the second normal picture signal Sbb recorded is read out from the magnetic tape MT with the first magnetic heads 112a, 112b and the second magnetic heads 113a, 113b to produce a pair of reproduced signals Sre1, Sre2. Thereafter, the reproduced signals Sre1, Sre2 are demodulated according to a frequency modulation (FM) in a first demodulating means 152a and a second demodulating means 152b to produce first and second reproduced TCI signals Sre3, Sre4. Thereafter, the first and second reproduced TCI signals Sre3, Sre4 are digitized in a first analogue-to-digital (A/D) converter 153a and a second analogue-to-digital (A/D) converter 153b and are transferred to a reproduction processing means 154 which is complementary to the recording processing means 106. The first reproduced TCI signal Sre3 digitized is equivalent to the first recording TCI signal Sr1, and the second reproduced TCI signal Sre4 digitized is equivalent to the second recording TCI signal Sr2. Also, the first reproduced TCI signal Sre3 is transferred to a reproducing mode determining section 181 to determine a reproducing mode of the HD input signal Sin by distinguishing the recording mode, the first normal picture signal Saa or the second normal picture signal Sbb recorded on the magnetic tape MT according to the first to third recording mode. That is, a first reproducing mode is adopted in the determining section 181 in case of the recording of the HD input signal Sin according to the first recording mode, a second reproducing mode is adopted in the determining section 181 in case of the recording of the first normal picture signal Saa according to the second recording mode, and a third reproducing mode is adopted in the determining section 181 in case of the recording of the first and second normal picture signals Saa, Sbb according to the third recording mode.

In contrast, in cases where the second normal picture signal Sbb recorded on the magnetic tape MT according to the fourth recording mode is reproduced in the picture signal reproducing apparatus 151, the second normal picture signal Sbb recorded is read to a conventional reproducing means 155 with the third magnetic heads 114a, 114b. In the conventional reproducing means 155, the second normal picture signal Sbb reproduced is divided into a frequency-modulated luminance signal and a pair of low band converted color signals. The frequency-modulated luminance signal ranges within a relatively high frequency band and is processed according to a frequency modulation (FM) and a deemphasis to produce a reproduced luminance signal. The low band converted color signals range within a relatively low frequency band and are processed according to a high frequency conversion to produce a pair of reproduced color signals. The reproduced luminance signal and the reproduced color signals are added to reproduce the second normal picture signal Sbb, and the second normal picture signal Sbb reproduced is transferred to a transmission path (not shown) through a second selecting means 156.

Next, a reproduction processing of the first and second reproduced TCI signals Sre3, Sre4 performed in the reproduction processing means 154 is described in detail with reference to Fig. 15.

Fig. 15 is a block diagram of the reproduction processing means 154.

As shown in Fig. 15, the reproduction processing means 154 comprises a pair of reproduction processing units 161a, 161b for alternately writing and reading the first and second reproduced TCI signals Sre3, Sre4 digitized to alternately reproduce the HD input signal Sin, the first normal picture signal Saa, or the second normal picture signal Sbb, a switching circuit 162 for alternately receiving the luminance signal Y or Yaa of the HD input signal Sin or the first normal picture signal Saa from the reproduction processing units 161a, 161b to successively produce the luminance signal Y or Yaa, a switching circuit 163 for alternately receiving the first color difference signal PR or PRaa of the HD input signal Sin or the first normal picture signal Saa from the reproduction processing units 161a, 161b to successively produce the first color difference signal PR or PRaa, a switching circuit 164 for alternately receiving the second color difference signal PB or PBaa of the HD input signal Sin or the first normal picture signal Saa from the reproduction processing units 161a, 161b to successively produce the second color difference signal PB or PBaa, a switching circuit 165 for alternately receiving the luminance signal Ybb of the second normal picture signal Sbb from the reproduction processing units 161a, 161b to successively produce the luminance signal Ybb, a switching circuit 166 for alternately receiving the first color difference signal PRbb of the second normal picture signal Sbb from the reproduction processing units 161a, 161b to successively produce the first color difference signal PRbb, and a switching circuit 167 for alternately receiving the second color difference signal PBbb of the second normal picture signal Sbb from the reproduction processing units 161a, 161b to successively produce the second color difference signal PBbb.

Each of the processing units 161a, 161b comprises a memory region 168 having six field memories M1 to M6 for storing either the luminance line signals Yk (k is an odd number) pertaining to odd-numbered scanning lines or the luminance line signals Yaai (i=1,2,--) of the first reproduced TCI signal Sre3 in the field memory M1, storing either the first color difference line signals PRk pertaining to odd-numbered scanning lines or the first color difference signal PRaai (i=1,2,--) of the first reproduced TCI signal Sre3 in the field memory M2, storing either the second color difference line signals PBk pertaining to odd-numbered scanning lines or the second color difference signal PBaai (i=1,2,--) of the first reproduced TCI signal Sre3 in the field memory M3, storing either the luminance line signals Yj (j is an even number) pertaining to even-numbered scanning lines or the luminance line signals Ybbi (i=1,2,--) of the second reproduced TCI signal Sre4 in the field memory M4, storing either the first color difference line signals PRj pertaining to even-numbered scanning lines or the first,color difference signal PRbbi (i=1,2,--) of the second reproduced TCI signal Sre4 in the field memory M5, and storing either the second color difference line signals PBj pertaining to even-numbered scanning lines or the second color difference signal PBbbi (i=1,2,--) of the second reproduced TCI signal Sre4 in the field memory M6, a switching circuit 169 for selecting either the first color difference line signals PRj or PRbbi to write the selected line signals to the field memory M5, a switching circuit 170 for selecting either the second color difference line signals PBk or PBaai to write the selected line signals to the field memory M3, a switching circuit 171 for selecting either the luminance line signals Yk or Yaai read from the field memory M1 or the luminance line signals Yj or Ybbi read from the field memory M4, a switching circuit 172 for selecting either the first color difference line signals PRk or PRaai read from the field memory M2 or the first color difference line signals PRj or PRbbi read from the field memory M5, and a switching circuit 173 for selecting either the second color difference line signals PBk or PBaai read from the field memory M3 or the second color difference line signals PBj or PBbbi read from the field memory M6.

Writing and reading operations in the processing unit 161a are performed independent of those in the processing unit 161b. That is, though a period of two scanning lines in the HD input signal Sin is shorter than that of a scanning line in the normal picture signal Saa or Sbb, an additional memory capacity is provided to each of the field memories M1 to M6 to avoid an adverse influence resulting from the difference between the periods. Also, the writing operation of the reproduced TCI signals Sre3, Sre4 is performed in synchronization with a writing clock which is generated according to a horizontal synchronizing signal separated from the reproduced TCI signals Sre3, Sre4, and the reading operation of the line signals is performed in synchronization with a reading clock of which a cycle is the same as that of the writing clock. That is, a frequency component of the writing clock is the same as that of the reading clock.

In the above configuration of the reproduction processing means 154, the reproduction of the HD input signal Sin recorded in the magnetic tape MT according to the first recording mode is initially described.

The luminance line signals Yk pertaining to odd-numbered scanning lines of the first reproduced TCI signal Sre3 are written in the field memory M1, and the luminance line signals Yj pertaining to even-numbered scanning lines of the second reproduced TCI signal Sre4 are written in the field memory M4. Also, the first color difference line signals PRk pertaining to odd-numbered scanning lines of the first reproduced TCI signal Sre3 are written in the field memory M2 and are written as even-numbered first color difference line signals PRj (PR2, PR4,--) in the field memory M5 through the switching circuit 169. Also, the second color difference line signals PBj pertaining to even-numbered scanning lines of the second reproduced TCI signal Sre4 are written in the field memory M6 and are written as odd-numbered second color difference line signals PBk (PB1, PB3,--) in the field memory M3 through the switching circuit 170.

In this case, it is applicable that the even-numbered first color difference line signal PRj written in the field memory M5 be determined as an average of the line signals $PR_{j-1}$, $PR_{j+1}$. Also, it is applicable that the odd-numbered second color difference line signal PBk written in the field memory M3 be determined as an average of the line signals $PB_{k-1}$, $PB_{k+1}$. That is, as shown in Fig. 16, the first color difference line signals $PR_{j-1}$, $PR_{j+1}$ of the first reproduced TCI signal Sre3 are transferred to a first calculating means 174 to calculate the average of the line signals $PR_{j-1}$, $PR_{j+1}$, and the average is written as the even-numbered first color difference line signal $PR_j$ in the field memory M5 through a switching circuit 175. The first color difference line signals PRi pertaining to odd-numbered scanning lines of the first reproduced TCI signal Sre3 are written in the field memory M2 through a switching circuit 176. Also, the second color difference line signals $PB_{k-1}$, $PB_{k+1}$ of the second reproduced TCI signal Sre4 are transferred to a second calculating means 177 to calculate the average of the line signals $PB_{k-1}$, $PB_{k+1}$, and the average is written as the odd-numbered second color difference line signal $PB_k$ in the field memory M3 through a switching circuit 178. The second color difference line signals PBi pertaining to even-numbered scanning lines of the second reproduced TCI signal Sre4 are written in the field memory M6 through a switching circuit 179.

Thereafter, the luminance line signals Yk pertaining to odd-numbered scanning lines written in the field memory M1 and the luminance line signals Yj pertaining to even-numbered scanning lines written in the field memory M4 are transferred to the switching circuit 171 and are alternately selected to produce a series of luminance line signals Yi (Y1, Y2, Y3,--). The series of luminance line signals Yi is transferred to the switching circuit 162. In the switching circuit 162, another series of luminance line signals Yi transferred from the processing unit 161b is also received, and the luminance line signals Yi are combined to produce a combined luminance signal. Thereafter, the combined luminance signal is transferred to a synchronizing signal adding means (not shown). In the synchronizing signal adding means, a synchronizing signal pertaining to an HD signal is added to the combined luminance signal to produce a luminance signal Y. Also, the first color difference line signals PRk pertaining to odd-numbered scanning lines written in the field memory M2 and the even-numbered first color difference line signal PRj written in the field memory M5 are transferred to the switching circuit 172 and are alternately selected to produce a series of first color difference line signals PRi (PR1, PR2, PR3,--). The series of first color difference line signals PRi is transferred to the switching circuit 163. In the switching circuit 163, another series of first color difference line signals PRi transferred from the processing unit 161b is also received, and the first color difference line signals PRi are combined to produce a combined first color difference signal. Thereafter, the combined first color difference signal is transferred to the synchronizing signal adding means. In the synchronizing signal adding means, a synchronizing signal pertaining to an HD signal is added to the combined first color difference signal to produce a second color difference signal PR.

Also, the second color difference line signals PBj pertaining to even-numbered scanning lines written in the field memory M6 and the odd-numbered second color difference line signal PBk written in the field memory M3 are transferred to the switching circuit 173 and are alternately selected to produce a series of second color difference line signals PBi (PB1, PB2, PB3,--). The series of second color difference line signals PBi is transferred to the switching circuit 164. In the switching circuit 164, another series of second color difference line signals PBi transferred from the processing unit 161b is also received, and the second color difference line signals PBi are combined to produce a combined second color difference signal. Thereafter, the combined second color difference signal is transferred to the synchronizing signal adding means. In the synchronizing signal adding means, a synchronizing signal pertaining to an HD signal is added to the combined second color difference signal to produce a second color difference signal PB.

Thereafter, the luminance signal Y produced in the reproduction processing means 154 is converted in a digital-to-analogue (D/A) converter 157a and is transferred to a first selecting means 158, the first color difference signal PR is converted in a digital-to-analogue (D/A) converter 157b and is transferred to the first selecting means 158, and the second color difference signal PB is converted in a digital-to-analogue (D/A) converter 157c and is transferred to the first selecting means 158.

In cases where the HD input signal Sin is reproduced by processing the recorded TCI signals Sr1, Sr2 of which the first and second color difference line signals PRi, PBi are generated according to the modified method shown in Fig. 3B, each of pixels placed in a horizontal scanning line is alternately selected as a sampling point S1 and a sampling point S2. Therefore, as shown in Fig. 17, there is a sampling point S0 not selected to generate a color difference line signal PRi or PBi. The sampling point S0 is surrounded by sampling points S1, S2, S3 and S4 selected to generate a color difference line signal PRi or PBi. In this case, a piece of picture information IS0 indicated by the sampling point S0 is calculated by utilizing pieces of picture information IS1, IS2, IS3 and IS4 according to an equation;

$$IS0 = (IS1 + IS2 + IS3 + IS4)/4.$$

The averaging calculation for generating a first color difference line signal PRi is performed in the calculating means 174 shown in Fig. 16, and the averaging calculation for generating a second color difference line signal PBi is performed in the calculating means 177 shown in Fig. 16.

Next, the reproduction of the first normal picture signal Saa recorded in the magnetic tape MT according to the second recording mode is described with reference to Fig. 15.

The luminance line signals Yaai pertaining to the first reproduced TCI signal Sre3 are written in the field memory M1, the first color difference line signals PRaai pertaining to the first reproduced TCI signal Sre3 are written in the field memory M2, and the second color difference line signals PBaai pertaining to the first reproduced TCI signal Sre3 are written in the field memory M3 through the switching circuit 170. Thereafter, the luminance line signals Yaai written in the field memory M1 are read to the switching circuit 162 through the switching circuit 171, the first color difference line signals PRaai written in the field memory M2 are read to the switching circuit 163 through the switching circuit 172, and the second color difference line signals PBaai written in the field memory M3 are read to the switching circuit 164 through the switching circuit 173. In the switching circuit 162, other luminance line signals Yaai transferred from the processing unit 161b are also received, and the luminance line signals Yaai and the other luminance line signals Yaai are combined to produce a combined luminance signal. Thereafter, the combined luminance signal is transferred to the synchronizing signal adding means, and a synchronizing signal pertaining to a normal picture signal is added to the combined luminance signal to produce the luminance signal Yaa. In the switching circuit 163, other first color difference line signals PRaai transferred from the processing unit 161b are also received, and the first color difference line signals PRaai and the other first color difference line signals PRaai are combined to produce a combined first color difference signal. Thereafter, the combined first color difference signal is transferred to the synchronizing signal adding means, and a synchronizing signal pertaining to a normal picture signal is added to the combined first color difference signal to produce the first color difference signal PRaa. In the switching circuit 164, other second color difference line signals PBaai transferred from the processing unit 161b are also received, and the second color difference line signals PBaai and the other second color difference line signals PBaai are combined to produce a combined second color difference signal. Thereafter, the combined second color difference signal is transferred to the synchronizing signal adding means, and a synchronizing signal pertaining to a normal picture signal is added to the combined second color difference signal to produce the second color difference signal PBaa.

Thereafter, the luminance signal Yaa produced in the reproduction processing means 154 is converted in the D/A converter 157a and is transferred to the first selecting means 158, the first color difference signal PRaa is converted in the D/A converter 157b and is transferred to the first selecting means 158, and the second color difference signal PBaa is converted in the D/A converter 157c and is transferred to the first selecting means 158.

Next, the reproduction of the first and second normal picture signals Saa, Sbb recorded in the magnetic tape MT according to the third recording mode is described with reference to Fig. 15.

The luminance signal Yaa and the first and second color difference signals PRaa, PBaa pertaining to the first normal picture signal Saa are reproduced from the first reproduced TCI signal Sre3 digitized in the same manner. Also, the luminance line signals Ybbi pertaining to the second reproduced TCI signal Sre4 are written in the field memory M4, the first color difference line signals PRbbi pertaining to the second reproduced TCI signal Sre4 are written in the field memory M5 through the switching circuit 169, and the second color difference line signals PBbbi pertaining to the second reproduced TCI signal Sre4 are written in the field memory M6. Thereafter, the luminance line signals Ybbi written in the field memory M4 are read to the switching circuit 165, the first color difference line signals PRbbi written in the field memory M5 are read to the switching circuit 166, and the second color difference line signals PBbbi written in the field memory M6 are read to the switching circuit 167. In the switching circuits 165, 166, 167, other luminance line signals Ybbi and the first and second color difference line signals PRbbi, PBbbi transferred from the processing unit 161b are also received, and the luminance line signals Ybbi and the color difference line signals PRbbi, PBbbi transferred from the processing units 161a, 161b are respectively combined to produce a combined luminance signal, a combined first color difference signal and a combined second color difference signal. Thereafter, the combined signals are transferred to the synchronizing signal adding means, and a synchronizing signal pertaining to a normal picture signal is respectively added to the combined signals to produce the luminance signal Ybb, the first color difference signal PRbb and the second color difference signal PBbb. Thereafter, the luminance signal Ybb produced in the reproduction processing means 154 is converted in a digital-to-analugue (D/A) converter 157d and is transferred to a second encoder 160, the first color difference signal PRbb is converted in a digital-to-analogue (D/A) converter 157e and is transferred to the second encoder 160, and the second color difference signal PBbb is converted in an digital-to-analogue (D/A) converter 157f and is transferred to the second encoder 160.

Accordingly, the reproduction of the HD input signal Sin, the first normal picture signal Saa or the second normal picture signal Sbb recorded in the magnetic tape MT can be performed in the reproduction processing means 154 even though the signal Sin, Saa or Sbb is recorded according to any of the first, second and third recording mode.

Also, because the field memories M1 to M6 of the memory region 168 in the reproduction processing means 106 is the same as those of the memory region 134 in the recording processing means 106, the memory region 134 can be utilized as the memory region 168.

Thereafter, the luminance signal Y and the first and second color difference signals PR, PB transferred to the first selecting means 158 are respectively output to transmission paths (not shown) in cases where the reproducing apparatus 151 is operated according to the first reproducing mode corresponding to the first recording mode. Also, the luminance signal Yaa and the first and second color difference signals PRaa, PBaa transferred to the first selecting means 158 are respectively output to a first encoder 174 in cases where the reproducing apparatus 151 is operated according to the second or third reproducing mode corresponding to the second or third recording mode. In the first encoder 174, the luminance signal Yaa and the first and second color difference signals PRaa, PBaa are converted to a composite picture signal equivalent to the first normal picture signal Saa, and the composite picture signal is output to a transmission path (not shown) as the first normal picture signal Saa reproduced in the picture signal reproducing apparatus 151. Also, the luminance signal Ybb and the first and second color difference signals PRbb, PBbb are converted to a composite picture signal equivalent to the second normal picture signal Sbb in the second encoder 160, and the composite picture signal is output to a transmission path (not shown) through the second selecting means 156 as the second normal picture signal Sbb reproduced in the picture signal reproducing apparatus 151.

Next, an operation in the reproducing mode determining section 181 is described with reference to Fig. 18.

As shown in Fig. 18, the reproducing mode determining section 181 comprises a distinguishing portion detecting means 182 for detecting a distinguishing portion attached to a tape cassette of the magnetic tape MT to distinguish a type of the magnetic tape MT, a normal or special reproducing mode selecting means 183 for selecting either a normal reproducing mode or a special reproducing mode such as a search reproducing mode according to an instruction of an operator, a mode information distinguishing means 184 for detecting the information signal Sda of the first reproduced TCI signal Sre3 to distinguish a recording mode indicated by a piece of recording mode information included in the information signal Sda in cases where the normal reproducing operation is selected in the normal or special reproducing mode selecting means 183, a control signal demodulating means 185 for demodulating a piece of recording mode information of the recording mode signal Srm multiplexed in the control signal Src which is recorded on the control track of the magnetic tape MT, a recording speed detecting means 186 for detecting a density of the control signal Src to distinguish between the first and second recording modes, a reproducing mode determining means 187 for determining a conventional reproducing mode corresponding to the fourth recording mode in cases where the distinguishing portion detected in the distinguishing portion detecting means 182 does not indicate a metal tape, determining a reproducing mode selected from among the first to third reproducing modes according to the recording mode information detected in the mode information distinguishing means 184 in cases where the distinguishing portion detected in the distinguishing portion detecting means 182 indicates a metal tape in the normal reproducing operation selected in the normal or special reproducing mode selecting means 183, and determining a reproducing mode selected from among the first to third reproducing modes according to the recording mode information detected in the control signal demodulating means 185 in cases where the distinguishing portion indicates a metal tape in the special reproducing operation selected in the normal or special reproducing mode selecting means 183, and a servo means 188 for controlling a running speed of the magnetic tape MT according to the reproducing mode determined in the reproducing mode determining means 187.

In the above configuration of the reproducing mode determining section 181, when an operator instructs the reproducing mode determining section 181 to determine a reproducing mode selected from among the first to third reproducing modes and the conventional reproducing mode, a type of the magnetic tape MT is distinguished in the reproducing mode determining means 187. In detail, a distinguishing portion attached to a tape cassette of the magnetic tape MT informing of the type of the magnetic tape MT is detected in the distinguishing portion detecting means 182 in the same manner as in the detecting means 121, and a distinguishing portion detecting signal Sd2 is transferred to the reproducing mode determining means 187 to inform the type of the magnetic tape MT. Thereafter, the type of the magnetic tape MT is distinguished according to the distinguishing portion detecting signal Sd2.

In cases where the type of the magnetic tape MT is judged in the reproducing mode determining means 187 to be a metal tape belonging to a super high performance recording medium, a reproducing mode selected from among the first to third reproducing modes is determined in the determining means 187. That is, a normal or specific reproducing mode selecting signal Sns produced in the normal or specific reproducing mode selecting means is received in the determining means 187. In cases where an operator selects the normal reproducing mode in the selecting means 183, the information signal Sda of the first reproduced TCI signal Sre3 detected in the mode information distinguishing means 184 is received in the determining means 187 to determine a recording mode indicated by a piece of recording mode information included in the information signal Sda. In cases where the first or second recording mode is indicated by the recording mode information, the distinction between the first and second recording modes is not impossible because the bit number of the recording mode signal Srm is reduced to 1 as shown in Fig. 12A. In this case, a density of the control signal Src recorded on the magnetic tape MT is detected in the recording speed detecting means 186 through the fifth magnetic head 129 to check a recording speed of the control signal Src, and a recording speed signal Srs is supplied to the determining means 187 to distinguish between the first and second recording modes. Therefore, the first, second or third reproducing mode corresponding to the first, second or third recording mode is specified in the determining means 187.

Also, in cases where the operator selects the special reproducing mode in the selecting means 183, the information signal Sda of the first reproduced TCI signal Sre3 reproduced through the first magnetic heads 112a, 112b is not necessarily detected in the mode information distinguishing means 184 because the line signals of the first reproduced TCI signal Sre3 are intermittently reproduced. In other words, a reproducing mode cannot be specified according to an output signal transferred from the mode information distinguishing means 184. Therefore, a piece of recording mode information of the recording mode signal Srm multiplexed in the control signal Src which is recorded on the control track of the magnetic tape MT is demodulated in the control signal demodulating means 185, and the demodulated recording mode information is supplied to the determining means 187. Thereafter, the first, second or third reproducing mode corresponding to the first, second or third recording mode is specified in the determining means 187 in the same manner.

In contrast, in cases where the type of the magnetic tape MT is judged in the reproducing mode determining means 187 to be a S-VHS type of tape belonging to a high performance recording medium or a VHS type of tape belonging to a normal recording medium, the conventional reproducing mode corresponding to the fourth recording mode is adopted.

Thereafter, a reproducing mode signal Srm2 indicating the first, second, third or conventional reproducing mode is supplied from the determining means 187 to the servo means 188, the first selecting means 156 and the first selecting means 158. Thereafter, a running speed of the magnetic tape MT in the reproducing operation is controlled by the servo means 188, the line signals corresponding to the HD input signal Sin or the first normal picture signal Saa is selected in the second selecting means 158 under control of the reproducing mode signal Srm2, and the second normal picture signal Sbb is selected in the first selecting means 156 under control of the reproducing mode signal Srm2.

Accordingly, because a recording mode recorded on the magnetic tape MT is detected in the reproducing mode determining section 181, a reproducing mode corresponding to the recording mode can be rapidly determined in the reproducing mode determining section 181.

Also, because a piece of recording mode information included in the first reproduced TCI signal Sre3 is distinguished in case of the normal reproducing mode, the recording mode information can be detected each time the first reproduced TCI signal Sre3 equivalent to a frame of picture signal is reproduced even though the recording mode information is indicated by a plurality of bits. In addition, because a piece of recording mode information included in the recording control signal Src reproduced is distinguished in case of the search reproducing mode in which the line signals of the first reproduced TCI signal Sre3 are intermittently reproduced, the recording mode information can be rapidly distinguished.

Having illustrated and described the principles of our invention in a preferred embodiment thereof, it should be readily apparent to those skilled in the art that the invention can be modified in arrangement and detail without departing from such principles. We claim all modifications coming within the scope of the accompanying claims.

**Claims**

1. A picture signal recording apparatus for recording a normal picture signal and a high-definition picture signal in which the number of scanning lines is higher than that in the normal picture signal, comprising:

   selecting means (102) for selecting either the high-definition picture signal or the normal picture signal, the high-definition picture signal and the normal picture signal being respectively composed of a luminance signal, a first color difference signal and a second color difference signal;
   recording processing means (106) for time-compressing a plurality of luminance line signals of the luminance signal pertaining to the normal picture signal on every scanning line in cases where che normal picture signal is selected in the selecting means, time-compressing a plurality of first color difference line signals of the first color difference signal pertaining to the normal picture signal on every scanning line in cases where the normal picture signal is selected in the selecting means, time-compressing a plurality of second color difference line signals of the second color difference signal pertaining to the normal picture signal in cases where the normal picture signal is selected in the selecting means, multiplexing in time division the luminance line signals time-compressed, the first color difference line signals time-compressed and the second color difference line signals time-compressed on every scanning line to produce a TCI signal pertaining to the normal picture signal, deleting either a first color difference line signal of the first color difference signal pertaining to the high-definition picture signal or a second color difference line signal of the second color difference signal pertaining to the high-definition picture signal on every scanning line to produce a plurality of thinned first color difference line signals corresponding to even-numbered scanning lines and a plurality of thinned second color difference line signals corresponding to odd-numbered scanning lines from a plurality of first color difference line signals of the first color difference signal pertaining to the high-definition picture signal and a plurality of second color difference line signals of the second color difference signal pertaining to the high-definition picture signal in cases where the high-definition picture signal is selected in the selecting means, time-compressing the thinned first color difference line signals and the thinned second color difference line signals to produce a plurality of time-compressed first color difference line signals corresponding to the even-numbered scanning lines and a plurality of time-compressed second color difference line signals corresponding to the odd-numbered scanning lines, time-compressing a plurality of luminance line signals of the luminance signal pertaining to the high-definition picture signal to produce a plurality of time-compressed luminance line signals in cases where the high-definition picture signal is selected in the selecting means, multiplexing in time division a first group of the time-compressed luminance line signals corresponding to the even-numbered scanning lines and the time-compressed first color difference line signals to produce a first TCI signal pertaining to the high-definition picture signal corresponding to the even-numbered scanning lines, and multiplexing in time division a second group of the time-compressed luminance line signals corresponding to the odd-numbered scanning lines and the time-compressed second color difference line signals to produce a second TCI signal pertaining to the high-definition picture signal corresponding to the odd-numbered scanning lines; and
   magnetic head means (112a, 112b, 113a, 113b) for recording the TCI signal pertaining to the normal picture signal on a recording medium in cases where the normal picture signal is selected by the selecting means, and recording the first and second TCI signals pertaining to the high-definition picture signal on the recording medium in cases where the high-definition picture signal is selected by the selecting means.

2. A picture signal recording apparatus according to claim 1 in which a first ratio in time compression degree of the first or second color difference line signals to the luminance line signals pertaining to the normal picture signal is larger than a second ratio in time compression degree of the thinned first or second color difference line signals to the luminance line signals pertaining to the heigh-definition picture signal.

3. A picture signal recording apparatus according to claim 1, additionally including:
   a recording mode determining unit (104) for determining a recording mode in dependence on whether the high-definition picture signal is input to the selecting means, the high-definition picture signal being selected in preference to the normal picture signal in cases where the high-definition picture signal is input to the selecting means.

4. A picture signal recording apparatus according to claim 3 in which the recording mode determining unit comprises:

   picture signal detecting means for detecting the high-definition picture signal input to the selecting means; and
   recording mode determining means for determining a recording mode to select the high-definition picture signal according to the recording mode in the selecting means in cases where the high-definition picture signal is detected in the picture signal detecting means and select the normal picture signal according to the recording mode in the selecting means in cases where the high-definition picture signal is not detected in the picture signal detecting means.

5. A picture signal recording apparatus according to claim 3 in which the recording mode determining unit comprises:

picture signal detecting means (123) for detecting the high-definition picture signal input to the selecting means; recording speed selecting means (125) for selecting either a standard recording speed or a low recording speed which is lower than the standard recording speed, the recording medium being run at the standard recording speed or the low recording speed selected in the recording speed selecting means; and

recording mode determining means (126) for determining a recording mode to select the high-definition picture signal according to the recording mode in the selecting means for the purpose of the recording of the high-definition picture signal on the recording medium at the standard recording speed in cases where the high-definition picture signal is detected in the picture signal detecting means and select the normal picture signal according to the recording mode in the selecting means for the purpose of the recording of the normal picture signal on the recording medium at the standard or low recording speed in cases where the high-definition picture signal is not detected in the picture signal detecting means, the normal picture signal selected in the selecting means being recorded on the recording medium at the standard recording speed in cases where the standard recording speed is selected in the recording speed selecting means, and the normal picture signal selected in the selecting means being recorded on the recording medium at the low recording speed in cases where the low recording speed is selected in the recording speed selecting means.

6. A picture signal recording apparatus according to claim 5, the recording mode determining unit additionally including:

second magnetic head means (129) for recording the recording mode determined in the recording mode determining means on the recording medium.

7. A picture signal recording apparatus according to claim 5, the recording mode determining unit additionally including:

servo means (127) for controlling a running speed of the recording medium according to the selection of the recording speed selecting means and generating a control signal to control a running speed of the recording medium in a reproducing operation;

control modulating means (128) for modulating the control signal generated in the servo means to multiplex the recording mode determined in the recording mode determining means with the running speed indicated by the control signal; and

second magnetic head means (129) for recording the control signal modulated in the control modulating means on the recording medium to reproduce either the high-definition picture signal or the normal picture signal recorded on the recording medium with the magnetic head means in the reproducing operation according to the recording mode determined in the recording mode determining means and the recording speed of the recording medium selected in the recording speed selecting means.

8. A picture signal recording apparatus according to claim 3 in which the recording mode determining unit comprises:

automatic/manual selecting means (122) for selecting either an automatic determination of the recording mode or a manual determination of the recording mode;

input signal selecting means (124) for selecting either the high-definition picture signal input to the selecting means or the normal picture signal input to the selecting means on condition that the manual determination is selected in the automatic/manual selecting means;

recording speed selecting means (125) for selecting either a standard recording speed or a low recording speed which is lower than the standard recording speed, the recording medium being run at the standard recording speed or the low recording speed selected in the recording speed selecting means;

picture signal detecting means for detecting the high-definition picture signal input to the selecting means on condition that the automatic determination is selected in the automatic/manual selecting means;

recording mode determining means (126) for determining a recording mode to select the high-definition picture signal in the selecting means according to the recording mode for the purpose of the recording of the high-definition picture signal on the recording medium at the standard recording speed in cases where the high-definition picture signal is detected in the picture signal detecting means, select the normal picture signal in the selecting means according to the recording mode for the purpose of the recording of the normal picture signal on the recording medium at the low recording speed selected in the recording speed selecting means in cases where the high-definition picture signal is not detected in the picture signal detecting means, select the high-definition picture signal in the selecting means according to the recording mode for the purpose of the recording of the high-definition picture signal on the recording medium at the standard recording speed in cases where the high-definition picture signal is selected in the input signal selecting means, and select the normal picture signal in the selecting means according to the recording mode for the purpose of the recording of the normal picture signal on the recording medium at the low recording speed in cases where the normal picture signal is selected in the input signal selecting means.

9. A picture signal recording apparatus for recording a first normal picture signal, a second normal picture signal and a high-definition picture signal in which the number of scanning lines is higher than that in the first or second normal picture signal, comprising:

picture signal detecting means (123) for detecting the high-definition picture signal;

recording speed selecting means (125) for selecting either a standard recording speed or a low recording speed which is lower than the standard recording speed, a recording medium being run at the standard recording speed or the low recording speed selected in the recording speed selecting means;

recording mode determining means (126) for determining, by adopting, a first recording mode in cases where the high-definition picture signal is detected in the picture signal detecting means, adopting a second recording mode in cases where the high-definition picture signal is not detected in the picture signal detecting means on condition that the low recording speed is selected in the recording speed selecting means, and adopting a third recording mode in cases where the high-definition picture signal is not detected in the picture signal detecting means on condition that the standard recording speed is selected in the recording speed selecting means;

selecting means (102) for selecting the high-definition picture signal input to the selecting means in cases where the first recording mode is adopted in the recording mode determining means, selecting the first normal picture signal input to the selecting means in cases where the second recording mode is adopted in the recording mode determining means, and selecting the first and second normal picture signals input to the selecting means in cases where the third recording mode is adopted in the recording mode determining means;

recording processing means (106) for deleting either a first color difference signal or a second color difference signal pertaining to the high-definition picture signal on every scanning line to produce a thinned first color difference signal corresponding to even-numbered scanning lines and a thinned second color difference signal corresponding to odd-numbered scanning lines in cases where the high-definition picture signal is selected by the selecting means, time-compressing the thinned first and second color difference signals to produce a time-compressed first color difference signal corresponding to the even-numbered scanning lines and a time-compressed second color difference signal corresponding to odd-numbered scanning lines, time-compressing a luminance signal pertaining to the high-definition picture signal on every scanning line to produce a time-compressed luminance signal in cases where the high-definition picture signal is selected in the selecting means, multiplexing in time division a first group of the time-compressed luminance signal corresponding to the even-numbered scanning lines and the time-compressed first color difference signal to produce a first TCI signal pertaining to the high-definition picture signal, multiplexing in time division a second group of the time-compressed luminance signal corresponding to the odd-numbered scanning lines and the time-compressed second color difference signal to produce a second TCI signal pertaining to the high-definition picture signal, time-compressing a luminance signal and first and second color difference signals pertaining to the first normal picture signal on every scanning line in cases where the first normal picture signal is selected in the selecting means, multiplexing in time division the luminance signal time-compressed and the first and second color difference signals time-compressed on every scanning line to produce a first TCI signal pertaining to the first normal picture signal, time-compressing a first group of a luminance signal and first and second color difference signals pertaining to the first normal picture signal and a second group of a luminance signal and first and second color difference signals pertaining to the second normal picture signal on every scanning line in cases where the first and second normal picture signals are selected in the selecting means, and multiplexing in time division the first group of the luminance signal time-compressed and the first and second color difference signals time-compressed and the second group of the luminance signal time-compressed and the first and second color difference signals time-compressed on every scanning line to produce a first TCI signal pertaining to the first normal picture signal and a second TCI signal pertaining to the second normal picture signal; and

magnetic head means (112a, 112b, 113a, 113b) for recording the first and second TCI signals pertaining to the high-definition picture signal on the recording medium at the standard recording speed selected in the recording speed selecting means, recording the first TCl signal pertaining to the first normal picture signal on the recording medium at the low recording speed selected in the recording speed selecting means, and recording the first and second TCl signals pertaining to the first and second normal picture signals on the recording medium at the standard recording speed selected in the recording speed selecting means.

10. A picture signal reproducing apparatus for reproducing a normal picture signal and a high-definition picture signal in which the number of scanning lines is higher than that in the normal picture signal, comprising:

recording medium means (MT) for recording a TCl signal pertaining to the normal picture signal, first and second TCl signals pertaining to the high-definition picture signal, a first control signal in which a recording speed of the high-definition picture signal and a recording mode of the high-definition picture signal are multiplexed, and a second control signal in which a recording speed of the normal picture signal and a recording mode of the normal picture signal are multiplexed, the TCl signal pertaining to the normal picture signal being composed of a luminance signal, first and second color difference signals multiplexed with each other on every scanning line and a recording mode signal indicating the recording mode of the normal picture signal, the first TCl signal pertaining to the high-definition picture signal being composed of a first luminance signal corresponding to even-numbered scanning lines, a thinned first color difference signal corresponding to the even-numbered scanning lines and a recording mode signal indicating the recording mode of the high-definition picture signal multiplexed with each other, and the second TCl signal pertaining to the high-definition picture signal being composed of a second luminance signal corresponding to odd-numbered scanning lines and a thinned second color difference signal corresponding to the odd-numbered scanning lines multiplexed with each other;

magnetic head means (112a, 112b, 113a, 113b, 129) for reading either the TCl signal pertaining to the normal picture signal recorded on the recording medium means or the first and second TCl signals pertaining to the high-definition picture signal recorded on the recording medium means and reading either the first control signal or the second control signal recorded on the recording medium means;

normal or search reproducing mode selecting means (183) for selecting either a normal reproducing mode or a search reproducing mode in which the TCl signal pertaining to the normal picture signal or the first and second TCl signals pertaining to the high-definition picture signal are intermittently read out from the recording medium means through the magnetic head means;

reproducing mode determining means (187) for determining a reproducing mode corresponding to the recording mode signal included in either the TCl signal pertaining to the normal picture signal or the first TCl signal pertaining to the high-definition picture signal in cases where the normal reproducing mode is selected in the normal or search reproducing mode selecting means and determining a reproducing mode corresponding to the recording mode signal multiplexed in the first or second control signal recorded on the recording medium means in cases where the search reproducing mode is selected in the normal or search reproducing mode selecting means;

reproducing processing means (154) for reproducing the luminance signal and the first and second color difference signals of the normal picture signal from the TCl signal pertaining to the normal picture signal read in the magnetic head means according to the reproducing mode determined in the reproducing mode determining means in cases where the TCl signal pertaining to the normal picture signal is read in the magnetic head means and reproducing the first and second luminance signals and the first and second color difference signals of the high-definition picture signal from the first and second TCl signals pertaining to the high-definition picture signal read in the magnetic head means according to the reproducing mode determined in the reproducing mode determining means in cases where the first and second TCl signals pertaining to the high-definition picture signal are read in the magnetic head means; and

selecting means (158) for selecting either the luminance signal and the first and second color difference signals of the normal picture signal or the first and second luminance signals and the first and second color difference signals of the high-definition picture signal according to the reproducing mode determined in the reproducing mode determining means.

11. A picture signal recording method for recording a normal picture signal and a high-definition picture signal in which the number of scanning lines is higher than that in the normal picture signal, comprising the steps of:

time-compressing a plurality of luminance line signals of a luminance signal pertaining to a normal picture signal on every scanning line, each of the luminance line signals corresponding to a scanning line;

time-compressing a plurality of first color difference line signals of a first color difference signal pertaining to the normal picture signal on every scanning line, each of the first color difference line signals corresponding to a scanning line;

time-compressing a plurality of second color difference line signals of a second color difference signal pertaining to the normal picture signal, each of the second color difference line signals corresponding to a scanning line;

multiplexing in time division the luminance line signals time-compressed, the first color difference line signals time-compressed and the second color difference line signals time-compressed on every scanning line to produce a TCI signal pertaining to the normal picture signal;

recording the TCI signal pertaining to the normal picture on a recording medium;

deleting either a first color difference line signal of a first color difference signal pertaining to a high-definition picture signal or a second color difference line signal of a second color difference signal pertaining to the high-definition picture signal on every scanning line to produce a plurality of thinned first color difference line signals corresponding to even-numbered scanning lines and a plurality of thinned second color difference line signals corresponding to odd-numberd scanning lines from the first color difference signal pertaining to the high-definition picture signal and the second color difference signal pertaining to the high-definition picture signal, the first color difference signal being composed of a plurality of first color difference line signals which each correspond to a scanning line, and the second color difference signal being composed of a plurality of second color difference line signals which each correspond to a scanning line;

time-compressing the thinned first color difference line signals and the thinned second color difference line signals;

time-compressing a plurality of luminance line signals of a luminance signal pertaining to the high-definition picture signal, each of the luminance line signals corresponding to a scanning line, and the luminance line signals being classified into a first group of luminance line signals corresponding to the even-numbered scanning lines and a second group of luminance line signals corresponding to the odd-numbered scanning lines;

multiplexing in time division the first group of luminance line signals time-compressed and the thinned first color difference line signals time-compressed to produce a first TCI signal pertaining to the high-definition picture signal corresponding to the even-numbered scanning lines;

multiplexing in time division the second group of luminance line signals time-compressed and the thinned second color difference line signals time-compressed to produce a second TCI signal pertaining to the high-definition picture signal corresponding to the odd-numbered scanning lines; and

recording the first TCI signal and the second TCI signal on the recording medium.

12. A picture signal recording method according to claim 11 in which a first ratio in time compression degree of the first or second color difference line signals to the luminance line signals pertaining to the normal picture signal is larger than a second ratio in time compression degree of the thinned first or second color difference line signals to the luminance line signals pertaining to the heigh-definition picture signal.

**Patentansprüche**

1. Vorrichtung zum Aufzeichnen von Bildsignalen, um ein Signal eines normalen Bildes und ein Signal eines Bildes mit hoher Auflösung, in dem die Anzahl von Abtastzeilen höher als diejenige in dem Signal eines normalen Bildes ist, aufzuzeichnen, umfassend:

ein Wählmittel (102) zum Auswählen entweder des Signals eines Bildes mit hoher Auflösung oder des Signals eines normalen Bildes, wobei das Signal eines Bildes mit hoher Auflösung und das Signal eines normalen Bildes jeweils aus einem Helligkeitssignal, einem ersten Farbdifferenzsignal und einem zweiten Farbdifferenzsignal zusammengesetzt sind;

ein Mittel zum Verarbeiten der Aufzeichnung (106) zum zeitlichen Komprimieren mehrerer Helligkeitszeilensignale des Helligkeitssignals, das zu dem Signal eines normalen Bildes gehört, bei jeder Abtastzeile in den Fällen, in denen in dem Wählmittel das Signal eines normalen Bildes ausgewählt ist, zum zeitlichen Komprimieren mehrerer erster Farbdifferenzzeilensignale des ersten Farbdifferenzsignals, das zu dem Signal eines normalen Bildes gehört, bei jeder Abtastzeile in den Fällen, in denen in dem Wählmittel das Signal eines normalen Bildes ausgewählt ist, zum zeitlichen Komprimieren mehrerer zweiter Farbdifferenzzeilensignale des zweiten Farbdifferenzsignals, das zu dem Signal eines normalen Bildes gehört, in den Fällen, in denen in dem Wählmittel das Signal eines normalen Bildes ausgewählt ist, zum Zeitmultiplexen der zeitlich komprimierten Helligkeitszeilensignale, der zeitlich komprimierten ersten Farbdifferenzzeilensignale und der zeitlich komprimierten zweiten Farbdifferenzzeilensignale bei jeder Abtastzeile, um ein TCI-Signal zu erzeugen, das zu dem Signal eines normalen Bildes gehört, zum Löschen entweder eines ersten Farbdifferenzzeilensignals des ersten Farbdifferenzsignals, das zu dem Signal eines Bildes mit hoher Auflösung gehört, oder eines zweiten Farbdifferenzzeilensignals des zweiten Farbdifferenzsignals, das zu dem Signal eines Bildes mit hoher Auflösung gehört, bei jeder Abtastzeile, um mehrere ausgedünnte erste Farbdifferenzzeilensignale, die geradzahligen Abtastzeilen entsprechen, und mehrere ausgedünnte zweite Farbdifferenzzeilensignale, die ungeradzahligen Abtastzeilen entsprechen, aus den ersten Farbdifferenzzeilensignalen des ersten Farbdifferenzsignals, das zu dem Signal eines Bildes mit hoher Auflösung gehört, und den zweiten Farbdifferenzzeilensignalen des zweiten Farbdifferenzsignals, das zu dem Signal eines Bildes mit hoher Auflösung gehört, in den Fällen zu erzeugen, in denen in dem Wählmittel das Signal eines Bildes mit hoher Auflösung ausgewählt ist, zum zeitlichen Komprimieren der ausgedünnten ersten Farbdifferenzzeilensignale und der ausgedünnten zweiten Farbdifferenzzeilensignale, um mehrere zeitlich komprimierte erste Farbdifferenzzeilensignale zu erzeugen, die den geradzahligen Abtastzeilen entsprechen, und mehrere zeitlich komprimierte zweite Farbdifferenzzeilensignale zu erzeugen, die den ungeradzahligen Abtastzeilen entsprechen, zum zeitlichen Komprimieren mehrerer Helligkeitszeilensignale des Helligkeitssignals, das zu dem Signal eines Bildes mit hoher Auflösung gehört, um mehrere zeitlich komprimierte Helligkeitszeilensignale zu erzeugen, in den Fällen, in denen in dem Wählmittel das Signal eines Bildes mit hoher Auflösung ausgewählt ist, zum Zeitmultiplexen einer ersten Gruppe aus den zeitlich komprimierten Helligkeitszeilensignalen, die den geradzahligen Abtastzeilen entsprechen, und der zeitlich komprimierten ersten Farbdifferenzzeilensignale, um ein erstes TCI-Signal zu erzeugen, das zu dem Signal eines Bildes mit hoher Auflösung gehört, das den geradzahligen Abtastzeilen entspricht, und zum Zeitmultiplexen einer zweiten Gruppe aus den zeitlich komprimierten Helligkeitszeilensignalen, die den ungeradzahligen Abtastzeilen entsprechen, und der zeitlich komprimierten zweiten Farbdifferenzzeilensignale, um ein zweites TCI-Signal zu erzeugen, das zu dem Signal eines Bildes mit hoher Auflösung gehört, das den ungeradzahligen Abtastzeilen entspricht; und

ein Magnetkopfmittel (112a, 112b, 113a, 113b) zum Aufzeichnen des TCI-Signals, das zu dem Signal eines normalen Bildes gehört, auf ein Aufzeichnungsmedium in den Fällen, in denen von dem Wählmittel das Signal eines normalen Bildes ausgewählt ist, und zum Aufzeichnen der ersten und zweiten TCI-Signale, die zu dem Signal eines Bildes mit hoher Auflösung gehören, auf das Aufzeichnungsmedium in den Fällen, in denen von dem Wählmittel das Signal eines Bildes mit hoher Auflösung ausgewählt ist.

2. Vorrichtung zum Aufzeichnen von Bildsignalen nach Anspruch 1, wobei ein erstes Verhältnis im Zeitkompressionsgrad der ersten oder zweiten Farbdifferenzzeilensignale zu den Helligkeitszeilensignalen, die zu dem Signal eines normalen Bildes gehören, größer als ein zweites Verhältnis im Zeitkompressionsgrad der ausgedünnten ersten oder zweiten Farbdifferenzzeilensignale zu den Helligkeitszeilensignalen ist, die zu dem Signal eines Bildes mit hoher Auflösung gehören.

3. Vorrichtung zum Aufzeichnen von Bildsignalen nach Anspruch 1, die zusätzlich eine Einheit zum Bestimmen des Aufzeichnungsmodus (104) umfaßt, um einen Aufzeichnungsmodus in Abhängigkeit davon zu bestimmen, ob das Signal eines Bildes mit hoher Auflösung in das Wählmittel eingegeben ist, wobei das Signal eines Bildes mit hoher Auflösung bevorzugt zu dem Signal eines normalen Bildes in den Fällen ausgewählt wird, in denen in das Wählmittel das Signal eines Bildes mit hoher Auflösung eingegeben ist.

4. Vorrichtung zum Aufzeichnen von Bildsignalen nach Anspruch 3, wobei die Einheit zum Bestimmen des Aufzeichnungsmodus umfaßt:

ein Mittel zum Detektieren eines Bildsignals, um das in das Wählmittel eingegebene Signal eines Bildes mit hoher Auflösung zu detektieren; und

ein Mittel zum Bestimmen des Aufzeichnungsmodus, um einen Aufzeichnungsmodus zu bestimmen und somit das Signal eines Bildes mit hoher Auflösung gemäß dem Aufzeichnungsmodus in dem Wählmittel in den Fällen auszuwählen, in denen in dem Mittel zum Detektieren des Bildsignals das Signal eines Bildes mit hoher Auflösung detektiert wird, und das Signal eines normalen Bildes gemäß dem Aufzeichnungsmodus in dem Wählmittel in den Fällen auszuwählen, in denen in dem Mittel zum Detektieren des Bildsignals das Signal eines Bildes mit hoher Auflösung nicht detektiert wird.

5. Vorrichtung zum Aufzeichnen von Bildsignalen nach Anspruch 3, bei der die Einheit zum Bestimmen des Aufzeichnungsmodus umfaßt:

ein Mittel zum Detektieren eines Bildsignals (123) zum Detektieren des in das Wählmittel eingegebenen Signals eines Bildes mit hoher Auflösung;

ein Mittel zum Auswählen der Aufzeichnungsgeschwindigkeit (125) zum Auswählen entweder einer normalen Aufzeichnungsgeschwindigkeit oder einer niedrigen Aufzeichnungsgeschwindigkeit, die niedriger als die normale Aufzeichnungsgeschwindigkeit ist, wobei das Aufzeichnungsmedium mit der normalen Aufzeichnungsgeschwindigkeit oder der niedrigen Aufzeichnungsgeschwindigkeit laufen gelassen wird, die in dem Mittel zum Auswählen der Aufzeichnungsgeschwindigkeit ausgewählt ist;

ein Mittel zum Bestimmen des Aufzeichnungsmodus (126), um einen Aufzeichnungsmodus zu bestimmen und somit das Signal eines Bildes mit hoher Auflösung gemäß dem Aufzeichnungsmodus in dem Wählmittel zum Zwecke der Aufzeichnung des Signals eines Bildes mit hoher Auflösung auf das Aufzeichnungsmedium mit der normalen Aufzeichnungsgeschwindigkeit in den Fällen auszuwählen, in denen in dem Mittel zum Detektieren des Bildsignals das Signal eines Bildes mit hoher Auflösung detektiert wird, und das Signal eines normalen Bildes gemäß dem Aufzeichnungsmodus in dem Wählmittel zum Zwecke der Aufzeichnung des Signals eines normalen Bildes mit der normalen oder niedrigen Aufzeichnungsgeschwindigkeit auf das Aufzeichnungsmedium in den Fällen auszuwählen, in denen in dem Mittel zum Detektieren des Bildsignals das Signal eines Bildes mit hoher Auflösung nicht detektiert wird, wobei das in dem Wählmittel ausgewählte Signal eines normalen Bildes auf das Aufzeichnungsmedium mit der normalen Geschwindigkeit in den Fällen aufgezeichnet wird, in denen in dem Mittel zum Auswählen der Aufzeichnungsgeschwindigkeit die normale Aufzeichnungsgeschwindigkeit ausgewählt ist, und das in dem Wählmittel ausgewählte Signal eines normalen Bildes auf das Aufzeichnungsmedium mit der niedrigen Aufzeichnungsgeschwindigkeit in den Fällen aufgezeichnet wird, in denen in dem Mittel zum Auswählen der Aufzeichnungsgeschwindigkeit die niedrige Aufzeichnungsgeschwindigkeit ausgewählt ist.

6. Vorrichtung zum Aufzeichnen von Bildsignalen nach Anspruch 5, wobei die Einheit zum Bestimmen des Aufzeichnungsmodus zusätzlich ein zweites Magnetkopfmittel (129) zum Aufzeichnen des in dem Mittel zum Bestimmen des Aufzeichnungsmodus bestimmten Aufzeichnungsmodus auf das Aufzeichnungsmedium umfaßt.

7. Vorrichtung zum Aufzeichnen von Bildsignalen nach Anspruch 5, wobei die Einheit zum Bestimmen des Aufzeichnungsmodus zusätzlich umfaßt:

ein Servomittel (127) zum Steuern einer Laufgeschwindigkeit des Aufzeichnungsmediums gemäß der Auswahl des Mittels zum Auswählen der Aufzeichnungsgeschwindigkeit und zum Erzeugen eines Steuersignals, um eine Laufgeschwindigkeit des Aufzeichnungsmediums in einem Wiedergabebetrieb zu steuern;

ein Steuermodulationsmittel (128) zum Modulieren des in dem Servomittel erzeugten Steuersignals, um den in dem Mittel zum Bestimmen des Aufzeichnungsmodus bestimmten Aufzeichnungsmodus mit der von dem Steuersignal angezeigten Laufgeschwindigkeit zu multiplexen; und

ein zweites Magnetkopfmittel (129) zum Aufzeichnen des in dem Steuermodulationsmittel modulierten Steuersignals auf das Aufzeichnungsmedium, um entweder das Signal eines Bildes mit hoher Auflösung oder das Signal eines normalen Bildes, die auf dem Aufzeichnungsmedium mit dem Magnetkopfmittel aufgezeichnet sind, im Wiedergabebetrieb gemäß dem in dem Mittel zum Bestimmen des Aufzeichnungsmodus bestimmten Aufzeichnungsmodus und der in dem Mittel zum Auswählen der Aufzeichnungsgeschwindigkeit ausgewählten Aufzeichnungsgeschwindigkeit des Aufzeichnungsmediums wiederzugeben.

8. Vorrichtung zum Aufzeichnen von Bildsignalen nach Anspruch 3, bei der die Einheit zum Bestimmen des Aufzeichnungsmodus umfaßt:

ein Mittel zum Auswählen von automatisch/manuell (122) zum Auswählen entweder einer automatischen Bestimmung des Aufzeichnungsmodus oder einer manuellen Bestimmung des Aufzeichnungsmodus;

ein Mittel zum Auswählen des Eingangssignals (124) zum Auswählen entweder des in das Wählmittel eingegebenen Signals eines Bildes mit hoher Auflösung oder des in das Wählmittel eingegebenen Signals eines normalen Bildes unter der Bedingung, daß in dem Mittel zum Auswählen von automatisch/manuell die manuelle Bestimmung ausgewählt ist;

ein Mittel zum Auswählen der Aufzeichnungsgeschwindigkeit (125) zum Auswählen entweder einer normalen Aufzeichnungsgeschwindigkeit oder einer niedrigen Aufzeichnungsgeschwindigkeit, die niedriger als die normale Aufzeichnungsgeschwindigkeit ist, wobei das Aufzeichnungsmedium mit der normalen Aufzeichnungsgeschwindigkeit oder der niedrigen Aufzeichnungsgeschwindigkeit laufen gelassen wird, die in dem Mittel zum Auswählen der Aufzeichnungsgeschwindigkeit ausgewählt ist;

ein Mittel zum Detektieren eines Bildsignals zum Detektieren des Signals eines Bildes mit hoher Auflösung, das in das Wählmittel eingegeben ist, unter der Bedingung, daß die automatische Bestimmung in dem Mittel zum Auswählen von automatisch/manuell ausgewählt ist;

ein Mittel zum Bestimmen des Aufzeichnungsmodus (126), um einen Aufzeichnungsmodus zu bestimmen und somit das Signal eines Bildes mit hoher Auflösung in dem Wählmittel gemäß dem Aufzeichnungsmodus zum Zwecke des Aufzeichnens des Signals eines Bildes mit hoher Auflösung auf das Aufzeichnungsmedium mit der normalen Aufzeichnungsgeschwindigkeit in den Fällen auszuwählen, in denen in dem Mittel zum Detektieren des Bildsignals das Signal eines Bildes mit hoher Auflösung detektiert wird, das Signal eines normalen Bildes in dem Wählmittel gemäß dem Aufzeichnungsmodus zum Zwecke des Aufzeichnens des Signals eines normalen Bildes auf das Aufzeichnungsmedium mit der in dem Mittel zum Auswählen der Aufzeichnungsgeschwindigkeit ausgewählten niedrigen Aufzeichnungsgeschwindigkeit in den Fällen auszuwählen, in denen in dem Mittel zum Detektieren des Bildsignals das Signal eines Bildes mit hoher Auflösung nicht detektiert wird, das Signal eines Bildes mit hoher Auflösung in dem Wählmittel gemäß dem Aufzeichnungsmodus zum Zwecke des Aufzeichnens des Signals eines Bildes mit hoher Auflösung auf das Aufzeichnungsmedium mit der normalen Aufzeichnungsgeschwindigkeit in den Fällen auszuwählen, in denen in dem Mittel zum Auswählen des Eingangssignals das Signal eines Bildes mit hoher Auflösung ausgewählt ist, und das Signal eines normalen Bildes in dem Wählmittel gemäß dem Aufzeichnungsmodus zum Zwecke des Aufzeichnens des Signals eines normalen Bildes auf das Aufzeichnungsmedium mit der niedrigen Aufzeichnungsgeschwindigkeit in den Fällen auszuwählen, in denen in dem Mittel zum Auswählen des Eingangssignals das Signal eines normalen Bildes ausgewählt ist.

9.  Vorrichtung zum Aufzeichnen von Bildsignalen, um ein erstes Signal eines normalen Bildes, ein zweites Signal eines normalen Bildes und ein Signal eines Bildes mit hoher Auflösung, in dem die Anzahl von Abtastzeilen höher als diejenige in dem ersten oder dem zweiten Signal eines normalen Bildes ist, aufzuzeichnen, umfassend:

ein Mittel zum Detektieren eines Bildsignals (123), um das Signal eines Bildes mit hoher Auflösung zu detektieren;

ein Mittel zum Auswählen der Aufzeichnungsgeschwindigkeit (125) zum Auswählen entweder einer normalen Aufzeichnungsgeschwindigkeit oder einer niedrigen Aufzeichnungsgeschwindigkeit, die niedriger als die normale Aufzeichnungsgeschwindigkeit ist, wobei ein Aufzeichnungsmedium mit der in dem Mittel zum Auswählen der Aufzeichnungsgeschwindigkeit ausgewählten normalen Aufzeichnungsgeschwindigkeit oder niedrigen Aufzeichnungsgeschwindigkeit laufen gelassen wird;

ein Mittel zum Bestimmen des Aufzeichnungsmodus (126) zum Bestimmen, durch Annahme, eines ersten Aufzeichnungsmodus in den Fällen, in denen in dem Mittel zum Detektieren des Bildsignals das Signal eines Bildes mit hoher Auflösung detektiert wird, zum Annehmen eines zweiten Aufzeichnungsmodus in den Fällen, in denen in dem Mittel zum Detektieren des Bildsignals das Signal eines Bildes mit hoher Auflösung nicht detektiert wird, unter der Bedingung, daß die niedrige Aufzeichnungsgeschwindigkeit in dem Mittel zum Auswählen der Aufzeichnungsgeschwindigkeit ausgewählt ist, und zum Annehmen eines dritten Aufzeichnungsmodus in den Fällen, in denen in dem Mittel zum Detektieren des Bildsignals das Signal eines Bildes mit hoher Auflösung nicht detektiert wird, unter der Bedingung, daß in dem Mittel zum Auswählen der Aufzeichnungsgeschwindigkeit die normale Aufzeichnungsgeschwindigkeit ausgewählt ist;

ein Wählmittel (102) zum Auswählen des in das Wählmittel eingegebenen Signals eines Bildes mit hoher Auflösung in den Fällen, in denen in dem Mittel zum Bestimmen des Aufzeichnungsmodus der erste Aufzeichnungsmodus angenommen wird, zum Auswählen des in das Wählmittel eingegebenen ersten Signals eines normalen Bildes in den Fällen, in denen in dem Mittel zum Bestimmen des Aufzeichnungsmodus der zweite Aufzeichnungsmodus angenommen wird, und zum Auswählen der in das Wählmittel eingegebenen ersten und zweiten Signale eines normalen Bildes in den Fällen, in denen in dem Mittel zum Bestimmen des Aufzeichnungsmodus der dritte Aufzeichnungsmodus angenommen wird;

ein Mittel zum Verarbeiten der Aufzeichnung (106) zum Löschen entweder eines ersten Farbdifferenzsignals oder eines zweiten Farbdifferenzsignals, die zu dem Signal eines Bildes mit hoher Auflösung gehören, bei jeder Abtastzeile, um ein ausgedünntes erstes Farbdifferenzsignal zu erzeugen, das geradzahligen Abtastzeilen entspricht, und ein ausgedünntes zweites Farbdifferenzsignal zu erzeugen, das ungeradzahligen Abtastzeilen entspricht, in den Fällen, in denen von dem Wählmittel das Signal eines Bildes mit hoher Auflösung ausgewählt ist, zum zeitlichen Komprimieren der ausgedünnten ersten und zweiten Farbdifferenzsignale, um ein zeitlich komprimiertes erstes Farbdifferenzsignal zu erzeugen, das den geradzahligen Abtastzeilen entspricht, und ein zeitlich komprimiertes zweites Farbdifferenzsignal zu erzeugen, das ungeradzahligen Abtastzeilen entspricht, zum zeitlichen Komprimieren eines Helligkeitssignals, das zu dem Signal eines Bildes mit hoher Auflösung gehört, bei jeder Abtastzeile, um ein zeitlich komprimiertes Helligkeitssignal in den Fällen zu erzeugen, in denen in dem Wählmittel das Signal eines Bildes mit hoher Auflösung ausgewählt ist, zum Zeitmultiplexen einer ersten Gruppe aus dem zeitlich komprimierten Helligkeitssignal, die den geradzahligen Abtastzeilen entspricht, und des zeitlich komprimierten ersten Farbdifferenzsignals, um ein erstes TCI-Signal zu erzeugen, das zu dem Signal eines Bildes mit hoher Auflösung gehört, zum Zeitmultiplexen einer zweiten Gruppe aus dem zeitlich komprimierten Helligkeitssignal, die den ungeradzahligen Abtastzeilen entspricht, und des zeitlich komprimierten zweiten Farbdifferenzsignals, um ein zweites TCI-Signal zu erzeugen, das zu dem Signal eines Bildes mit hoher Auflösung gehört, zum zeitlichen Komprimieren eines Helligkeitssignals und erster und zweiter Farbdifferenzsignale, die zu dem ersten Signal eines normalen Bildes gehören, bei jeder Abtastzeile in den Fällen, in denen in dem Wählmittel das erste Signal eines normalen Bildes ausgewählt ist, zum Zeitmultiplexen des zeitlich komprimierten Helligkeitssignals und der zeitlich komprimierten ersten und zweiten Farbdifferenzsignale bei jeder Abtastzeile, um ein erstes TCI-Signal zu erzeugen, das zu dem ersten Signal eines normalen Bildes gehört, zum zeitlichen Komprimieren einer ersten Gruppe aus einem Helligkeitssignal und ersten und zweiten Farbdifferenzsignalen, die zu dem ersten Signal eines normalen Bildes gehören, und einer zweiten Gruppe aus einem Helligkeitssignal und ersten und zweiten Farbdifferenzsignalen, die zu dem zweiten Signal eines normalen Bildes gehören, bei jeder Abtastzeile in den Fällen, in denen in dem Wählmittel die ersten und zweiten Signale eines normalen Bildes ausgewählt sind, und zum Zeitmultiplexen der ersten Gruppe aus dem zeitlich komprimierten Helligkeitssignal und der zeitlich komprimierten ersten und zweiten Farbdifferenzsignale und der zweiten Gruppe aus dem zeitlich komprimierten Helligkeitssignal und der zeitlich komprimierten ersten und zweiten Farbdifferenzsignale bei jeder Abtastzeile, um ein erstes TCI-Signal zu erzeugen, das zu dem ersten Signal eines normalen Bildes gehört, und ein zweites TCI-Signal zu erzeugen, das zu dem zweiten Signal eines normalen Bildes gehört; und

ein Magnetkopfmittel (112a, 112b, 113a, 113b) zum Aufzeichnen der ersten und zweiten TCI-Signale, die zu dem Signal eines Bildes mit hoher Auflösung gehören, auf das Aufzeichnungsmedium mit der in dem Mittel zum Auswählen der Aufzeichnungsgeschwindigkeit ausgewählten normalen Aufzeichnungsgeschwindigkeit, zum Aufzeichnen des ersten TCI-Signals, das zu dem ersten Signal eines normalen Bildes gehört, auf das Aufzeichnungsmedium mit der in dem Mittel zum Auswählen der Aufzeichnungsgeschwindigkeit ausgewählten niedrigen Aufzeichnungsgeschwindigkeit, und zum Aufzeichnen der ersten und zweiten TCI-Signale, die zu den ersten und zweiten Signalen eines normalen Bildes gehören, auf das Aufzeichnungsmedium mit der in dem Mittel zum Auswählen der Aufzeichnungsgeschwindigkeit ausgewählten normalen Aufzeichnungsgeschwindigkeit.

10. Vorrichtung zum Aufzeichnen von Bildsignalen, um ein Signal eines normalen Bildes und ein Signal eines Bildes mit hoher Auflösung, in dem die Anzahl von Abtastzeilen höher als diejenige in dem Signal eines normalen Bildes ist, wiederzugeben, umfassend:

ein Aufzeichnungsmedium (MT) zum Aufzeichnen eines TCI-Signals, das zu dem Signal eines normalen Bildes gehört, erster und zweiter TCI-Signale, die zu dem Signal eines Bildes mit hoher Auflösung gehören, eines ersten Steuersignals, in dem eine Aufzeichnungsgeschwindigkeit des Signals eines Bildes mit hoher Auflösung und ein Aufzeichnungsmodus des Signals eines Bildes mit hoher Auflösung multiplext sind, und eines zweiten Steuersignals, in dem eine Aufzeichnungsgeschwindigkeit des Signals eines normalen Bildes und ein Aufzeichnungsmodus des Signals eines normalen Bildes multiplext sind, wobei das TCI-Signal, das zu dem Signal eines normalen Bildes gehört, aus einem Helligkeitssignal, ersten und zweiten Farbdifferenzsignalen, die miteinander bei jeder Abtastzeile multiplext sind, und einem Aufzeichnungsmodussignal zusammengesetzt ist, das den Aufzeichnungsmodus des Signals eines normalen Bildes anzeigt, wobei das erste TCI-Signal, das zu dem Signal eines Bildes mit hoher Auflösung gehört, aus einem ersten Helligkeitssignal, das geradzahligen Abtastzeilen entspricht, einem ausgedünnten ersten Farbdifferenzsignal, das geradzahligen Abtastzeilen entspricht, und einem Aufzeichnungsmodussignal, das den Aufzeichnungsmodus des Signals eines Bildes mit hoher Auflösung anzeigt, die miteinander multiplext sind, zusammengesetzt ist, und das zweite TCI-Signal, das zu dem Signal eines Bildes mit hoher Auflösung gehört, aus einem zweiten Helligkeitssignal, das ungeradzahligen Abtastzeilen entspricht, und einem ausgedünnten zweiten Farbdifferenzsignal, das den ungeradzahligen Abtastzeilen entspricht, die miteinander multiplext sind, zusammengesetzt ist;

ein Magnetkopfmittel (112a, 112b, 113a, 113b, 129) zum Lesen entweder des auf das Aufzeichnungsmedium aufgezeichneten TCI-Signals, das zu dem Signal eines normalen Bildes gehört, oder der ersten und zweiten auf das Aufzeichnungsmedium aufgezeichneten TCI-Signale, die zu dem Signal eines Bildes mit hoher Auflösung gehören, und zum Lesen entweder des ersten Steuersignals oder des zweiten Steuersignals, die auf dem Aufzeichnungsmedium aufgezeichnet sind;

ein Mittel zum Auswählen eines normalen oder eines Suchwiedergabemodus (183) zum Auswählen entweder eines normalen Wiedergabemodus oder eines Suchwiedergabemodus, in dem das TCI-Signal, das zu dem Signal eines normalen Bildes gehört, oder die ersten und zweiten TCI-Signale, die zu dem Signal eines Bildes mit hoher Auflösung gehören, von dem Magnetkopfmittel in Abständen von dem Aufzeichnungsmedium ausgelesen werden;

ein Mittel zum Bestimmen des Wiedergabemodus (187), um einen Wiedergabemodus zu bestimmen, der dem Aufzeichnungsmodussignal entspricht, das entweder in dem TCI-Signal, das zu dem Signal eines normalen Bildes gehört, oder in dem ersten TCI-Signal, das zu dem Signal eines Bildes mit hoher Auflösung gehört, eingeschlossen ist, in den Fällen, in denen in dem Mittel zum Auswählen des normalen oder des Suchwiedergabemodus der normale Wiedergabemodus ausgewählt ist, und um einen Wiedergabemodus zu bestimmen, der dem Aufzeichnungsmodussignal entspricht, das in dem ersten oder zweiten Steuersignal multiplext ist, das auf das Aufzeichnungsmedium aufgezeichnet ist, in den Fällen, in denen in dem Mittel zum Auswählen des normalen oder des Suchwiedergabemodus der Suchwiedergabemodus ausgewählt ist;

ein Mittel zum Verarbeiten der Wiedergabe (154) zum Wiedergeben des Helligkeitssignals und der ersten und zweiten Farbdifferenzsignale des Signals eines normalen Bildes von dem TCI-Signal, das zu dem Signal eines normalen Bildes gehört, das in dem Magnetkopfmittel gelesen wird, gemäß dem in dem Mittel zum Bestimmen des Wiedergabemodus bestimmten Wiedergabemodus in den Fällen, in denen das TCI-Signal, das zu dem Signal eines normalen Bildes gehört, in dem Magnetkopfmittel gelesen wird, und zum Wiedergeben der ersten und zweiten Helligkeitssignale und der ersten und zweiten Farbdifferenzsignale des Signals eines Bildes mit hoher Auflösung von den ersten und zweiten TCI-Signalen, die zu dem Signal eines Bildes mit hoher Auflösung gehören, das in dem Magnetkopfmittel gelesen wird, gemäß dem in dem Mittel zum Bestimmen des Wiedergabemodus bestimmten Wiedergabemodus in den Fällen, in denen die ersten und zweiten TCI-Signale, die zu dem Signal eines Bildes mit hoher Auflösung gehören, in dem Magnetkopfmittel gelesen werden; und

ein Wählmittel (158) zum Auswählen entweder des Helligkeitssignals oder der ersten und zweiten Farbdifferenzsignale des Signals eines normalen Bildes oder der ersten und zweiten Helligkeitssignale und der ersten und zweiten Farbdifferenzsignale des Signals eines Bildes mit hoher Auflösung gemäß dem in dem Mittel zum Bestimmen des Wiedergabemodus bestimmten Wiedergabemodus.

11. Verfahren zum Aufzeichnen eines Bildsignals, um ein Signal eines normalen Bildes und ein Signal eines Bildes mit hoher Auflösung, in dem die Anzahl von Abtastzeilen höher als diejenige in dem Signal eines normalen Bildes ist, aufzuzeichnen, das die Schritte umfaßt, daß:

mehrere Helligkeitszeilensignale eines Helligkeitssignals, das zu einem Signal eines normalen Bildes gehört, bei jeder Abtastzeile zeitlich komprimiert werden, wobei jedes der Helligkeitszeilensignale einer Abtastzeile entspricht;

mehrere erste Farbdifferenzzeilensignale eines ersten Farbdifferenzsignals, das zu dem Signal eines normalen Bildes gehört, bei jeder Abtastzeile zeitlich komprimiert werden, wobei jedes der ersten Farbdifferenzzeilensignale einer Abtastzeile entspricht;

mehrere zweite Farbdifferenzzeilensignale eines zweiten Farbdifferenzsignals, das zu dem Signal eines normalen Bildes gehört, zeitlich komprimiert werden, wobei jedes der zweiten Farbdifferenzzeilensignale einer Abtastzeile entspricht;

die zeitlich komprimierten Helligkeitszeilensignale, die zeitlich komprimierten ersten Farbdifferenzzeilensignale und die zeitlich komprimierten zweiten Farbdifferenzzeilensignale bei jeder Abtastzeile zeitmultiplext werden, um ein TCI-Signal zu erzeugen, das zu dem Signal eines normalen Bildes gehört;

das TCI-Signal, das zu dem normalen Bild gehört, auf ein Aufzeichnungsmedium aufgezeichnet wird;

entweder ein erstes Farbdifferenzzeilensignal eines ersten Farbdifferenzsignals, das zu einem Signal eines Bildes mit hoher Auflösung gehört, oder ein zweites Farbdifferenzzeilensignal eines zweiten Farbdifferenzsignals, das zu dem Signal eines Bildes mit hoher Auflösung gehört, bei jeder Abtastzeile gelöscht wird, um mehrere ausgedünnte erste Farbdifferenzzeilensignale, die geradzahligen Abtastzeilen entsprechen, und mehrere ausgedünnte zweite Farbdifferenzzeilensignale, die ungeradzahligen Abastzeilen entsprechen, aus dem ersten Farbdifferenzsignal, das zu dem Signal eines Bildes mit hoher Auflösung gehört, und dem zweiten Farbdifferenzsignal, das zu dem Signal eines Bildes mit hoher Auflösung gehört, zu erzeugen, wobei das erste Farbdifferenzsignal aus mehreren ersten Farbdifferenzzeilensignalen zusammengesetzt ist, die jeweils einer Abtastzeile entsprechen, und das zweite Farbdifferenzsignal aus mehreren zweiten Farbdifferenzzeilensignalen zusammengesetzt ist, die jeweils einer Abtastzeile entsprechen;

die ausgedünnten ersten Farbdifferenzzeilensignale und die ausgedünnten zweiten Farbdifferenzzeilensignale zeitlich komprimiert werden;

mehrere Helligkeitszeilensignale eines Helligkeitssignals, das zu dem Signal eines Bildes mit hoher Auflösung gehört, zeitlich komprimiert werden, wobei jedes der Helligkeitszeilensignale einer Abtastzeile entspricht, und die Helligkeitszeilensignale in eine erste Gruppe aus Helligkeitszeilensignalen, die den geradzahligen Abtastzeilen entsprechen, und eine zweite Gruppe aus Helligkeitszeilensignalen, die den ungeradzahligen Abtastzeilen entsprechen, klassifiziert werden;

die erste Gruppe aus zeitlich komprimierten Helligkeitszeilensignalen und die zeitlich komprimierten ausgedünnten ersten Farbdifferenzzeilensignale zeitmultiplext werden, um ein erstes TCI-Signal zu erzeugen, das zu dem Signal eines Bildes mit hoher Auflösung gehört, das den geradzahligen Abtastzeilen entspricht;

die zweite Gruppe aus zeitlich komprimierten Helligkeitszeilensignalen und die zeitlich komprimierten ausgedünnten zweiten Farbdifferenzzeilensignale zeitmultiplext werden, um ein zweites TCI-Signal zu erzeugen, das zu dem Signal eines Bildes mit hoher Auflösung gehört, das den ungeradzahligen Abtastzeilen entspricht; und daß

das erste TCI-Signal und das zweite TCI-Signal auf das Aufzeichnungsmedium aufgezeichnet werden.

**12.** Verfahren zum Aufzeichnen eines Bildsignals nach Anspruch 11, bei dem ein erstes Verhältnis im Zeitkompressionsgrad der ersten oder zweiten Farbdifferenzzeilensignale zu den Helligkeitszeilensignalen, die zu dem Signal eines normalen Bildes gehören, größer als ein zweites Verhältnis im Zeitkompressionsgrad der ausgedünnten ersten oder zweiten Farbdifferenzzeilensignale zu den Helligkeitszeilensignalen ist, die zu dem Signal eines Bildes mit hoher Auflösung gehören.

## Revendications

**1.** Appareil d'enregistrement de signaux d'image destiné à enregistrer un signal d'image du type normal et un signal d'image du type haute définition dans lequel le nombre de lignes de balayage est plus élevé que dans le signal d'image du type normal, cet appareil comprenant:

un moyen de sélection (102) destiné à sélectionner soit le signal d'image du type haute définition soit le signal d'image du type normal, le signal d'image du type haute définition et le signal d'image du type normal étant composés respectivement d'un signal de luminance, d'un premier signal de différence de couleur et d'un deuxième signal de différence de couleur;

un moyen (106) de traitement d'enregistrement destiné à comprimer temporellement une pluralité de signaux lignes de luminance du signal de luminance appartenant au signal d'image du type normal sur chaque ligne de balayage dans le cas où le signal d'image du type normal est sélectionné dans le moyen de sélection, à comprimer temporellement une pluralité de premiers signaux lignes de différence de couleur du premier signal de différence de couleur appartenant au signal d'image du type normal sur chaque ligne de balayage dans le cas où le signal d'image du type normal est sélectionné dans le moyen de sélection, à comprimer temporellement une pluralité de deuxièmes signaux lignes de différence de couleur du deuxième signal de différence de couleur appartenant au signal d'image du type normal dans le cas où le signal d'image du type normal est sélectionné dans le moyen de sélection, à multiplexer par répartition dans le temps les signaux lignes de luminance comprimés temporellement, les premiers signaux lignes de différence de couleur comprimés temporellement et les deuxièmes signaux lignes de différence de couleur comprimés temporellement sur chaque ligne de balayage pour produire un signal TCI appartenant au signal d'image du type normal, à supprimer soit un premier signal ligne de différence de couleur du premier signal de différence de couleur appartenant au signal d'image du type haute définition, soit un deuxième signal ligne de différence de couleur du deuxième signal de différence de couleur appartenant au signal d'image du type haute définition sur chaque ligne de balayage pour produire une pluralité de premier signaux lignes de différence de couleur amincis correspondant aux lignes de balayage de numéros pairs et une pluralité de deuxièmes signaux lignes de différence de couleur amincis correspondant à des lignes de balayage de numéros impairs à partir d'une pluralité de premiers signaux lignes de différence de couleur du premier signal de différence de couleur appartenant au signal d'image du type haute définition et d'une pluralité de deuxième signaux lignes de différence de couleur du deuxième signal de différence de couleur appartenant au signal d'image du type haute définition dans le cas où le signal d'image du type haute définition est sélectionné dans le moyen de sélection, à comprimer temporellement les premiers signaux lignes de différence de couleur amincis et les deuxièmes signaux lignes de différence de couleur amincis pour produire une pluralité de premiers signaux lignes de différence de couleur comprimés temporellement correspondant aux lignes de balayage de numéros pairs et une pluralité de deuxième signaux lignes de différence de couleur comprimés temporellement correspondant aux lignes de balayage de numéros impairs, à comprimer temporellement une pluralité de signaux lignes de luminance du signal de luminance appartenant au signal d'image du type haute définition pour produire une pluralité de signaux lignes de luminance comprimés temporellement dans le cas où le signal d'image du type haute définition est sélectionné dans le moyen de sélection, à multiplexer par répartition dans le temps un premier groupe des signaux lignes de luminance comprimés temporellement et correspondant aux lignes de balayage de numéros pairs et des premiers signaux lignes de différence de couleur comprimés temporellement pour produire une premier signal TCI appartenant au signal d'image du type haute définition correspondant aux lignes de balayage de numéros pairs, et à multiplexer par répartition dans le temps un deuxième groupe des signaux lignes de luminance comprimés temporellement correspondant aux lignes de balayage de numéros impairs et des deuxièmes signaux lignes de différence de couleur comprimés temporellement pour produire un deuxième signal TCI appartenant au signal d'image du type haute définition correspondant aux lignes de balayage de numéros impairs; et

un moyen formant tête magnétique (112a, 112b, 113a, 113b) destiné à enregistrer le signal TCI appartenant au signal d'image du type normal sur un support d'enregistrement dans le cas où le signal d'image du type normal est sélectionné par le moyen de sélection, et à enregistrer les premier et deuxième signaux TCI appartenant au signal d'image du type haute définition sur le support d'enregistrement dans le cas où le signal d'image du type haute définition est sélectionné par le moyen de sélection.

2. Appareil d'enregistrement de signaux d'image selon la revendication 1, dans lequel un premier rapport du degré de compression temporelle des premier ou deuxième signaux lignes de différence de couleur aux signaux lignes de luminance appartenant au signal d'image du type normal est plus grand qu'un deuxième rapport du degré de compression temporelle des premier ou deuxième signaux lignes de différence de couleur aux signaux lignes de luminance appartenant au signal d'image du type haute définition.

3. Appareil d'enregistrement de signaux d'image selon la revendication 1, comprenant, en outre:
   une unité (104) de détermination de mode d'enregistrement destinée à déterminer un mode d'enregistrement en conformité avec que le signal d'image du type haute définition est entré ou non dans le moyen de sélection, le signal d'image du type haute définition étant sélectionné de préférence au signal d'image du type normal dans le cas où le signal d'image du type haute définition est entré dans le moyen de sélection.

4. Appareil d'enregistrement de signaux d'image selon la revendication 3, dans lequel l'unité de détermination de mode d'enregistrement comprend:

   un moyen de détection de signal d'image destiné à détecter le signal d'image du type haute définition entré dans le moyen de sélection; et
   un moyen de détermination de mode d'enregistrement destiné à déterminer un mode d'enregistrement pour sélectionner le signal d'image du type haute définition en conformité avec le mode d'enregistrement dans le moyen de sélection dans le cas où le signal d'image du type haute définition est détecté dans le moyen de détection de signal d'image et à sélectionner le signal d'image du type normal en conformité avec le mode d'enregistrement dans le moyen de sélection dans le cas où le signal d'image du type haute définition n'est pas détecté dans le moyen de détection de signal d'image.

5. Appareil d'enregistrement de signaux d'image selon la revendication 3, dans lequel l'unité de détermination de mode d'enregistrement comprend:

un moyen (123) de détection de signal d'image destiné à détecter le signal d'image du type haute définition entré dans le moyen de sélection;
un moyen (125) de sélection de vitesse d'enregistrement destiné à sélectionner soit une vitesse d'enregistrement standard, soit une vitesse d'enregistrement basse qui est inférieure à la vitesse d'enregistrement standard, le support d'enregistrement défilant à la vitesse d'enregistrement standard ou à la vitesse d'enregistrement basse sélectionnée dans le moyen de sélection de vitesse d'enregistrement; et
un moyen (126) de détermination de mode d'enregistrement destiné à déterminer un mode d'enregistrement pour sélectionner le signal d'image du type haute définition en conformité avec le mode d'enregistrement dans le moyen de sélection dans le but d'enregistrer le signal d'image du type haute définition sur le support d'enregistrement à la vitesse d'enregistrement standard dans le cas où le signal d'image du type haute définition est détecté dans le moyen de détection de signal d'image et à sélectionner le signal d'image du type normal en conformité avec le mode d'enregistrement dans le moyen de sélection dans le but d'enregistrer le signal d'image du type normal sur le support d'enregistrement à la vitesse d'enregistrement standard ou basse dans le cas où le signal d'image du type haute définition n'est pas détecté dans le moyen de détection de signal image, le signal d'image du type normal sélectionné dans le moyen de sélection étant enregistré sur le support d'enregistrement à la vitesse d'enregistrement standard dans le cas où la vitesse d'enregistrement standard est sélectionnée dans le moyen de sélection de vitesse d'enregistrement, et le signal d'image du type normal sélectionné dans le moyen de sélection étant enregistré sur le support d'enregistrement à la vitesse d'enregistrement basse dans le cas où la vitesse d'enregistrement basse est sélectionnée dans le moyen de sélection de vitesse d'enregistrement.

6. Appareil d'enregistrement de signaux d'image selon la revendication 5, l'unité de détermination de mode d'enregistrement comprenant, en outre:
un deuxième moyen formant tête magnétique (129) destiné à enregistrer le mode d'enregistrement déterminé dans le moyen de détermination de mode d'enregistrement sur le support d'enregistrement.

7. Appareil d'enregistrement de signaux d'image selon la revendication 5, l'unité de détermination de mode d'enregistrement comprenant, en outre:

un moyen de servocommande (127) destiné à commander la vitesse de défilement du support d'enregistrement en conformité avec la sélection du moyen de sélection de vitesse et à générer un signal de commande pour commander une vitesse de défilement du support d'enregistrement au cours d'une opération de reproduction;
un moyen (128) de modulation de commande destiné à moduler le signal de commande généré dans le moyen de servocommande pour multiplexer le mode d'enregistrement déterminé dans le moyen de détermination de mode d'enregistrement avec la vitesse de défilement indiquée par le signal de commande; et
un deuxième moyen formant tête magnétique (129) destiné à enregistrer le signal de commande modulé dans le moyen de modulation de commande sur le support d'enregistrement pour reproduire soit le signal d'image du type haute définition, soit le signal d'image du type normal enregistré sur le support d'enregistrement à l'aide du moyen formant tête magnétique au cours de l'opération de reproduction en conformité avec le mode d'enregistrement déterminé dans le moyen de détermination de mode d'enregistrement et la vitesse d'enregistrement du support d'enregistrement sélectionné dans le moyen de sélection de vitesse d'enregistrement.

8. Appareil d'enregistrement de signaux d'image selon la revendication 3, dans lequel l'unité de détermination de mode d'enregistrement comprend:

un moyen (122) de sélection automatique/manuel destiné à sélectionner soit une détermination automatique du mode d'enregistrement, soit une détermination manuelle du mode d'enregistrement;
un moyen (124) de sélection de signal d'entrée destiné à sélectionner soit le signal d'image du type haute définition entré dans le moyen de sélection soit le signal d'image du type normal entré dans le moyen de sélection à la condition que la détermination manuelle soit sélectionnée dans le moyen de sélection automatique/manuel;

un moyen (125) de sélection de vitesse d'enregistrement destiné à sélectionner, soit une vitesse d'enregistrement standard, soit une vitesse d'enregistrement basse qui est inférieure à la vitesse d'enregistrement standard, le support d'enregistrement défilant à la vitesse d'enregistrement standard ou à la vitesse basse sélectionnée dans le moyen de sélection de vitesse d'enregistrement;

un moyen de détection de signal d'image destiné à détecter le signal d'image du type haute définition entré dans le moyen de sélection à la condition que la détermination automatique soit sélectionnée dans le moyen de sélection automatique/manuel;

un moyen (126) de détermination de mode d'enregistrement destiné à déterminer un mode d'enregistrement afin de sélectionner le signal d'image du type haute définition dans le moyen de sélection en conformité avec le mode d'enregistrement dans le but d'enregistrer le signal d'image du type haute définition sur le support d'enregistrement à la vitesse d'enregistrement standard dans le cas où le signal d'image du type haute définition est détecté dans le moyen de détection de signal image, à sélectionner le signal d'image du type normal dans le moyen de sélection en conformité avec le mode d'enregistrement dans le but d'enregistrer le signal d'image du type normal sur le support d'enregistrement à la vitesse d'enregistrement basse sélectionnée dans le moyen de sélection de vitesse d'enregistrement dans le cas où le signal d'image du type haute définition n'est pas détecté dans le moyen de détection de signal, à sélectionner le signal d'image du type haute définition dans le moyen de sélection en conformité avec le mode d'enregistrement dans le but d'enregistrer le signal d'image du type haute définition sur le support d'enregistrement à la vitesse d'enregistrement standard dans le cas où le signal d'image du type haute définition est sélectionné dans le moyen de sélection de signal d'entrée, et à sélectionner le signal d'image normal dans le moyen de sélection en conformité avec le mode d'enregistrement dans le but d'enregistrer le signal d'image du type normal sur le support d'enregistrement à la vitesse d'enregistrement basse dans le cas où le signal d'image du type normal est sélectionné dans le moyen de sélection de signal d'entrée.

9.  Appareil d'enregistrement de signaux d'image destiné à enregistrer un premier signal d'image du type normal, un deuxième signal d'image du type normal et un signal d'image du type haute définition dans lequel le nombre de lignes de balayage est supérieure à celui du premier ou du deuxième signal d'image du type normal, comprenant :

un moyen (123) de détection de signal d'image destiné à détecter le signal d'image du type haute définition;

un moyen (125) de sélection de vitesse d'enregistrement destiné à sélectionner soit une vitesse d'enregistrement standard, soit une vitesse d'enregistrement basse qui est inférieure à la vitesse d'enregistrement standard, un support d'enregistrement défilant à la vitesse d'enregistrement standard ou à la vitesse d'enregistrement basse sélectionnée dans le moyen de sélection de vitesse d'enregistrement;

un moyen (126) de détermination de mode d'enregistrement destiné à déterminer, par adoption, un premier mode d'enregistrement dans le cas où le signal image du type haute définition est détecté dans le moyen de détection de signal image, à adopter un deuxième mode d'enregistrement dans le cas où le signal d'image du type haute définition n'est pas détecté dans le moyen de détection de signal d'image à la condition que la vitesse d'enregistrement basse soit sélectionnée dans le moyen de sélection de vitesse d'enregistrement, et à adopter un troisième mode d'enregistrement dans le cas où le signal d'image du type haute définition n'est pas détecté dans le moyen de détection de signal d'image à la condition que la vitesse d'enregistrement standard soit sélectionné dans le moyen de sélection de vitesse d'enregistrement;

un moyen de sélection (102) destiné à sélectionner le signal d'image du type haute définition entré dans le moyen de sélection dans le cas où le premier mode d'enregistrement est adopté dans le moyen de détermination de mode d'enregistrement, à sélectionner le premier signal d'image du type normal entré dans le moyen de sélection dans le cas où le deuxième mode d'enregistrement est adopté dans le moyen de détermination de mode d'enregistrement, et à sélectionner les premier et deuxième signaux d'image normaux entrés dans le moyen de sélection dans le cas où le troisième mode d'enregistrement est adopté dans le moyen de détermination de mode d'enregistrement;

un moyen (106) de traitement d'enregistrement destiné à annuler soit un premier signal de différence de couleur, soit un deuxième signal de différence de couleur appartenant à un signal d'image du type haute définition sur chaque ligne de balayage pour produire un premier signal de différence de couleur aminci correspondant aux lignes de balayage de numéros pairs et un deuxième signal de différence de couleur aminci correspondant aux lignes de balayage de numéros impairs dans le cas où le signal d'image du type haute définition est sélectionné par le moyen de sélection, à comprimer temporellement les premier et deuxième signaux de différence de couleur pour produire un premier signal de différence de couleur comprimé temporellement correspondant aux lignes de balayage de numéros pairs et un deuxième signal de différence de couleur comprimé correspondant à des lignes de balayage de numéros impairs, à comprimer temporellement un signal de luminance appartenant au signal d'image du type haute définition sur chaque ligne de balayage afin de produire un signal de luminance comprimé temporellement dans le cas où le signal d'image du type haute définition est sélectionné dans le moyen de sélection, à multiplexer par répartition dans le temps un premier groupe du signal de luminance comprimé temporellement correspondant aux lignes de balayage de numéros pairs et du premier signal de différence de couleur comprimé temporellement pour produire un premier signal TCI appartenant au signal d'image du type haute définition, à multiplexer par répartition dans le temps un deuxième groupe du signal de luminance comprimé temporellement correspondant aux lignes de balayage de numéros impairs et du deuxième signal de différence de couleur comprimé temporellement pour produire un deuxième signal TCI appartenant au signal d'image du type haute définition, à comprimer temporellement un signal de luminance et des premier et deuxième signaux de différence de couleur appartenant au premier signal d'image du type normal sur chaque ligne de balayage dans le cas où le premier signal d'image du type normal est sélectionné dans le moyen de sélection, à multiplexer par répartition dans le temps le signal de luminance comprimé temporellement et les premier et deuxième signaux de différence comprimés temporellement sur chaque ligne de balayage pour produire un premier signal TCI appartenant au premier signal d'image du type normal, à comprimer temporellement un premier groupe d'un signal de luminance et de premier et deuxième signaux de différence de couleur appartenant au premier signal d'image du type normal et un deuxième groupe d'un signal de luminance et de premier et deuxième signaux de différence de couleur appartenant au deuxième signal d'image du type normal sur chaque ligne de balayage dans le cas où les premier et deuxième signaux d'image du type normal sont sélectionnés dans le moyen de sélection, et à multiplexer par répartition dans le temps le premier groupe du signal de luminance comprimé temporellement ainsi que le deuxième groupe du signal de luminance comprimé temporellement et des premier et deuxième signaux de différence de couleur comprimés temporellement et le deuxième groupe du signal de luminance comprimé temporellement et des premier et deuxième signaux de différence de couleur comprimés temporellement sur chaque ligne de balayage pour produire un premier signal TCI appartenant au premier signal d'image du type normal et un deuxième signal TCI appartenant au deuxième signal d'image du type normal ; et

un moyen formant tête magnétique (112a, 112b, 113a, 113b) destiné à enregistrer les premier et deuxième signaux TCI appartenant au signal d'image du type haute définition sur le support d'enregistrement à la vitesse d'enregistrement standard sélectionnée dans le moyen de sélection de vitesse d'enregistrement, à enregistrer le premier signal TCI appartenant au premier signal d'image du type normal sur le support d'enregistrement à la vitesse d'enregistrement basse sélectionnée dans le moyen de sélection de vitesse d'enregistrement, et à enregistrer les premier et deuxième signaux TCI appartenant aux premier et deuxième signaux d'image de type normal sur le support d'enregistrement à la vitesse d'enregistrement standard sélectionnée dans le moyen de sélection de vitesse d'enregistrement.

10. Appareil de reproduction de signaux d'image destiné à reproduire un signal d'image du type normal et un signal d'image du type haute définition dans lequel le nombre de lignes de balayage est plus élevé que celui du signal d'image du type normal, comprenant :

un moyen formant support d'enregistrement (MT) destiné à enregistrer un signal TCI appartenant au signal d'image du type normal, des premier et deuxième signaux TCI appartenant au signal d'image du type haute définition, un premier signal de commande dans lequel la vitesse d'enregistrement du signal d'image du type haute définition et un mode d'enregistrement du signal d'image du type haute définition sont multiplexés, et un deuxième signal de commande dans lequel la vitesse d'enregistrement du signal d'image du type normal et un mode d'enregistrement du signal image du type normal sont multiplexés, le signal TCI appartenant au signal d'image du type normal étant composé d'un signal de luminance, des premier et deuxième signaux de différence de couleur multiplexés mutuellement sur chaque ligne de balayage et d'un signal de mode d'enregistrement indiquant le mode d'enregistrement du signal d'image du type normal, le premier signal TCI appartenant au signal d'image du type haute définition étant composé d'un premier signal de luminance correspondant aux lignes de balayage de numéros pairs, d'un premier signal de différence de couleur aminci correspondant aux lignes de balayage de numéros pairs et d'un signal de mode d'enregistrement indiquant le mode d'enregistrement du signal d'image du type haute définition, multiplexés mutuellement, et le deuxième signal TCI appartenant au signal d'image du type haute définition étant composé d'un deuxième signal de luminance correspondant aux lignes de balayage de numéros impairs et d'un deuxième signal de différence de couleur aminci correspondant aux lignes de balayage de numéros impairs, multiplexés mutuellement;

un moyen formant tête magnétique (112a, 112b, 113a, 113b, 129) destiné à lire soit le signal TCI appartenant au signal d'image du type normal enregistré sur le moyen formant support d'enregistrement, soit les premier et deuxième signaux TCI appartenant au signal d'image du type haute définition enregistré sur le support d'enregistrement et à lire, soit le premier signal de commande, soit le deuxième signal de commande enregistré sur le moyen formant support d'enregistrement;

un moyen (183) de sélection de mode de reproduction normal ou de recherche destiné à sélectionner soit un mode de reproduction normal, soit un mode de reproduction de recherche, dans lequel le signal TCI appartenant au signal d'image du type normal ou aux premier et deuxième signaux TCI appartenant au signal d'image du type haute définition sont extraits de façon intermittente du moyen formant support d'enregistrement par l'intermédiaire du moyen formant tête magnétique;

un moyen (187) de détermination de mode de reproduction destiné à déterminer un mode de reproduction correspondant au signal de mode d'enregistrement soit dans le signal TCI appartenant au signal d'image du type normal, soit dans le premier signal TCI appartenant au signal d'image du type haute définition dans le cas où le mode de reproduction normal est sélectionné dans le moyen de sélection de mode de reproduction normal ou de recherche et à déterminer un mode de reproduction correspondant au signal de mode d'enregistrement multiplexé dans le premier ou le deuxième signal de commande enregistré sur le moyen formant support d'enregistrement dans le cas où le mode de reproduction de recherche est sélectionné dans le moyen de sélection de mode de reproduction normal ou de recherche ;

un moyen (154) de traitement de reproduction destiné à reproduire le signal de luminance et les premier et deuxième signaux de différence de couleur du signal d'image du type normal à partir du signal TCI appartenant au signal d'image du type normal lu dans le moyen formant tête magnétique en conformité avec le mode de reproduction déterminé dans le moyen de détermination de mode de reproduction dans le cas où le signal TCI appartenant au signal d'image du type normal est lu dans le moyen formant tête magnétique et reproduisant les premier et deuxième signaux de luminance ainsi que les premier et deuxième signaux de différence de couleur du signal d'image du type haute définition à partir des premier et deuxième signaux TCI appartenant au signal d'image du type haute définition lu dans le moyen formant tête magnétique en conformité avec le mode de reproduction déterminé dans le moyen de détermination de mode de reproduction dans le cas où les premier et deuxième signaux TCI appartenant au signal d'image du type haute définition sont lus dans le moyen formant tête magnétique; et

un moyen de sélection (158) destiné à sélectionner soit le signal de luminance et les premier et deuxième signaux de différence de couleur du signal d'image du type normal, soit les premier et deuxième signaux de luminance et les premier et deuxième signaux de différence de couleur du signal d'image du type haute définition en conformité avec le mode de reproduction déterminé dans le moyen de détermination de mode de reproduction.

11. Procédé d'enregistrement de signaux d'image pour enregistrer un signal d'image du type normal et un signal d'image du type haute définition dans lequel le nombre de lignes de balayage est supérieur à celui du signal d'image du type normal, ce procédé comprenant les étapes consistant :

à comprimer temporellement une pluralité de signaux lignes de luminance d'un signal de luminance appartenant à un signal d'image du type normal sur chaque ligne de balayage, chacun des signaux lignes de luminance correspondant à une ligne de balayage;

à comprimer temporellement une pluralité de premiers signaux lignes de différence de couleur d'un premier signal de différence de couleur appartenant au signal d'image du type normal sur chaque ligne de balayage, chacun des premiers signaux lignes de différences de couleur correspondant à une ligne de balayage;

à comprimer temporellement une pluralité de deuxièmes signaux lignes de différence de couleur d'un deuxième signal de différence de couleur appartenant au signal d'image du type normal, chacun des deuxième signaux lignes de différence de couleur correspondant à une ligne de balayage;

à multiplexer par répartition dans le temps les signaux lignes de luminance comprimés temporellement, les premiers signaux lignes de différence de couleur comprimés temporellement et les deuxièmes signaux lignes comprimés temporellement sur chaque ligne de balayage pour produire un signal TCI appartenant au signal d'image du type normal;

à enregistrer le signal TCI appartenant à l'image normale sur un support d'enregistrement;

à supprimer soit un premier signal ligne de différence de couleur d'un premier signal de différence de couleur appartenant à un signal d'image du type haute définition, soit un deuxième signal ligne de différence de couleur d'un deuxième signal de différence de couleur appartenant au signal d'image du type haute définition sur chaque ligne de balayage pour produire une pluralité de premiers signaux lignes de différence de couleur amincis correspondant à des lignes de balayage de numéros pairs et une pluralité de deuxièmes signaux lignes de différence de couleur amincis correspondant à des lignes de balayage de numéros impairs à partir du premier signal de différence de couleur appartenant au signal d'image du type haute définition et du deuxième signal de différence de couleur appartenant au signal d'image du type haute définition, le premier signal de différence de couleur étant composé d'une pluralité de premier signaux lignes de différence de couleur qui correspondent chacun à une ligne de balayage, et le deuxième signal de différence de couleur, et le deuxième signal de différence de couleur étant composé d'une pluralité de deuxièmes signaux de différence de couleur qui correspondent chacun à une ligne de balayage;

à comprimer temporellement les premiers signaux lignes de différence de couleur amincis et les deuxièmes signaux lignes de différence de couleur amincis;

à comprimer temporellement une pluralité de signaux lignes de luminance d'un signal de luminance appartenant au signal d'image du type haute définition, chacun des signaux lignes de luminance correspondant à une ligne de balayage, et les signaux lignes de luminance étant classés en un premier groupe de signaux lignes de luminance correspondant aux lignes de balayage de numéros pairs et en un deuxième groupe de signaux lignes de luminance correspondant aux lignes de balayage de numéros impairs;

à multiplexer par répartition dans le temps le premier groupe de signaux lignes de luminance comprimés temporellement et les premiers signaux lignes de différence de couleur amincis comprimés temporellement pour produire un premier signal TCI appartenant au signal d'image du type haute définition correspondant aux lignes de balayage de numéros pairs;

à multiplexer par répartition dans le temps le deuxième groupe de signaux lignes de luminance comprimés temporellement et les deuxièmes signaux lignes de différence amincis pour produire un deuxième signal TCI appartenant au signal d'image du type haute définition correspondant aux lignes de balayage de numéros impairs; et

à enregistrer le premier signal TCI et le deuxième signal TCI sur le support d'enregistrement.

**12.** Procédé d'enregistrement de signaux d'image selon la revendication 11, dans lequel un premier rapport dans le degré de compression des premier ou deuxième signaux lignes de différence de couleur aux signaux lignes de luminance appartenant au signal d'image du type normal est plus grand qu'un deuxième rapport dans le degré de compression des premier ou deuxième signaux lignes de différence de couleur amincis aux signaux lignes de luminance appartenant au signal d'image du type haute définition.

## FIG. 1

FIG. 2(A)

Y1 Y2 Y3 Y4

FIG. 2(B)

PR 1 PR 2 PR 3 PR 4

FIG. 2(C)

PB 1 PB 2 PB 3 PB 4

FIG. 2(D)

PR 1 Y1 PR 3 Y3

FIG. 2(E)

PB 2 Y2 PB 4 Y4

P1 P2

1 : 3

A LINE PERIOD OF
HIGH - DEFINITION
PICTURE SIGNAL

FIG. 2(F)

Yaa 1 Yaa 2

FIG. 2(G)

PRaa 1 PRaa 2

FIG. 2(H)

PBaa 1 PBaa 2

FIG. 2(I)

PRaa 1 PBaa 1 PRaa 2 PBaa 2

Yaa 1 Yaa 2

P5

P3 P4

1 : 1 : 6

A LINE PERIOD OF
NORMAL PICTURE
SIGNAL

FIG. 3A

FIG. 3B

FIG. 3C

# FIG. 4

TO FIRST D/A CONVERTOR    TO SECOND D/A CONVERTOR

# FIG. 5A

Sr 1

Ta

$Ssw$ $Ssw$ $Scal$ $Sda$

1117 LINE  1119 LINE  43 LINE

$Sv$

(FROM 45-LINE TO 551-LINE)

Tb

$Sv$ $Sv$

553 LINE  555 LINE  557 LINE  $Ssw$  $Scal$  605 LINE  607 LINE

# FIG. 5B

Sr 2

Ta

$Ssw$ $Ssw$ $Scal$ $Sda$

1116 LINE  1118 LINE  42 LINE

$Sv$

(FROM 44-LINE TO 550-LINE)

Tb

$Sv$ $Sv$

552 LINE  554 LINE  556 LINE  $Ssw$  $Scal$  604 LINE  606 LINE

EP 0 630 161 B1

# FIG. 6

ROTATIONAL
DIRECTION OF
DRUM

114a

116

112b

113a

113b

112a

115

116b

114b

## FIG. 7

MT

← HEAD ROTATING DIRECTION

556(1/2)

557(1/2)

| | 554 | 552 | | 44 | 42 | Sda | Scal | Sv | Ssw | Ssw |
|---|-----|-----|---|----|----|-----|------|----|-----|-----|
| | 555 | 553 | | 45 | 43 | Sda | Scal | Sv | Ssw | Ssw |

FIRST AUDIO TRACK

TAPE TRAVELING DIRECTION

| 1118 | 1116 | | 606 | 604 | Scal | Sv | Sv | Ssw | |
|------|------|---|-----|-----|------|----|----|-----|---|
| 1119 | 1117 | | 607 | 605 | Scal | Sv | Sv | Ssw | |

556(1/2)

557(1/2)

SECOND AUDIO TRACK

## FIG. 8

← HEAD ROTATING DIRECTION

556(1/2)

| | 554 | 552 | | 44 | 42 | Sda | Scal | Sv | Ssw | Ssw |
|---|-----|-----|---|----|----|-----|------|----|-----|-----|

FIRST AUDIO TRACK

557(1/2)

| | 555 | 553 | | 45 | 43 | Sda | Scal | Sv | Ssw | Ssw |
|---|-----|-----|---|----|----|-----|------|----|-----|-----|
| 1118 | 1116 | | 606 | 604 | Scal | Sv | Sv | Ssw | |

TAPE TRAVELING DIRECTION

SECOND AUDIO TRACK

| 1119 | 1117 | | 607 | 605 | Scal | Sv | Sv | Ssw | |
|------|------|---|-----|-----|------|----|----|-----|---|

556(1/2)

557(1/2)

MT

# FIG. 9

104

121 DISTINGUISHING PORTION DETECTING MEANS

122 AUTOMATIC/MANUAL SELECTING MEANS

124 INPUT SIGNAL SELECTING MEANS

Sd1

Ss1

Ss2

Y

123 INPUT SIGNAL DETECTING MEANS

125 RECORDING SPEED SELECTING MEANS

Sd2

Ss3

126 RECORDING MODE DETERMINING MEANS

Srm

127 SERVO MEANS

Sc1

TO FIRST SELECTING MEANS

128 CONTROL MODULATION MEANS

TO RECORDING PROCESSING MEANS

Src Srm

129

MT

# FIG. 10

START

IS MAGNETIC TAPE A METAL TAPE ? — S11

NO → A FOURTH RECORDING MODE IS ADOPTED

YES ↓

IS AUTOMATIC DETERMINATION SELECTED ? — S12

NO →

IS THE RECORDING OF HD INPUT SIGNAL SELECTED ? — S14

YES ↓

IS HD INPUT SIGNAL SUPPLIED ? — S13

NO → (to YES branch)

YES ↓

A FIRST RECORDING MODE IS ADOPTED

IS A RECORDING SPEED SET TO A LOW RECORDING SPEED ? — S15

NO → A THIRD RECORDING MODE IS ADOPTED

YES → A SECOND RECORDING MODE IS ADOPTED

FIG. 11A <sub>CODE "0"</sub>

FIG. 11B <sub>CODE "1"</sub>

FIG. 12A

| CODE | STANDARD RECORDING SPEED | LOW RECORDING SPEED |
|------|--------------------------|---------------------|
| "0"  | FIRST RECORDING MODE     | SECOND RECORDING MODE |
| "1"  | THIRD RECORDING MODE     | |

FIG. 12B

| CODE | STANDARD RECORDING SPEED | LOW RECORDING SPEED |
|------|--------------------------|---------------------|
| "00" | FIRST RECORDING MODE     | SECOND RECORDING MODE |
| "10" | THIRD RECORDING MODE     | |
| "11" | FIFTH RECORDING MODE     | |

## FIG. 13

START

S11 — IS MAGNETIC TAPE A METAL TAPE ?

NO → A FOURTH RECORDING MODE IS ADOPTED

YES

S12 — IS AUTOMATIC DETERMINATION SELECTED ?

NO →

YES

S14 — IS THE RECORDING OF HD INPUT SIGNAL SELECTED ?

NO →

YES

S13 — IS HD INPUT SIGNAL SUPPLIED ?

NO →

YES

A FIRST RECORDING MODE IS ADOPTED

A SECOND RECORDING MODE IS ADOPTED

FIG. 14

EP 0 630 161 B1

FIG. 14

EP 0 630 161 B1

## FIG. 15

57

## FIG. 16

## FIG. 17

# FIG. 18

TO REPRODUCTION PROCESSING MEANS

TO FIRST AND SECOND SELECTING MEANS